(19) Europäisches Patentamt
European Patent Office
Office européen des brevets

(11) **EP 3 611 891 B1**

(12) **EUROPEAN PATENT SPECIFICATION**

(45) Date of publication and mention
of the grant of the patent:
**04.05.2022 Bulletin 2022/18**

(21) Application number: **18783726.5**

(22) Date of filing: **30.03.2018**

(51) International Patent Classification (IPC):
*H04L 27/22* (2006.01)    *H04B 1/10* (2006.01)
*H04L 27/26* (2006.01)    *H04L 27/00* (2006.01)
*H04L 27/227* (2006.01)

(52) Cooperative Patent Classification (CPC):
**H04B 1/10; H04L 27/0014; H04L 27/2271;
H04L 27/26**

(86) International application number:
**PCT/JP2018/013626**

(87) International publication number:
**WO 2018/190149 (18.10.2018 Gazette 2018/42)**

(54) **SIGNAL PROCESSING DEVICE AND METHOD**

SIGNALVERARBEITUNGSVORRICHTUNG UND -VERFAHREN

DISPOSITIF ET PROCÉDÉ DE TRAITEMENT DE SIGNAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.04.2017 JP 2017078666**

(43) Date of publication of application:
**19.02.2020 Bulletin 2020/08**

(73) Proprietor: **Sony Semiconductor Solutions
Corporation
Atsugi-shi, Kanagawa 243-0014 (JP)**

(72) Inventor: **KOBAYASHI Seiji
Atsugi-shi
Kanagawa 243-0014 (JP)**

(74) Representative: **Witte, Weller & Partner
Patentanwälte mbB
Postfach 10 54 62
70047 Stuttgart (DE)**

(56) References cited:
**EP-A1- 2 234 277        JP-A- H 098 759
JP-A- H0 779 265        JP-A- 2002 290 373
JP-A- 2014 176 014      JP-A- 2016 046 618
US-A1- 2006 274 820**

## Description

### TECHNICAL FIELD

The present technology relates to signal processing apparatus and method, and particularly, to signal processing apparatus and method that can reduce deterioration in reception sensitivity.

### BACKGROUND ART

Conventionally, in order for a receiver of a wireless signal to deal with frequency deviation and phase shift of a received signal, there has been a method of correcting the phase of the received signal by controlling, on the receiving side, the oscillation frequency of a variable frequency oscillator by a phase locked loop (PLL) (see Patent Documents 1 and 2, for example).

In US 2006/0274820 A1 techniques for detecting and demodulating a signal/transmission are described. Signal detection is performed in multiple stages using different types of signal processing, e.g., using time-domain correlation for a first stage, frequency-domain processing for a second stage, and time-domain processing for a third stage. For the first stage, products of symbols are generated for at least two different delays, correlation between the products for each delay and known values is performed, and correlation results for all delays are combined and used to declare the presence of a signal. For demodulation, the timing of input samples is adjusted to obtain timing-adjusted samples. A frequency offset is estimated and removed from the timing-adjusted samples to obtain frequency-corrected samples, which are processed with a channel estimate to obtain detected symbols. The phases of the detected symbols are corrected to obtain phase corrected symbols, which are demodulated, deinterleaved, and decoded.

EP 2 234 277 A1 relates to a phase noise correction circuit, a transmitter, a receiver, a radio device, a radio communication system, and a phase noise correction method and, more particularly, to a reduction in phase noise generated when frequency conversion between a radio frequency and an intermediate frequency is carried out in radio communication.

### CITATION LIST

### PATENT DOCUMENT

Patent Document 1: Japanese Patent Application Publication No. 2006-522573
Patent Document 2: Japanese Patent Application Laid-Open No. 2006-333010

### SUMMARY OF THE INVENTION

### PROBLEMS TO BE SOLVED BY THE INVENTION

However, it has been difficult to apply this method to a receiver intended for a low SNR signal that is required to improve an SNR by integrating received signals. In the case of such a receiver, it is difficult to detect the phase correctly because the SNR is low before integration. Accordingly, a phase error signal detected before integration contains a large error so that the PLL does not operate properly. In order to operate the PLL properly and correct the phase of the received signal, it is necessary to also integrate the phase error signal to improve the SNR and input the result to the PLL. However, if the correct phase cannot be obtained in the first place, the received signal cannot be integrated properly. Due to such a paradox, in the case where the receiver is intended for the low SNR signal, the conventional PLL cannot correct the phase properly and has had difficulty in improving the reception sensitivity.

The present disclosure has been made in view of such a situation, and enables high sensitivity detection by performing phase detection properly even for a received signal with a low SNR.

### SOLUTIONS TO PROBLEMS

The object of the invention is achieved by the subject-matter of the independent claims. The dependent claims describe advantageous embodiments. The scope of protection of the invention is solely limited by the appended claims.

A signal processing apparatus according to one aspect of the present technology is defined in claim 1.

The correction unit can correct a phase of the received signal.

The correction unit can correct an amplitude of the received signal.

The correction unit can correct the received signal using channel information obtained by performing inverse Fourier transform on the plurality of frequency samples being the significant components.

The correction unit can correct the received signal using channel information obtained by combining an oscillation signal with frequency and amplitude of each of the plurality of frequency samples being the significant components.

The correction unit can correct the received signal using channel information obtained from a peak sample that is a frequency sample with an amplitude larger than that of surroundings and a neighboring sample that is a frequency sample around the peak sample.

The neighboring sample can be a frequency sample on each of both sides of the peak sample.

The correction unit can correct the received signal using channel information obtained from a plurality of the peak samples and the neighboring sample for each of the peak samples.

The correction unit can correct the received signal using channel information obtained from a predetermined number of the peak samples selected in descending order of amplitude, and the neighboring sample for each of the peak samples.

There can be further included a plurality of the correction units and a combining unit that combines correction results of the correction units, in which the correction units can be configured to correct the received signal using peak samples different from one another and a neighboring sample for the peak samples.

The received signal can have the known information regularly inserted between unknown information.

The received signal can have a configuration in which a frame of a predetermined length is repeated with data in units of symbols being arranged in each frame.

The received signal can have a symbol of a synchronization signal, which is known, inserted between symbols of the data that is unknown in each frame.

The received signal can have a configuration in which one symbol of the data that is unknown and one symbol of the synchronization signal that is known are alternately arranged.

The received signal can have a configuration in which two symbols of the data that is unknown and one symbol of the synchronization signal that is known are alternately arranged.

A guard bit including an unnecessary symbol can be attached at both ends of each frame of the received signal.

There can be further included: a separation unit that separates a symbol of data being unknown and a symbol of a synchronization signal being known that are included in the received signal; a generation unit that generates channel information from the symbol of the synchronization signal being known that is separated from the data being unknown by the separation unit; a transform unit that transforms the channel information generated by the generation unit into frequency samples; an extraction unit that extracts a plurality of frequency samples as significant components from the frequency samples transformed by the transform unit; and an inverse transform unit that inversely transforms the plurality of frequency samples as the significant components extracted by the extraction unit into channel information.

There can be further included a frame synchronization unit that achieves synchronization in units of frames of the received signal using the frequency samples transformed by the transform unit.

There can be further included an integration unit that integrates the received signal corrected by the correction unit.

A signal processing method according to one aspect of the present technology is defined in claim 14.

Signal processing apparatus and method according to one aspect of the present technology correct a received signal using channel information obtained from a plurality of frequency samples being significant components that are extracted from frequency samples of known information included in the received signal.

EFFECTS OF THE INVENTION

According to the present technology, signals can be processed. Moreover, according to the present technology, deterioration in reception sensitivity can be reduced.

BRIEF DESCRIPTION OF DRAWINGS

Fig. 1 is a diagram for explaining an example of phase correction.
Fig. 2 is a diagram for explaining an example of the phase correction.
Fig. 3 is a diagram for explaining an example of a format of a received signal.
Fig. 4 is a diagram for explaining an example of a state of reception.
Fig. 5 is a diagram for explaining an example of a state of reception.
Fig. 6 is a diagram for explaining required accuracy of phase correction.
Fig. 7 is a diagram for explaining an example of a factor of a frequency deviation.

Fig. 8 is a diagram for explaining an example of a state of reception.

Fig. 9 is a diagram for explaining an example of a state of reception.

Fig. 10 is a diagram for explaining an example of a state of reception.

Fig. 11 is a diagram for explaining an example of a case where phase synchronization is achieved.

Fig. 12 is a diagram for explaining an example of a case where phase synchronization is not achieved.

Fig. 13 is a diagram for explaining an example of correction accuracy.

Fig. 14 is a diagram for explaining an example of a state of phase correction.

Fig. 15 is a diagram for explaining an example of a state of phase correction.

Fig. 16 is a diagram for explaining an example of a state of phase correction.

Fig. 17 is a diagram for explaining an example of a state of phase correction.

Fig. 18 is a diagram for explaining an example of a state of phase correction.

Fig. 19 is a diagram illustrating an example of the main configuration of a location notification system.

Fig. 20 is a block diagram illustrating an example of the main configuration of a transmission device.

Fig. 21 is a diagram for explaining an example of a signal format.

Fig. 22 is a diagram for explaining an encryption block.

Fig. 23 is a flowchart for explaining an example of the flow of transmission processing.

Fig. 24 is a block diagram illustrating an example of the main configuration of a high sensitivity reception device.

Fig. 25 is a block diagram illustrating an example of the main configuration of a signal processing unit.

Fig. 26 is a block diagram illustrating an example of the main configuration of a separation unit.

Fig. 27 is a block diagram illustrating an example of the main configuration of a frequency sample generation unit.

Fig. 28 is a graph illustrating an example of a frequency distribution.

Fig. 29 is a block diagram illustrating an example of the main configuration of a significant component extraction unit.

Fig. 30 is a block diagram illustrating an example of the main configuration of an inverse transform unit.

Fig. 31 is a block diagram illustrating an example of the main configuration of a correction unit.

Fig. 32 is a flowchart for explaining an example of the flow of reception processing.

Fig. 33 is a flowchart for explaining an example of the flow of decoding processing.

Fig. 34 is a flowchart for explaining an example of the flow of frequency sample generation processing.

Fig. 35 is a flowchart for explaining an example of the flow of significant component extraction processing.

Fig. 36 is a flowchart for explaining an example of the flow of correction processing.

Fig. 37 is a diagram illustrating an example of multipath.

Fig. 38 is a diagram illustrating an example of an envelope and a constellation.

Fig. 39 is a graph illustrating an example of a frequency distribution.

Fig. 40 is a block diagram illustrating an example of the main configuration of the significant component extraction unit.

Fig. 41 is a block diagram illustrating an example of the main configuration of the inverse transform unit.

Fig. 42 is a block diagram illustrating an example of the main configuration of the inverse transform unit.

Fig. 43 is a graph illustrating an example of a phase correction signal.

Fig. 44 is a graph illustrating an example of an amplitude correction signal.

Fig. 45 is a diagram illustrating an example of the constellation.

Fig. 46 is a flowchart for explaining an example of the flow of the significant component extraction processing.

Fig. 47 is a block diagram illustrating an example of the main configuration of the signal processing unit.

Fig. 48 is a diagram illustrating an example of the signal format.

Fig. 49 is a diagram illustrating an example of the main configuration of an anti-theft system.

Fig. 50 is a block diagram illustrating an example of the main configuration of a computer.

MODES FOR CARRYING OUT THE INVENTION

Modes for carrying out the present disclosure (hereinafter referred to as embodiments) will be described below. Note that the description will be made in the following order.

1. Phase correction
2. First embodiment (location notification system)
3. Second embodiment (measures against multipath)
4. Third embodiment (signal format)
5. Other

<1. Phase correction>

<General phase correction method>

Conventionally, as described in Patent Documents 1 and 2, for example, in order for an orthogonal frequency division multiplexing (OFDM) system or the like to reduce deterioration in reception sensitivity due to a frequency deviation of a received signal, there has been a method of correcting the phase of the received signal by controlling, on a receiving side, an oscillation frequency of a variable frequency oscillator by a phase locked loop (PLL).

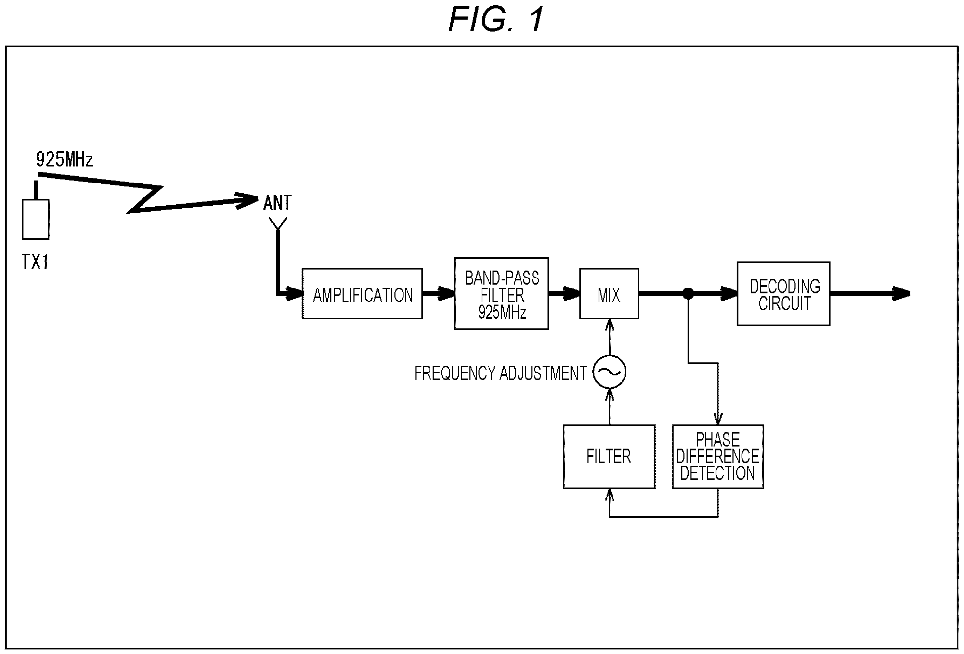

That is, as in an example illustrated in Fig. 1, a receiver detects a phase shift in a received signal and feeds back the phase difference to correct the phase of the received signal. As a result, the frequency deviation of the received signal is corrected, and deterioration in the reception sensitivity due to the frequency deviation is reduced.

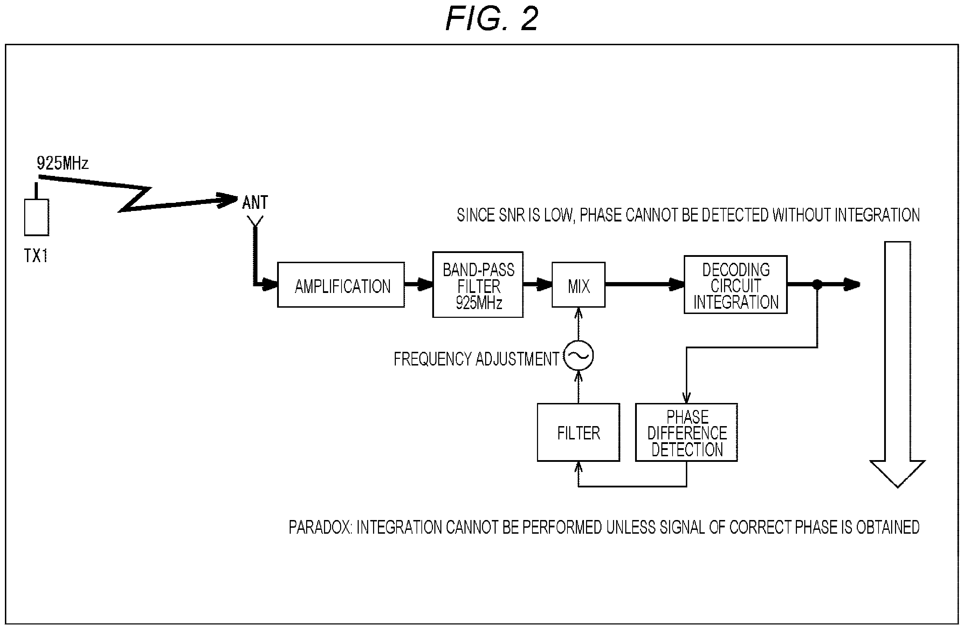

However, it has been difficult to apply this method to a receiver that improves an SNR by integrating received signals. In the case of such a receiver, it is difficult to detect the phase correctly before integration, so that it is difficult to perform phase correction properly by feeding back a value before integration. Therefore, it is necessary to feed back a value after integration as in an example illustrated in Fig. 2 in order to perform the phase correction on the received signal by the above method, but the received signal cannot be integrated properly if a correct phase is not be obtained. That is, the phase correction cannot be performed properly by feeding back a signal not properly integrated, whereby it has been difficult to reduce deterioration in the reception sensitivity due to the frequency deviation.

<Signal reception and phase correction by high sensitivity receiver>

The details will be described below. For example, JP 2016-46618 A discloses a system for transmitting information regarding a sensor or the like by using, for example, radio waves in the 920 Mz band as a technology for implementing long-range wireless communication.

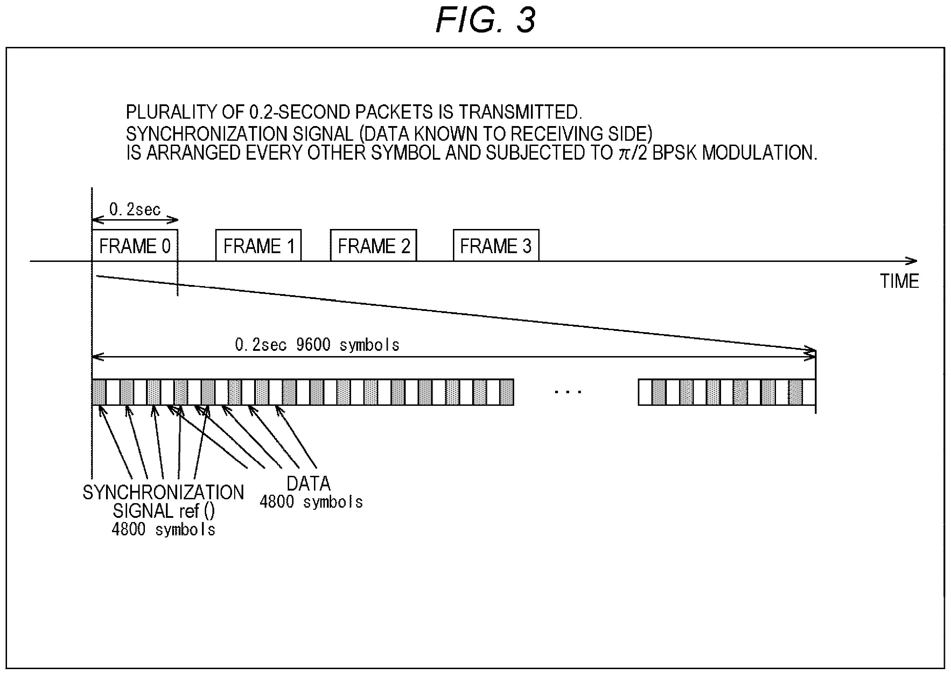

In this system, a transmit signal is transmitted in frames of approximately 0.2 seconds, as illustrated in Fig. 3. The same frame can be repeatedly transmitted a plurality of times as well. One frame includes data of approximately 9600 symbols. One frame includes data of information to be transmitted (information unknown to a receiving side) and a synchronization signal (information known to the receiving side). In the case of an example in Fig. 3, one frame includes 4800 symbols of the data and 4800 symbols of the synchronization signal. Also in one frame, the symbol of the data and the symbol of the synchronization signal are alternately transmitted. Such a transmit signal is modulated by, for example, $\pi/2$ shift binary phase shift keying (BPSK) and transmitted.

The use of this system can set the maximum continuous transmission time to be short and perform transmission by selecting a channel from a large number of frequency channels, so that a transmission/reception system that is stronger against interference can be built. Furthermore, by integrating many short-time frames, an effective SNR can be improved without exceeding the limit of the maximum transmission time defined in the Radio Law. At this time, the synchronization signals are distributed throughout the frame so that the phase and frequency can be corrected more appropriately even in a case where a phase fluctuation occurs in the frame. As a result of these, for example, even a weak received signal that is buried in noise and difficult to decode by a conventional method can be decoded more properly. That is, the reception sensitivity is improved so that longer-range wireless communication can be implemented.

A high sensitivity receiver receiving such a transmit signal can improve data reception sensitivity by detecting a known synchronization signal. In order to improve the reception sensitivity, the high sensitivity receiver synchronizes frames, symbols, and carriers, for example. The frames are synchronized in about 0.2 seconds. The symbols are synchronized in about 20 micro ($\mu$) seconds. The carriers are synchronized in about 1 nano (n) second. Thus, the carrier synchronization requires the highest accuracy.

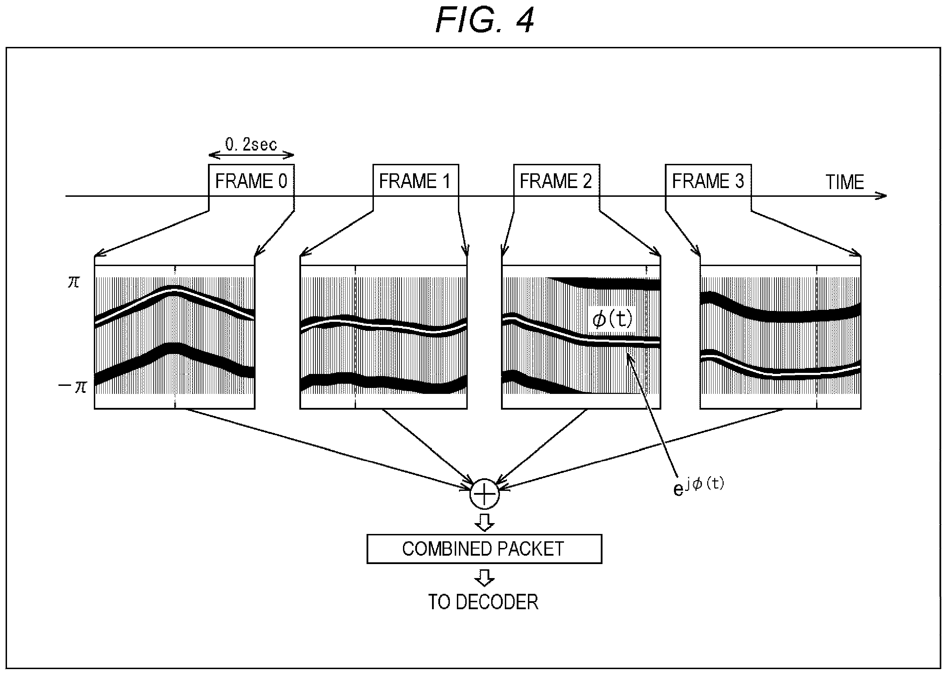

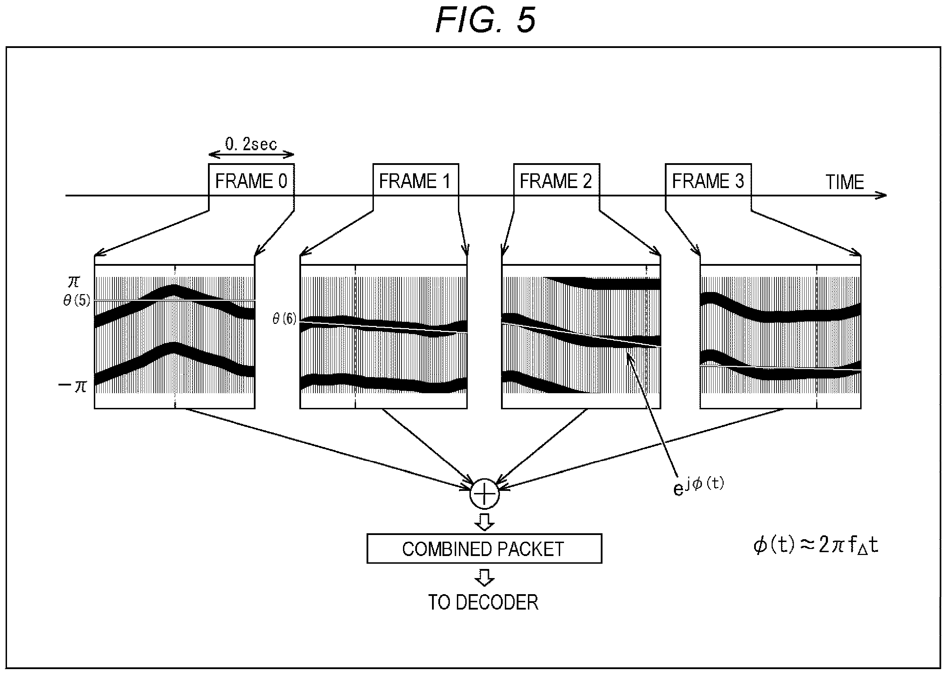

In a case where a signal to noise ratio (SNR) of a received signal is good, the high sensitivity receiver can detect a phase change $\varphi(t)$ of each frame as illustrated in Fig. 4. If the phase change $\varphi(t)$ can be detected, the received signal can be corrected with $e^{j\varphi(t)}$ and then combined and decoded. However, in a case where the SNR is low, the received signal is buried in noise so that the phase change $\varphi(t)$ cannot be observed. A possible configuration of the high sensitivity receiver capable of dealing with such a low SNR is to detect a frequency deviation $f_\Delta$. If the frequency deviation $f_\Delta$ can be estimated by a method such as correlation detection, the received signal in each frame can be corrected with a phase line of $2\pi f_\Delta t$ as illustrated in Fig. 5. This method approximates the phase change $\varphi(t)$ by a straight line and thus results in a phase error, thereby having had a disadvantage that high sensitivity to be obtained originally is impaired.

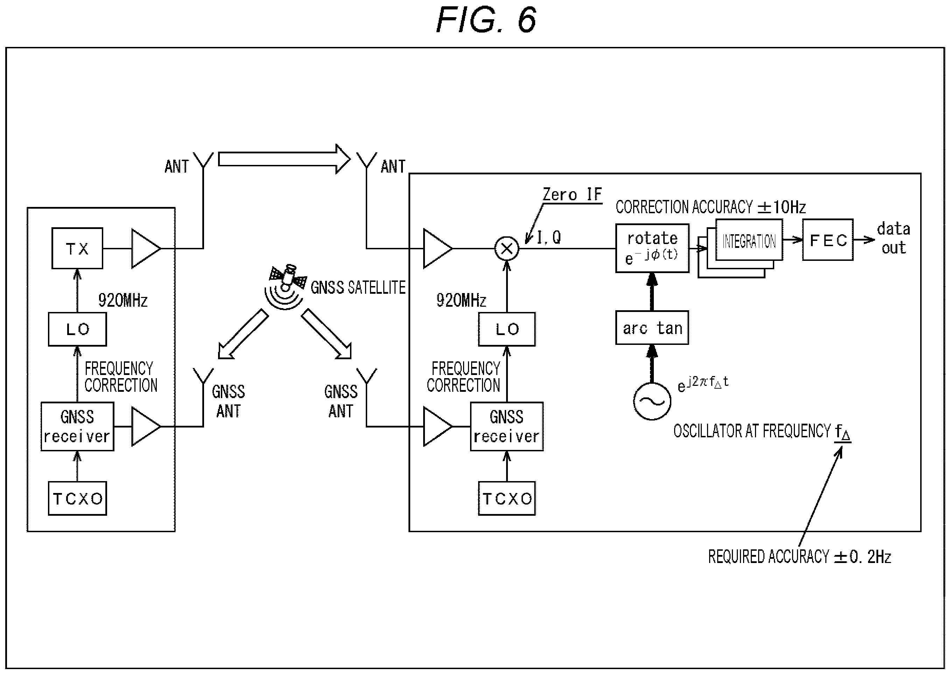

In order to perform such phase correction more properly, the high sensitivity receiver uses a global navigation satellite system (GNSS) signal transmitted from a GNSS satellite as illustrated in Fig. 6. The GNSS is a system for acquiring location and time information using wireless signals obtained from satellites around the Earth, and is launched by the United States, Russia, China, Europe, and the like and generally called a global positioning system (GPS) in some cases. The GNSS satellite has a cesium oscillator with high accuracy, and can obtain time information more accurately than an oscillator usually built in a receiver or the like. By correcting the carrier frequency using such time information, the center of the transmit frequency and the received frequency can be corrected with an accuracy of about $\pm$ 10 Hz.

However, in a case where the phase correction is performed as illustrated in Fig. 5, an oscillation signal of frequency $f_\Delta$ is required, where the required accuracy of this frequency $f_\Delta$ is about $\pm$ 0.2 Hz. The correction has not been able to be performed with sufficiently high accuracy with the use of the GNSS signal.

Furthermore, the frequency deviation of the received signal occurs due to various factors. For example, in a case where a transmitter is mounted on an object moving at high speed such as a vehicle, there is a possibility that a frequency shift (Doppler shift) occurs in a signal observed at a reception point. In a case where the transmitter moves relative to a receiver at a relative speed of about 100 kilometers per hour, for example, a frequency shift of about 86 Hz possibly occurs in a transmit signal transmitted from the transmitter. This Doppler shift is determined by the relative speed of movement of the transmitter as viewed from the receiver and thus takes a different value depending on the direction of movement of the transmitter. As described above, although the frequency correction can be performed using the GNSS signal, the accuracy of such correction is limited and cannot achieve the required accuracy of about $\pm$ 0.2 Hz.

Therefore, the receiver is required to perform the phase correction of the received signal with higher accuracy. Especially in the case of the communication system as described above, the system is characterized by high sensitivity detection in a low SNR environment and is largely affected by deterioration in the reception sensitivity due to the frequency deviation, so that more accurate phase correction is required.

<$f_\Delta$ estimation>

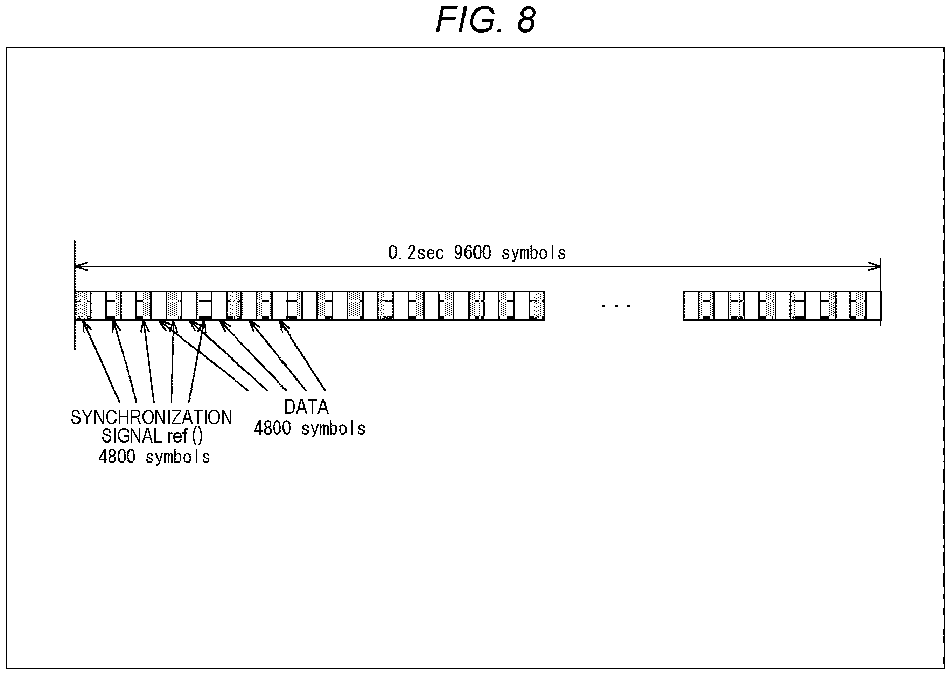

Here, the accuracy required to correct the aforementioned frequency $f_\Delta$ can be estimated from a transmission format. As described above, the transmit data is transmitted in frames of about 0.2 seconds. Each frame includes 9600 symbols of information where, for example, each of 4800 symbols of data (information unknown to the receiving side) and each of 4800 symbols of the synchronization signal (information known to the receiving side) are alternately arranged as illustrated in Fig. 8.

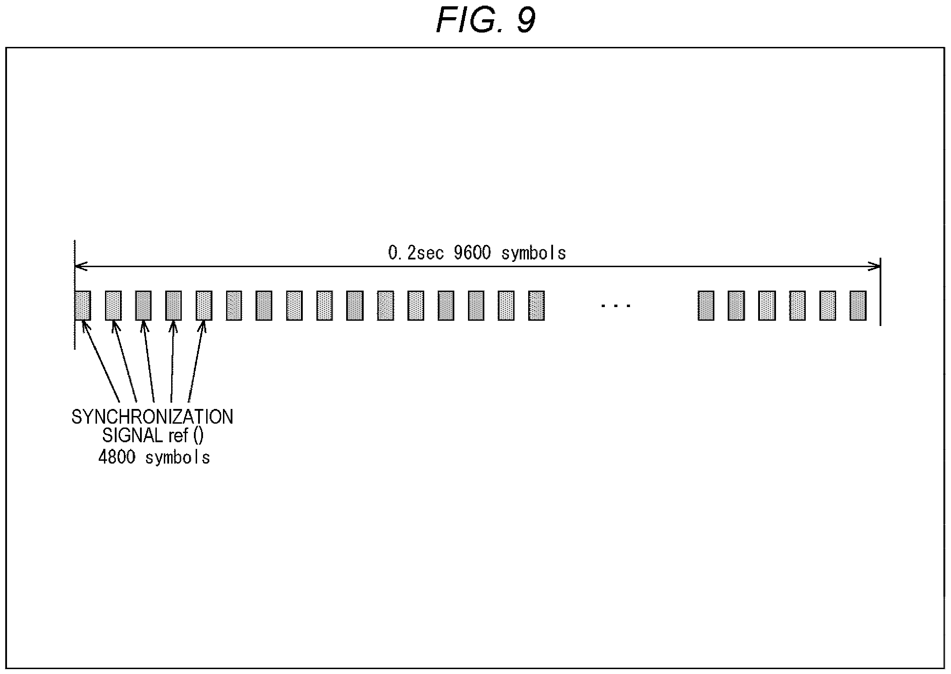

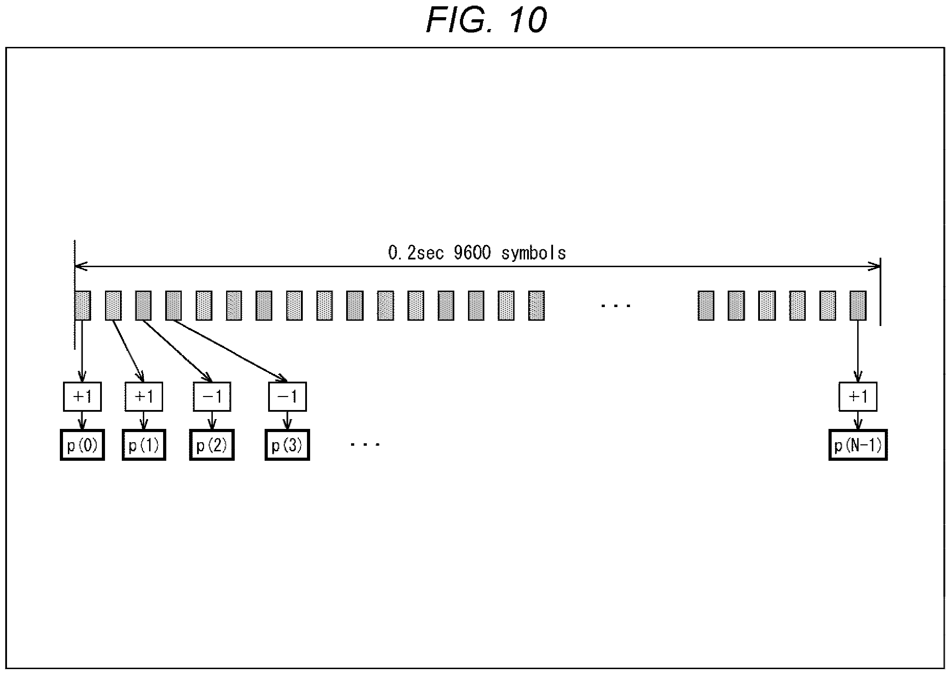

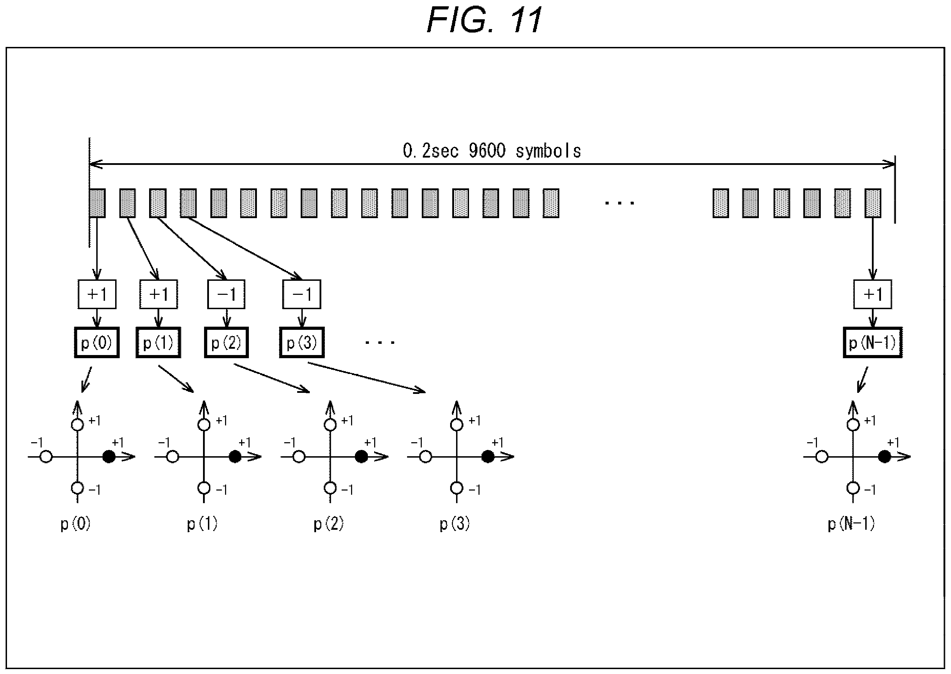

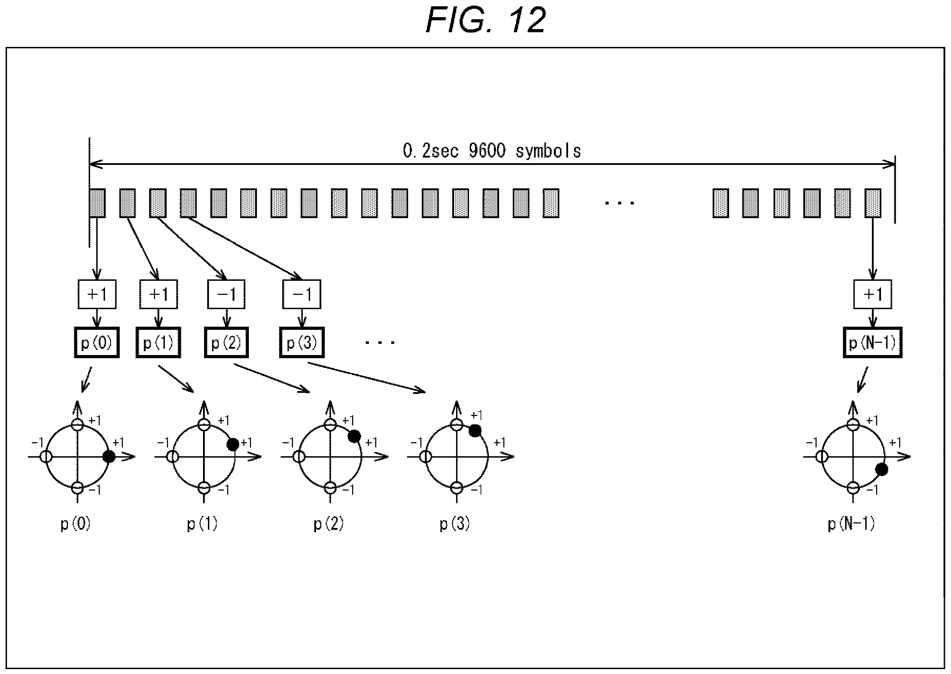

Upon receiving such a signal, the high sensitivity receiver extracts the synchronization signals from the received signal (IQ signal) as illustrated in Fig. 9. Then, as illustrated in Fig. 10, the high sensitivity receiver multiplies the synchronization signals by known data (+1 or -1) and generates channel information samples (p (k) ($0 \leq k \leq (N - 1)$)). In a case where synchronization is achieved, the channel information samples (p (k)) are all +1 (at one point on a real axis) as illustrated in Fig. 11 (a value to give such a result is multiplied). However, if the received signal has a frequency deviation, the channel information samples (p (k)) are not all +1 (on the real axis), but the phase rotates with time as illustrated in Fig. 12.

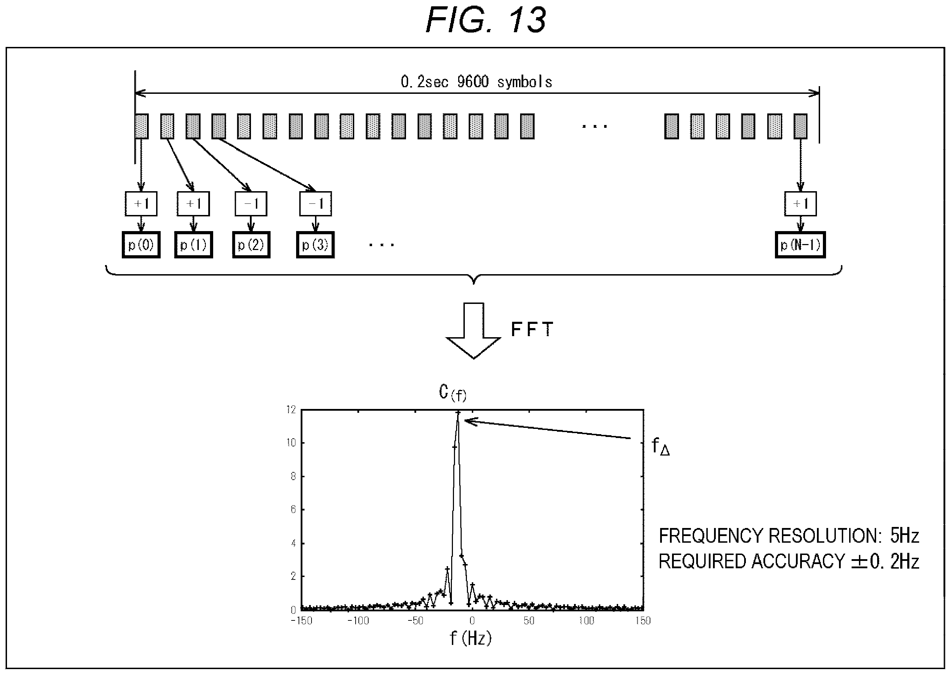

As illustrated in Fig. 13, the high sensitivity receiver performs a Fourier transform on the channel information samples (p (k)) to find frequency components and obtains a frequency distribution C (f) as in a graph at the bottom of Fig. 13. In the case of this graph, the signal components are concentrated at a specific frequency. That is, the frequency of the signal is shifted by the frequency at which the maximum spectrum is obtained on this graph. Therefore, the frequency deviation can be reduced by performing the phase correction with $f_\Delta$ being the frequency at which the maximum spectrum is obtained.

As described above, in order to reduce the frequency deviation with sufficient accuracy, the frequency ($f_\Delta$) at which the maximum spectrum is obtained needs to be identified with the accuracy of about $\pm$0.2 Hz. However, when the channel information samples (p (k)) extracted from the 0.2 second frame are subjected to the Fourier transform, the frequency resolution is 5 Hz. That is, there has been a problem that the accuracy is not sufficient to correct the frequency deviation.

<Phase correction using a plurality of frequency samples>

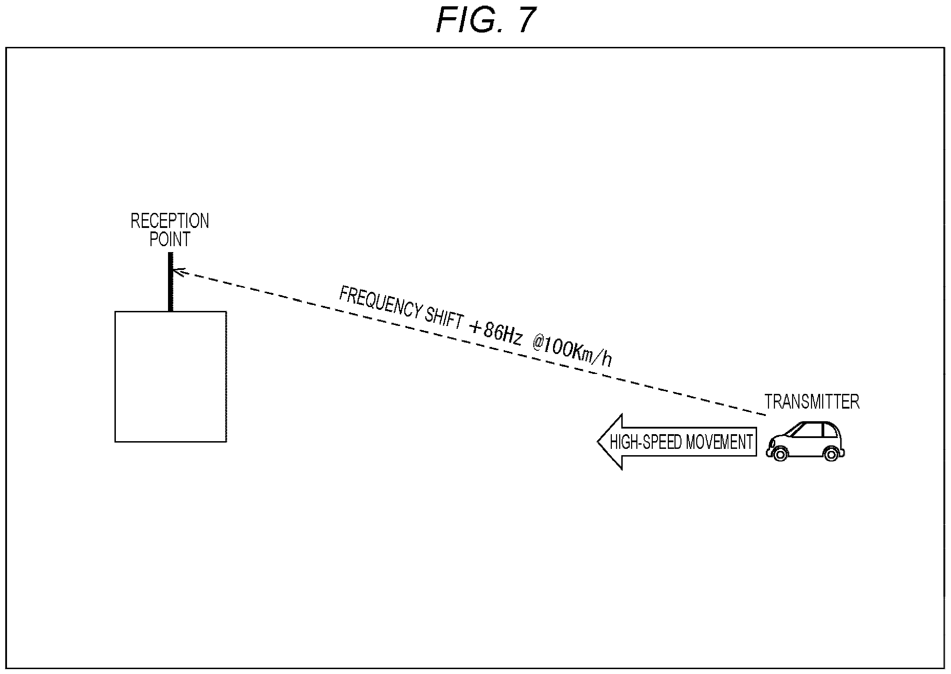

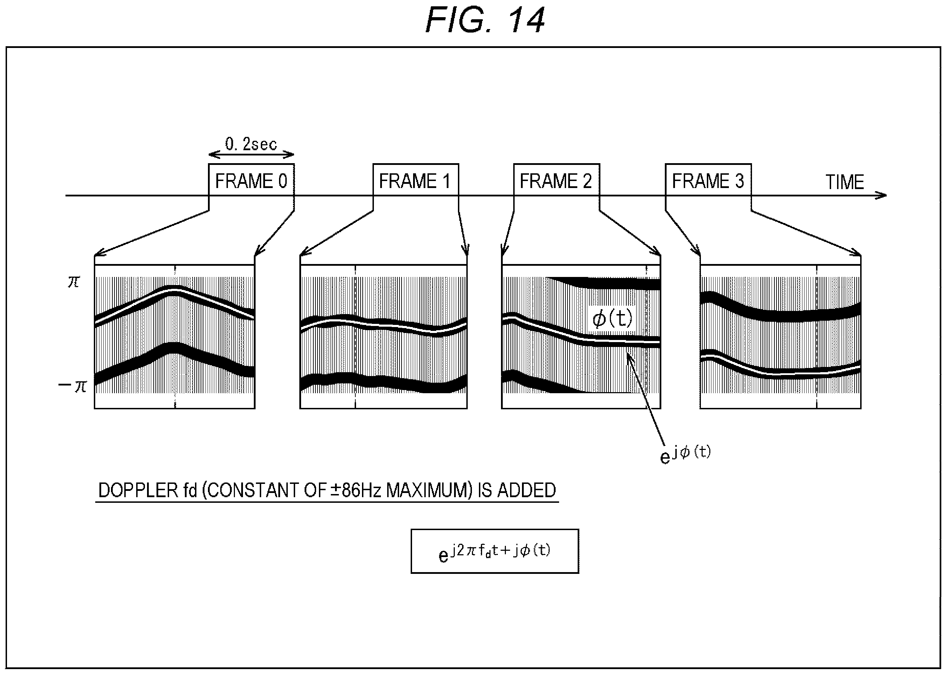

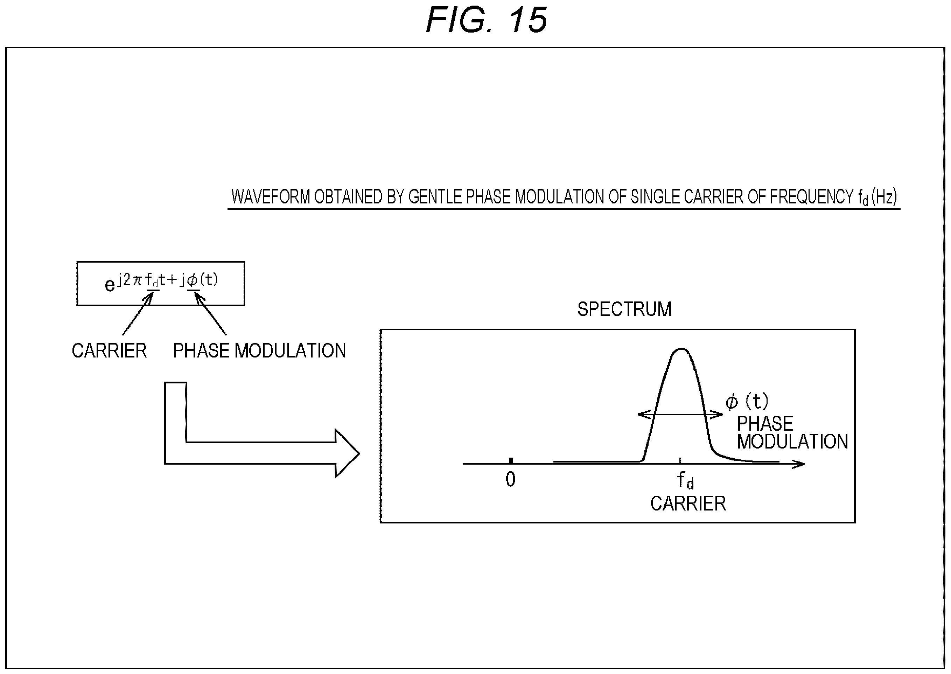

In a case where the frequency deviation occurs in the received signal, one can assume that the phase $\varphi$ (t) of the signal in each frame changes in a relatively gentle curve as illustrated in Fig. 14. Assuming that the Doppler shift (fd: a constant of $\pm$86 Hz at the maximum) as described with reference to Fig. 7 is added to this, the received signal can be expressed as $e^{j2\pi fdt + j\varphi (t)}$. That is, the received signal $e^{j2\pi fdt + j\varphi (t)}$ can be regarded as having a waveform obtained by gently modulating the phase of a single carrier of the frequency fd (Hz) by $\varphi$ (t). Therefore, when the frequency distribution of the received signal $e^{j2\pi fdt + j\varphi (t)}$ is determined, a hill-shaped spectrum distribution centered on the frequency fd and having a spread corresponding to $\varphi$ (t) is obtained, as illustrated in Fig. 15.

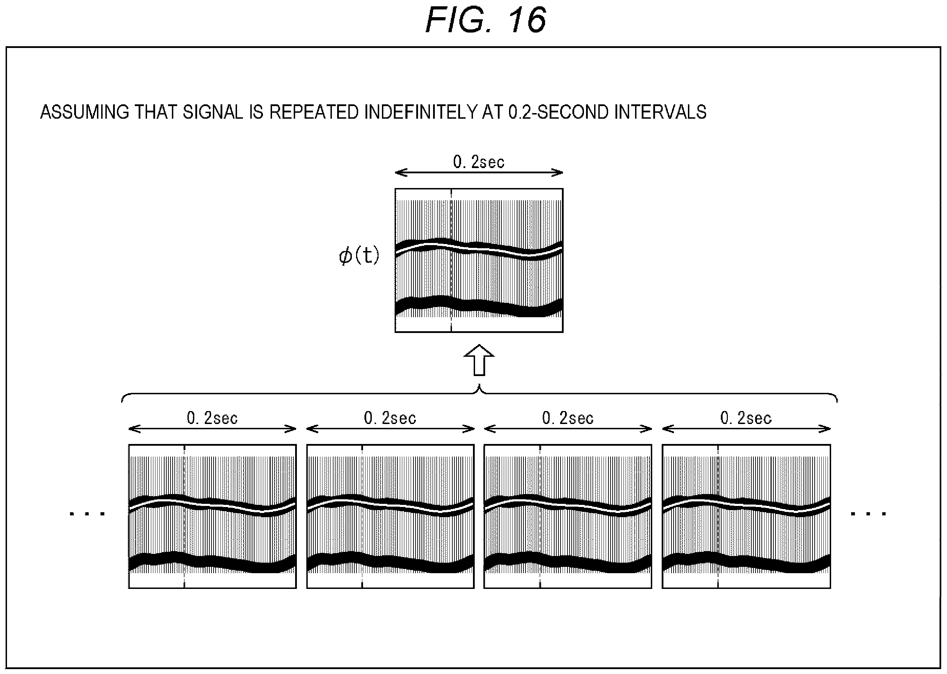

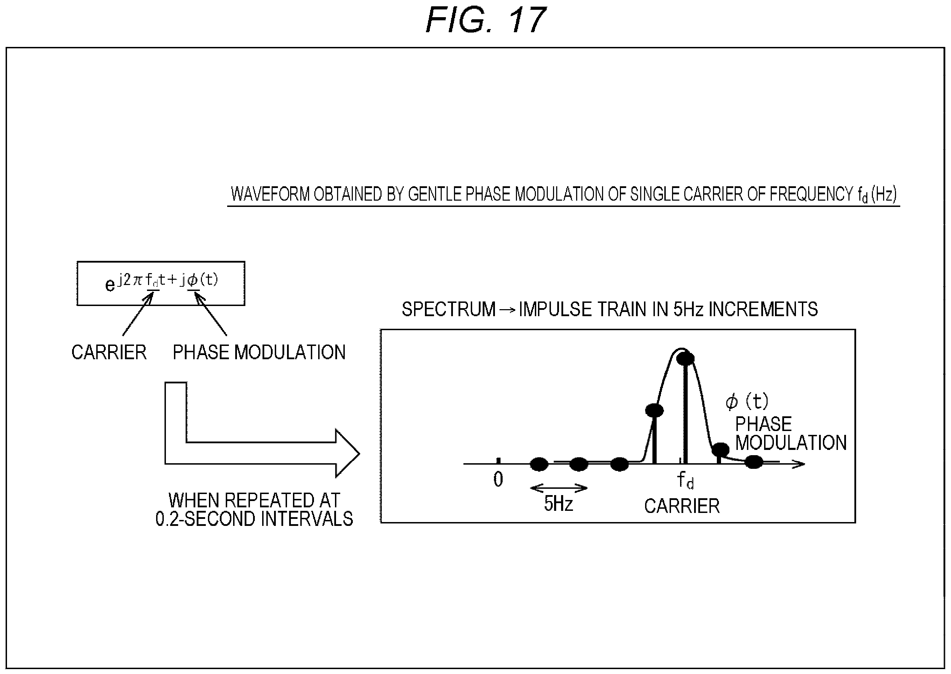

Note that the Fourier transform (fast Fourier transform (FFT)) can be performed on a frame-by-frame basis assuming that the received signal for one frame is repeated indefinitely as illustrated in Fig. 16. When the FFT is performed in such a way, the aforementioned frequency distribution is obtained as an impulse train in 5 Hz increments as illustrated in Fig. 17.

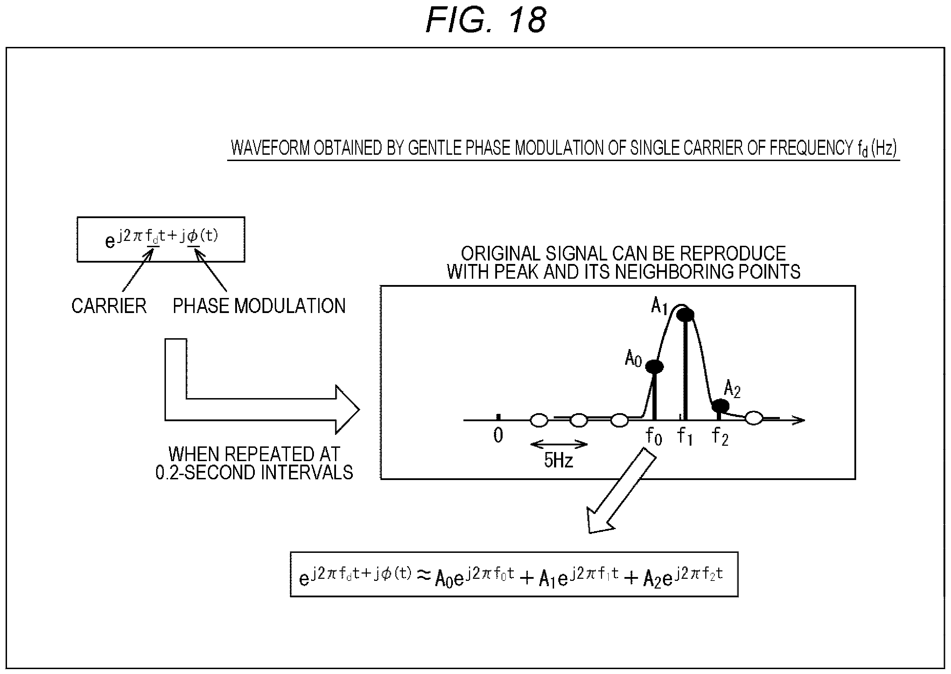

In a method of selecting one from such an impulse train as in a related art, it is difficult to grasp the peak frequency with sufficient accuracy (error of ±0.2 Hz) as described above. However, as illustrated in Fig. 18, the spectrum distribution (hill-shaped distribution) of the received signal can be more accurately reproduced by the spectra of the peak and its neighboring points. For example, assuming that the peak spectrum has the frequency of $f_1$ and the amplitude of $A_1$, and spectra on both sides of the peak have the frequencies of $f_0$ and $f_2$ and the amplitudes of $A_0$ and $A_2$, then the received signal $e^{j2\pi fdt + j\varphi(t)}$ can be expressed as in expression (1) below.

$$e^{j2\pi f_d t + j\varphi(t)} \cong A_0 e^{j2\pi f_0 t} + A_1 e^{j2\pi f_1 t} + A_2 e^{j2\pi f_2 t}$$

$$\cdots \quad (1)$$

Here, $A_0$, $A_1$, and $A_2$ are complex amplitudes typically represented by complex numbers. That is, the phase correction can be performed with high accuracy by performing the phase correction using a plurality of frequency samples. Therefore, deterioration in the reception sensitivity due to the frequency deviation can be reduced. Note that although omitted in expression (1), a result of combining the complex amplitudes $A_0$, $A_1$, and $A_2$ of the three different frequencies also represents a gentle amplitude fluctuation. The use of this amplitude fluctuation can correct not only the phase but also the amplitude fluctuation. As a result, more accurate correction can be performed to be able to reduce deterioration in the reception sensitivity.

<2. First embodiment>

<Location notification system>

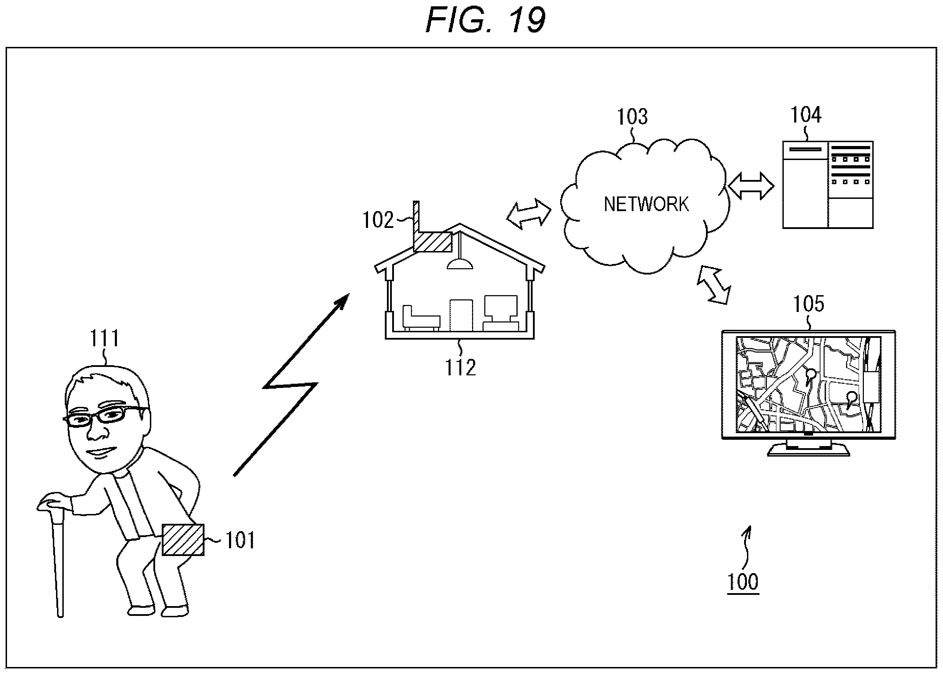

Next, a system to which the present technology is applied will be described. Fig. 19 is a diagram illustrating an example of the main configuration of a location notification system which is an embodiment of a signal transmission/reception system to which the present technology is applied. A location notification system 100 illustrated in Fig. 19 is a system in which a transmission device 101 notifies its own location. This system is used, for example, for monitoring and managing the location of a target. As illustrated in Fig. 19, the location notification system 100 includes devices such as the transmission device 101, a high sensitivity reception device 102, a server 104, and a terminal device 105. The number of each of the transmission devices 101, the high sensitivity reception devices 102, the servers 104, and the terminal devices 105 is arbitrary, and may be plural.

The transmission device 101 is an embodiment of a transmission device to which the present technology is applied and transmits, for example, identification information for identifying itself, location information indicating its own location, and the like as a wireless signal. The high sensitivity reception device 102 is an embodiment of a reception device to which the present technology is applied and receives the wireless signal to acquire the identification information, the location information, and the like of the transmission device 101 and supply them to the server 104 via a network 103. That is, the high sensitivity reception device 102 functions as a relay station that relays the information transmitted from the transmission device 101 and transmits the information to the server 104. The server 104 manages the location of each transmission device 101 by managing the identification information in association with the location information. The terminal device 105 operated by a user who wants to know the location of the transmission device 101 accesses the server 104 via the network 103, supplies identification information of a desired transmission device 101, and requests location information thereof. The server 104 supplies the terminal device 105 with the requested location information corresponding to the identification information. The terminal device 105 acquires the location information and displays the location information along with map data or the like, for example, thereby notifying the user of the location of the transmission device 101.

The server 104 can indirectly manage the location of a target whose location is to be monitored (managed) by causing the location monitoring (management) target to carry (including possessing, wearing, and the like) such transmission device 101. In the example of Fig. 19, the user has an elderly person 111 as the target whose location is to be monitored and causes the elderly person 111 to carry the transmission device 101. As described above, the location of the transmission device 101 is managed by the server 104 and provided to the terminal device 105. The user can thus operate the terminal device 105 and grasp the location of the elderly person 111 carrying the transmission device 101.

Note that the target whose location is to be monitored is arbitrary. For example, the target may be a child, an animal such as a dog or a cat, or an employee or the like of a company. The transmission device 101 may be configured as a dedicated device or may be incorporated into a portable information processing apparatus such as a mobile phone or a smart phone, for example.

The location information of the transmission device 101 may be any information indicating the location of the transmission device 101, and may be generated in any manner. For example, the transmission device 101 may receive a global navigation satellite system (GNSS) signal from a GNSS satellite and obtain its own location information (for example, latitude and longitude) on the basis of the GNSS signal. Alternatively, for example, the transmission device 101 may identify its own location using a dedicated location identification system other than the GNSS. Moreover, the location information may be generated in a device other than the transmission device 101 such as the high sensitivity reception device 102, the server 104, or a dedicated information processing apparatus (server or the like) provided separately, for example.

For example, the GNSS signal received by the transmission device 101 may be supplied to another device, and the other device may obtain the location information of the transmission device 101 from the GNSS signal. Alternatively, for example, the transmission device 101 may supply information obtained using a dedicated location identification system other than the GNSS to another device, and the other device may obtain the location information of the transmission device 101 on the basis of the information. Yet alternatively, for example, another device may obtain the location information of the transmission device 101 on the basis of a communication status between the transmission device 101 and the high sensitivity reception device 102. For example, it may be identified that the transmission device 101 is located within a communicable range of the high sensitivity reception device 102 by identifying the high sensitivity reception device 102 that has received a signal from the transmission device 101. Furthermore, more detailed location information of the transmission device 101 may be obtained on the basis of signal strength, a delay time, and the like of the received signal received by the high sensitivity reception device 102. Alternatively, for example, the location information of the transmission device 101 may be obtained by trigonometry or the like using location information of a plurality of the high sensitivity reception devices 102 that has received the signal from the transmission device 101.

The high sensitivity reception device 102 may be installed at any location. For example, the device may be installed on the roof or rooftop of a construction 112 such as a building, an apartment, a house, or the like. The construction 112 is suitable because it is large in number in urban areas where the location monitoring target (for example, the elderly person 111) carrying the transmission device 101 is highly likely to be active, and also the device is easily installed on the construction. In particular, in a case where the location monitoring target is a person, a home of the location monitoring target is suitable because the location monitoring target is more likely to be located around the home. Moreover, in terms of securing a place of installation as well, the home is an easy choice as it is easier to gain agreement than in a case where a location notification service provider secures a place on its own and installs the high sensitivity reception device 102.

Note that in addition to the above, the high sensitivity reception device 102 may be installed on, for example, a movable object (also referred to as a movable body) such as a vehicle, a motorcycle, a bicycle, or the like. That is, the location of the high sensitivity reception device 102 may be variable.

The network 103 is an arbitrary communication network and may be a communication network of wired communication, a communication network of wireless communication, or may be configured by both of them. Moreover, the network 103 may be configured by one communication network or a plurality of communication networks. For example, the network 103 may include a communication network or channel of an arbitrary communication standard such as the Internet, a public telephone network, a broadband network for a wireless mobile body such as so-called 3G network and 4G network, a wide area network (WAN), a local area network (LAN), a wireless communication network performing communication conforming to Bluetooth (registered trademark) standards, a channel for short-range wireless communication such as near field communication (NFC), a channel for infrared communication, a communication network for wired communication conforming to a standard such as high-definition multimedia interface (HDMI) (registered trademark), universal serial bus (USB), or the like.

The server 104 and the terminal device 105 are information processing apparatuses that process information. The server 104 and the terminal device 105 are connected to the network 103 to be able to communicate therewith, and can communicate with another communication device connected to the network 103 via the network 103 to exchange information.

The server 104 manages the location of each transmission device 101. The server 104 can also manage a user who is allowed to be provided with the location information of the transmission device 101. For example, the server 104 can provide the location information of each transmission device 101 only to a user who is allowed to acquire the location information of the transmission device 101.

As described above, the information provided from the transmission device 101 is relayed by the high sensitivity reception device 102 and supplied to the server 104, whereby the server 104 manages the location of the transmission device 101. That is, in a state where the transmission device 101 is located within the communicable range of any of the high sensitivity reception devices 102, the server 104 can manage the location of the transmission device 101. In other words, when the location of the transmission device 101 is outside the communicable range of every high sensitivity reception device 102, the server 104 cannot manage the location of the device. Therefore, the wider the communicable range network of the high sensitivity reception device 102 with respect to the transmission device 101, the more accurately the server 104 can manage the location of the transmission device 101.

Here, the more accurate management means managing the location of the transmission device 101 in a wider range (that is, reducing the area where the location of the transmission device 101 cannot be managed). In order to further widen the range in which the location of the transmission device 101 can be managed, the farther the transmission device 101 and the high sensitivity reception device 102 can transmit and receive wireless signals (the wider the communicable range of each high sensitivity reception device 102), the better. The transmission/reception of the wireless signals between the transmission device 101 and the high sensitivity reception device 102 is performed by an arbitrary method and may conform to any communication standard where, for example, the transmission/reception may be performed by a method capable of long-range communication using a frequency band including 925 MHz (also referred to as a 920 MHz band).

For example, if the time and frequency at which the transmission device 101 transmits a wireless signal is known (or known by the high sensitivity reception device 102), the high sensitivity reception device 102 need only detect the wireless signal at the known time and frequency so that the detection is performed more easily. Therefore, the reception sensitivity can be improved. That is, the communicable range of the high sensitivity reception device 102 can be further expanded. Note that the detection becomes more difficult if the accuracy of control of such time and frequency decreases, in which case the reception sensitivity possibly deteriorates. In other words, the reception sensitivity can be improved by improving the accuracy of controlling time and frequency.

<Wireless communication>

In wireless communication that transmits and receives digital data, the limit of wireless communication range is determined by transmission power of radio waves, performance of an antenna used for the transmission and reception, and a transfer rate. An increase in the transmission power is directly linked to the power consumption of a transmitter and thus is naturally limited. The performance of the antenna can be improved by using a Yagi-Uda antenna or the like, but the higher the performance of the antenna, the larger and more complex the structure, whereby the performance of the antenna that can be used is limited.

Moreover, the transmission power is restricted by the Radio Law. Furthermore, depending on the frequency band of the radio waves, the transmission power including the performance of the antenna is regulated by the Radio Law. As a result of these, there is a limit to the transmission power and the performance of the antenna that can be practically used.

A direct sequence spread spectrum (DSSS), for example, is known as a technology for implementing the long-range wireless communication without such constraints. The DSSS is a technology that eliminates the influence of noise and enables high sensitivity reception by integrating a received signal while multiplying it by a spreading code. The sensitivity increases linearly by extending the integration time (that is, lowering the transfer rate), and in a GNSS adopting the DSSS, for example, a signal can be received stably even with the field intensity of -150 dBm or less.

In the GNSS, transmission radio waves are continuously transmitted in a stable phase. Therefore, stable phase synchronization is established even in a state of low signal to noise ratio (SNR) by adopting a low-band phase locked loop (PLL) or delayed locked loop (DLL). If the phase is correct, a weak signal can be detected by integrating and detecting a signal. In a case where a dedicated radio frequency band is allocated as in the GNSS, such continuous transmission for a long period of time is possible so that even a weak signal can be stably received.

Now, there is a system that transmits information regarding a sensor or the like using the radio waves in a 920 Mz band, for example. The 920 MHz band is a frequency band opened by the Ministry of Internal Affairs and Communications from July of 2011, and can be used by anyone without a license. However, the maximum continuous transmission time is limited to four seconds according to the regulation (Association of Radio Industries and Businesses (ARIB), STD T-108). More strictly speaking, the ARIB STD T-108 stipulates that the continuous transmission time of four seconds is allowed for a limited part of the frequency domain. That is, in the case where the continuous transmission time is four seconds, the number of frequency channels that can be used for transmission and reception is limited. On the other hand, in a case where the continuous transmission time is 0.4 seconds or shorter, the transmission and reception can be performed in more frequency bands. If more frequency bands are available, the influence of interference, disturbance, and the like can be reduced. Moreover, if the continuous transmission time is further shortened to 0.2 seconds or less, the transmission can be performed repeatedly with a short transmission pause time.

However, the continuous transmission time is long in a conventional DSSS system and, if shortened to 0.4 seconds or less, there has been a possibility that a sufficient reception sensitivity effect cannot be obtained. Moreover, there has been a drawback that the reception sensitivity further deteriorates if the continuous transmission time is shortened to 0.2 seconds or less in order to shorten the transmission pause time.

<Transmission device>

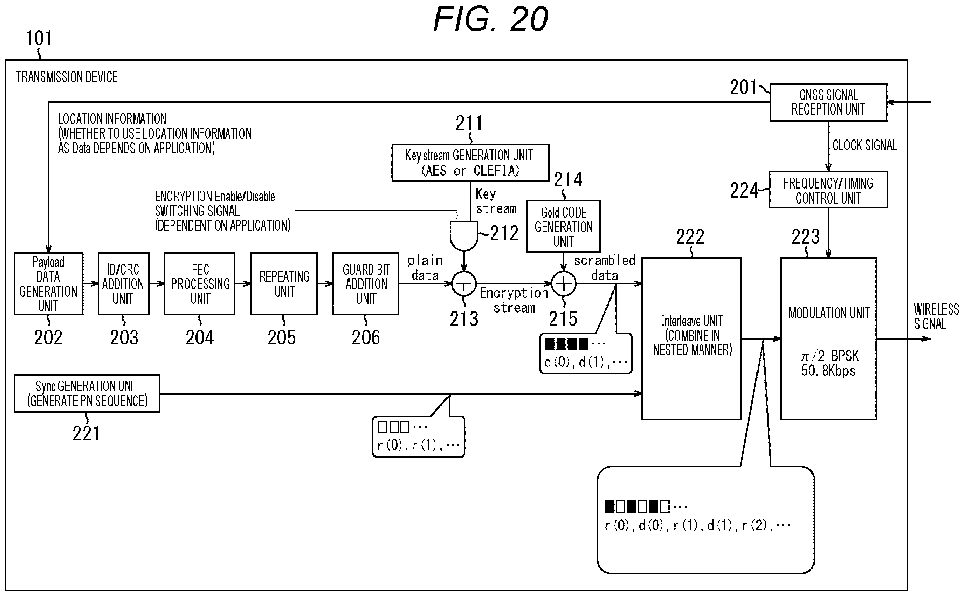

Fig. 20 is a block diagram illustrating an example of the main configuration of the transmission device 101. The transmission device 101 transmits a signal using the 920 MHz band. The transmission device 101 can thus be used without a license.

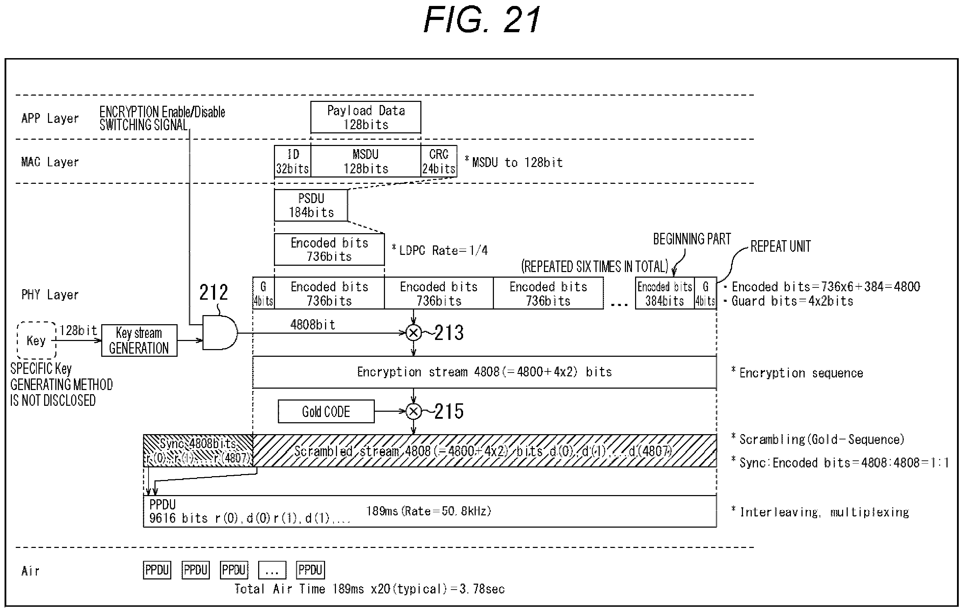

Fig. 21 illustrates an overall view of a frame structure of a transmit signal transmitted by the transmission device 101. As illustrated in Fig. 21, the transmission device 101 transmits a signal in frames of 0.189 seconds (about 0.2 seconds or less) each. A single continuous transmission time is 0.189 seconds and falls below the continuous transmission time of 0.2 seconds. An interval is also provided as appropriate between frames. As a result, a large number of transmission channels can be allocated, and a relatively vacant channel can be selected for transmission so that a system more resistant to interference can be constructed. Application of the present technology enables construction of a high sensitivity transmission/reception system even with the use of such a short frame length.

Single data transmission includes a super frame in which a plurality of frames is repeated. In a super frame illustrated in Fig. 21, the frame of 0.189 seconds is repeated 20 times. Here, a gap between the frames is a time of at least 2 ms or longer. The gap differs each time depending on a result of carrier sense (that is, a level of congestion of the channel). The number of frames that can be transmitted varies slightly depending on a degree of congestion of the channel. The signals transmitted in 20 frames are described below as being identical.

The transmission device 101 includes a GNSS signal reception unit 201, a payload data generation unit 202, an ID/CRC addition unit 203, an FEC processing unit 204, a repeating unit 205, a guard bit addition unit 206, a key stream generation unit 211, an AND gate 212, an EXOR gate 213, a Gold code generation unit 214, an EXOR gate 215, a sync generation unit 221, an interleave unit 222, a modulation unit 223, and a frequency/timing control unit 224.

The GNSS signal reception unit 201 receives a GNSS signal, acquires 1 pulse per second (PPS) signal and current time (GNSS time) included in the GNSS signal, and supplies the acquired information to the frequency/timing control unit 224 as a clock signal. The GNSS signal reception unit 201 also acquires location information (latitude, longitude, and altitude) of the transmission device 101 from the GNSS signal, and supplies the information to the payload data generation unit 202 as sensor information obtained by sensing the location.

The payload data generation unit 202 generates payload data to be the payload of a wireless signal from the location information supplied from the GNSS signal reception unit 201, and supplies the payload data to the ID/CRC addition unit 203. Note that information to be the payload data is not limited to the location information.

The ID/CRC addition unit 203 adds identification information (ID) of the transmission device 101 and a cyclic redundancy check (CRC) code to the payload data from the payload data generation unit 202, thereby generating a forward error correction (FEC) target unit to be subjected to FEC processing and supplying the FEC target unit to the FEC processing unit 204. Note that the ID/CRC addition unit 203 generates the CRC code for the payload data or the payload data and ID.

The FEC processing unit (coding unit) 204 performs FEC processing on the FEC target unit from the ID/CRC addition unit 203, and supplies an FEC frame obtained as a result thereof to the repeating unit 205.

That is, the FEC processing unit 204 performs error correction coding on the FEC target unit as the FEC processing on the FEC target unit, and supplies an error correction code obtained by the error correction coding to the repeating unit 205.

Specifically, the FEC processing unit 204 performs, for example, LDPC coding on the FEC target unit, and supplies an LDPC code obtained by the LDPC coding to the repeating unit 205.

Note that the error correction code is not limited to the LDPC code. As the error correction code, for example, a convolutional code, a turbo code, or the like can be adopted.

The repeating unit 205 generates a repeat unit in which the LDPC code from the FEC processing unit 204 is repeatedly arranged, and supplies the repeat unit to the guard bit addition unit 206.

The guard bit addition unit 206 adds (inserts) a guard bit to the repeat unit from the repeating unit 205 and supplies it to the EXOR gate 213. In a receiver as described later, processing such as fast Fourier transform (FFT) or the like may be used in received signal processing. At this time, the FFT may perform an operation equivalent to that in which the received signal is repeatedly transmitted, where errors are likely to occur at a front end and a rear end of the received signal. Accordingly, the guard bits are added to the front end and the rear end of the signal sequence to be able to prevent deterioration of a required signal even if signal processing such as the FFT is performed on the side of the receiver.

The key stream generation unit 211 generates a key stream used for encryption and supplies the key stream to the AND gate 212.

In addition to the key stream from the key stream generation unit 211, a switching signal for switching between enabling and disabling of encryption at the EXOR gate 213 is supplied to the AND gate 212.

The switching signal is, for example, a signal that is at logic one (for example, high level) in a case where encryption is enabled and at logic zero (for example, low level) in a case where encryption is disabled. The switching signal can be set according to the application, for example. The switching signal can be set to enable encryption of the whole or a part of the repeat unit supplied from the guard bit addition unit 206 to the EXOR gate 213. The switching signal can also be set to disable encryption of the whole repeat unit supplied from the guard bit addition unit 206 to the EXOR gate 213.

The AND gate 212 calculates the logical AND of the switching signal and the key stream from the key stream generation unit 211, and supplies the logical AND to the EXOR gate 213. As a result, the key stream is supplied from the AND gate 212 to the EXOR gate 213 only while encryption is enabled by the switching signal.

The EXOR gate 213 calculates the exclusive OR of the repeat unit from the card bit addition unit 206 and the key stream from the AND gate 212, thereby encrypting the repeat unit by stream encryption (method). The EXOR gate 213 supplies the encrypted repeat unit to the EXOR gate 215.

Here, the EXOR gate 213 encrypts the repeat unit corresponding to a period in which the key stream from the AND gate 212 is supplied, that is, a period in which the switching signal is at logic one. Thus, at the EXOR gate 213, there is a case where all or a part of the repeat unit is encrypted, or all of the repeat unit is not encrypted.

The Gold code generation unit 214 for example uses two M-sequence generators to generate a Gold code, for example, as a scrambling sequence of the same size (bit length) as the repeat unit from the EXOR gate 213, thereby supplying the scrambling sequence to the EXOR gate 215.

The EXOR gate 215 scrambles the repeat unit by calculating the exclusive OR of the repeat unit from the EXOR gate 213 and the scrambling sequence from the Gold code generation unit 214, and supplies the scrambled data to the interleave unit 222.

The sync generation unit 221 generates, for example, a predetermined pseudo noise (PN) sequence such as an M-sequence as a synchronization signal, and supplies the synchronization signal to the interleave unit 222. Note that the synchronization signal generated by the sync generation unit 221 is a signal known by the transmission device 101 and the high sensitivity reception device 102. Since the synchronization signal is known by the transmission device 101 and the high sensitivity reception device 102, the high sensitivity reception device 102 can perform synchronization of the wireless signal from the transmission device 101 and receive the wireless signal from the transmission device 101 in a robust manner. An initial value of the M-sequence may be any value as long as it is common for transmission and reception. Moreover, the initial value of the M-sequence can be changed depending on the ID.

The interleave unit 222 alternately interleaves (multiplexes) a bit sequence d (0), d (1), ... as the repeat unit from the EXOR gate 213 and a bit sequence r (0), r (1), ... as the synchronization signal from the sync generation unit 221, and supplies an interleaved sequence r (0), d (0), r (1), d (1)... obtained by the interleaving to the modulation unit 223.

The modulation unit 223 performs, for example, $\pi/2$ shift binary phase shift keying ($\pi/2$ shift BPSK) modulation using the interleaved sequence supplied from the interleave unit 222 and transmits, for example, a wireless signal in the 920 MHz band as a modulated signal obtained by the modulation. Note that the modulation unit 223 transmits the wireless signal at transmission timing and transmission frequency controlled by the frequency/timing control unit 224.

The frequency/timing control unit 224 sets the transmission timing and transmission frequency of the wireless signal transmitted by the modulation unit 223 according to the ID of the transmission device 101 and the like, and controls the modulation unit 223 such that the wireless signal is transmitted at the transmission timing and transmission frequency. The frequency/timing control unit 224 controls the modulation unit 223 in synchronization with the clock signal from the GNSS signal reception unit 201. That is, the frequency/timing control unit 224 recognizes whether the current timing is a grid timing (grid time) which is the timing known (predetermined) in the transmission device 101 and the high sensitivity reception device 102 according to the clock signal from the GNSS signal reception unit 201, for example, and controls the modulation unit 223 such that packet transmission is started at the grid timing.

As a result of the above, the transmit signal is transmitted as a frame of 0.2 seconds or less in a state in which the synchronization signal (SYNC) known to the reception device is evenly scattered. Therefore, the transmission device 101 can reduce deterioration in the reception sensitivity. In other words, the transmission device 101 can realize transmission of a wireless signal for a longer range while reducing an increase in power consumption of the entire device.

<Flow of transmission processing>

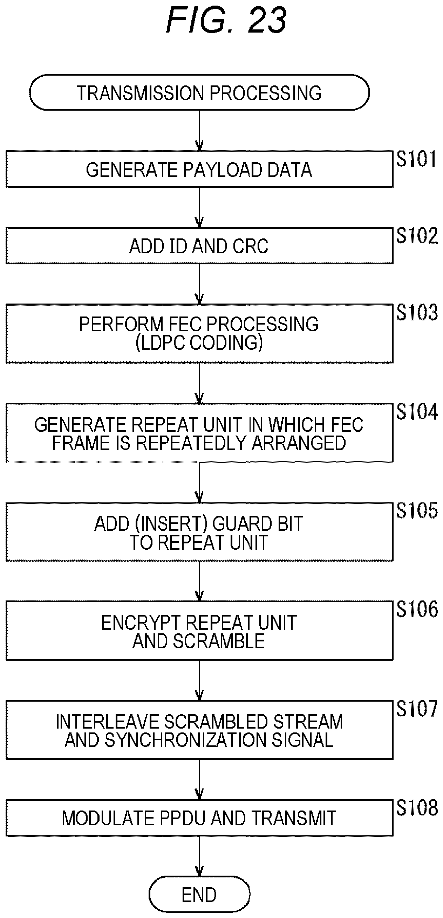

Next, an example of the flow of transmission processing executed in the transmission device 101 as described above will be described with reference to a flowchart of Fig. 23. Once data to be transmitted (for example, GNSS time information) is obtained, the transmission device 101 starts the transmission processing.

In step S101, the payload data generation unit 202 generates an MSDU as the payload data and supplies it to the ID/CRC addition unit 203, and the processing proceeds to step S102.

In step S102, the ID/CRC addition unit 203 adds the ID of the transmission device 101 and the CRC code to the payload data from the payload data generation unit 202, thereby generating a PSDU as the FEC target unit. The ID/CRC addition unit 203 supplies the FEC target unit to the FEC processing unit 204, and the processing proceeds from step S102 to step S103.

In step S103, the FEC processing unit 204 performs LDPC coding on the FEC target unit from the ID/CRC addition unit 203 and supplies, to the repeating unit 205, an FEC frame corresponding to one codeword of an LDPC code obtained by the LDPC coding, and the processing proceeds to step S104.

In step S104, the repeating unit 205 generates a repeat unit in which the LDPC code from the FEC processing unit 204 is repeatedly arranged and supplies the repeat unit to the guard bit addition unit 206, and the processing proceeds to step S105.

In step S105, the guard bit addition unit 206 adds a guard bit to the repeat unit from the repeating unit 205 and supplies the repeat unit to the EXOR gate 213, and the processing proceeds to step S106.

In step S106, the EXOR gate 213 encrypts the repeat unit from the guard bit addition unit 206 and supplies a resultant encryption stream to the EXOR gate 215. The EXOR gate 215 scrambles the encryption stream from the EXOR gate 213 and supplies a resultant scrambled stream to the interleave unit 222, and the processing proceeds from step S106 to step S107.

In step S107, the interleave unit 222 interleaves the scrambled stream from the EXOR gate 213 and the synchronization signal from the sync generation unit 221 and supplies a PPDU obtained by the interleaving to the modulation unit 223, and the processing proceeds to step S108.

In step S108, the modulation unit 223 performs BPSK modulation or chirp modulation using the PPDU supplied from the interleave unit 222 to generate and transmit a wireless signal in the 920 MHz band, for example, and the processing ends.

<Format of data handled by transmission device 101>

Fig. 21 is a diagram illustrating an example of a first format of data (signal) handled by the transmission device 101.

Here, the diagram illustrates a data format in a case where, for example, 50.8 kbps is adopted as a modulation rate (transmission rate) of modulation performed by the modulation unit 223 in a new communication system.

As the payload data, for example, 128 bits called MSDU (media access control (MAC)) are used for transmission of actual data (user data).

The 128-bit MSDU is added with a 32-bit ID of the transmission device 101 and a 24-bit CRC code by the ID/CRC addition unit 203, thereby forming a 184-bit unit called a physical layer service unit (PSDU) as the FEC target unit.

The 184-bit PSDU is encoded by the FEC processing unit 204 into an LDPC code with a code length N of 736 bits and a coding rate r of 1/4, for example, and as a result becomes a 736-bit (= $184 \times 4/1$) LDPC code (encoded bits).

Next, the 736-bit LDPC code is repeated six times, and moreover 384 bits being a portion of the 736-bit LDPC code are repeated so that a repeat unit of 4800 bits (= 736 bits $\times$ 6 + 384 bits) is formed.

That is, the repeat unit includes the arrangement of the 736-bit LDPC code repeated six times and also the 384 bits being a portion of the 736-bit LDPC code.

As the 384 bits being a portion of the 736-bit LDPC code arranged in the repeat unit, the first 384 bits of the 736-bit LDPC code can be adopted, for example. Alternatively, the 384 bits being a portion of the 736-bit LDPC code arranged in the repeat unit can be selected according to a predetermined optimization pattern, for example.

For the repeat unit, 4-bit guard bits (G) are added to each of the beginning and the end thereof. By the addition of the guard bits, the 4800-bit repeat unit becomes a 4808-bit (= 4800 bits + 4 bits $\times$ 2) repeat unit.

Thereafter in a second format, as in the case of the first format, the 4808-bit repeat unit is encrypted to be an encryption stream and is further scrambled to be a scrambled stream.

The scrambled stream is a 4808-bit bit sequence d (0), d (1), ..., d (4807) of the same size as the repeat unit to which the guard bits are added.

Moreover, the sync generation unit 221 generates, for example, a bit sequence r (0), r (1), ..., r (4087) as a 4808-bit synchronization signal (Sync) of the same size as the scrambled stream.

Therefore, the ratio of the length of the synchronization signal to that of the scrambled stream is 4808 : 4808 = 1 : 1.

The bit sequence r (0), r (1), ... r (4087) as the 4808-bit synchronization signal and the bit sequence d (0), d (1), ..., d (4807) as the 4808-bit scrambled stream are interleaved by interleave unit 222. As a result, there is generated a bit sequence r (0), d (0), r (1), d (1), ... as a PPDU of 9616 bits (= 4808 bits + 4808 bits) in which bits as the synchronization signals are periodically inserted.

Here, the bit sequence r (0), r (1), ..., r (4807) as the 4808-bit synchronization signal and the bit sequence d (0), d (1), ..., d (4807) as the 4808-bit scrambled stream are interleaved according to a C program below, for example.

```
for(n=0; n<9616; n++) {
    if ( (n % 2) ==0) PPDU(n) =r (n/2);
    if ( (n % 2) ==1) PPDU(n) =d (n/2);
}
```

The 9616-bit PPDU is subjected to 50.8 kbps $\pi/2$ shift BPSK modulation by the modulation unit 223 and transmitted as a wireless signal.

In the case where 50.8 kbps $\pi/2$ shift BPSK modulation is applied to the 9616-bit PPDU, the transmission time of the 9616-bit PPDU is about 189.4 ms. Since the time is less than 0.2 seconds defined by the ARIB standard, the transmission can be repeated a plurality of times with a short transmission pause time.

The transmission device 101 repeatedly transmits the PPDU as a packet 20 times, for example. In this case, the time required for transmitting the PPDU 20 times is about 3.78 seconds (= 189.4 ms $\times$ 20). The transmission is repeated such many times so that information can be transmitted more reliably even if there is an influence of fading or the like, for example.

<Example of configuration of key stream generation unit 211>

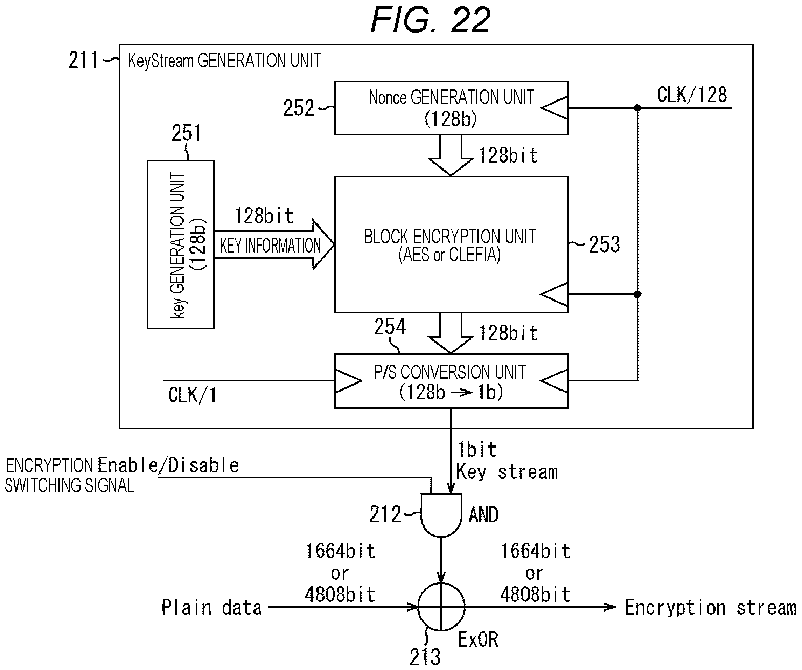

Fig. 22 is a block diagram illustrating an example of the configuration of the key stream generation unit 211 of Fig. 20.

In Fig. 22, the key stream generation unit 211 includes a key generation unit 251, a nonce generation unit 252, a block encryption unit 253, and a P/S conversion unit 254.

The key stream generation unit 211 generates a key stream used for encryption. The key stream generation unit 211 generates a 1664-bit key stream for the first format and generates a 4808-bit key stream for the second format.

The key generation unit 251 generates 128 bits of key information. The internal structure of the key generation unit 251 is not disclosed so that security of encryption is ensured. The key generation unit 251 may have any configuration as long as the internal structure is not easily guessed.

The key generation unit 251 can generate the key information by acquiring the GNSS time from the GNSS signal reception unit 201 (Fig. 20) and adding zero data such that the bit length equals 128 bits, for example. The key generation unit 251 supplies the generated key information to the block encryption unit 253.

The nonce generation unit 252 generates 128 bits of number used once (nonce). As for the nonce, it is expected that the value is different at each timing obtained by dividing a bit clock by 128.

The nonce generation unit 252 can include, for example, a 128-bit counter. In this case, the nonce generation unit 252 can generate the nonce by, for example, initializing the counter to a predetermined count value before the start of transmission of a wireless signal, and then incrementing the count value by one at every timing obtained by dividing the bit clock by 128. The nonce generation unit 252 supplies the generated nonce to the block encryption unit 253.

The block encryption unit 253 generates a 128-bit block cipher using the key information from the key generation unit 251 and the nonce from the nonce generation unit 252, and supplies the block cipher to the P/S conversion unit 254.

As the block cipher, for example, an Advanced Encryption Standard (AES) code, a CLEFIA code, or the like can be used.

The P/S conversion unit 254 performs parallel to serial (P/S) conversion on the 128-bit block cipher from the block encryption unit 253 into one bits to generate a serial (1-bit) key stream, and supplies it to the AND gate 212.

The P/S conversion unit 254 generates a 4808-bit key stream.

<High sensitivity reception device>

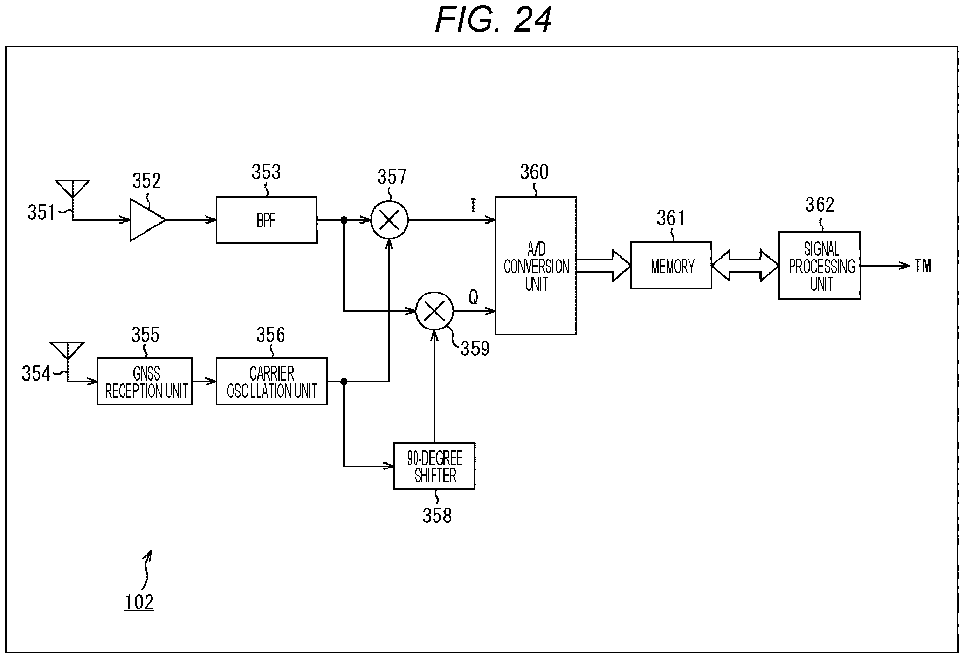

Next, the high sensitivity reception device 102 will be described. Fig. 24 is a diagram illustrating an example of the main configuration of a reception device which is an embodiment of a signal processing apparatus to which the present technology is applied. The high sensitivity reception device 102 receives a signal transmitted from the transmission device 101. Therefore, the received signal has a format in which, as described with reference to Figs. 20 and 21, one frame includes 9616 symbols with a symbol of unknown information (data) and a symbol of known information (synchronization signal) being alternately arranged.

As illustrated in Fig. 24, the high sensitivity reception device 102 includes an antenna 351, a low noise amplification unit 352, a band-pass filter (BPF) 353, an antenna 354, a GNSS reception unit 355, a carrier oscillation unit 356, a multiplication unit 357, a 90-degree shifter 358, a multiplication unit 359, an A/D conversion unit 360, a memory 361, and a signal processing unit 362.

The low noise amplification unit 352 is configured to perform processing related to signal amplification. For example, the low noise amplification unit 352 receives a wireless signal via the antenna 351, amplifies the received signal, and supplies the amplified signal to the band-pass filter 353. Note that this low noise amplification unit 352 can be implemented by an arbitrary configuration. For example, the low noise amplification unit 352 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined. For example, the low noise amplification unit 352 may include an operational amplifier or the like.

The band-pass filter 353 is configured to perform processing related to band limitation. For example, the band-pass filter 353 removes an unnecessary frequency component from the received signal and supplies it to the multiplication unit 357 and the multiplication unit 359. Note that this band-pass filter 353 can be implemented by an arbitrary configuration. For example, the band-pass filter 353 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined. For example, the band-pass filter 353 may have a CPU and a memory, and perform the aforementioned processing by the CPU executing a program using the memory.

The GNSS reception unit 355 is configured to perform processing related to reception of a GNSS signal. For example, the GNSS reception unit 355 receives the GNSS signal transmitted from a GNSS satellite via the antenna 354. The GNSS reception unit 355 supplies time information (GNSS time information) or the like included in the GNSS signal to the carrier oscillation unit 356. Note that the GNSS reception unit 355 can be implemented by an arbitrary configuration. For example, the GNSS reception unit 355 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined. For example, the GNSS reception unit 355 may be configured by a receiving circuit, a signal processing circuit, and the like.

The carrier oscillation unit 356 is configured to perform processing related to carrier generation. For example, the carrier oscillation unit 356 generates a signal with a carrier frequency of a predetermined frequency used for transmission and reception. For example, in a case where a signal transmitted in the 920 MHz band is received, the carrier oscillation unit 356 oscillates at 920 MHz. Note that the carrier oscillation unit 356 appropriately corrects the frequency of the carrier generated using the GNSS time information supplied from the GNSS reception unit 355, and can generate the carrier with a more accurate frequency. The carrier oscillation unit 356 supplies the oscillation signal (carrier signal) to the multiplication unit 357 and the 90-degree shifter 358.

Note that this carrier oscillation unit 356 can be implemented by an arbitrary configuration. For example, the carrier oscillation unit 356 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined. For example, the carrier oscillation unit 356 may have an oscillator circuit.

The multiplication unit 357 is configured to perform processing related to multiplication. For example, the multiplication unit 357 multiplies the received signal supplied from the band-pass filter 353 by the carrier signal supplied from the carrier oscillation unit 356 to generate a baseband in-phase signal (I signal). The multiplication unit 357 supplies the I signal to the A/D conversion unit 360. Note that this multiplication unit 357 can be implemented by an arbitrary configuration. For example, the multiplication unit 357 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined. For example, the multiplication unit 357 may have a CPU and a memory, and perform the aforementioned processing by the CPU executing a program using the memory.

The 90-degree shifter 358 is configured to perform processing related to phase shift. For example, the 90-degree shifter 358 shifts the phase of the carrier signal supplied from the carrier oscillation unit 356 by 90 degrees. The 90-degree shifter 358 supplies the phase-shifted carrier signal to the multiplication unit 359. Note that this 90-degree shifter 358 can be implemented by an arbitrary configuration. For example, the 90-degree shifter 358 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined. For example, the 90-degree shifter 358 may have a CPU and a memory, and perform the aforementioned processing by the CPU executing a program using the memory.

The multiplication unit 359 is configured to perform processing related to multiplication. For example, the multiplication unit 359 multiplies the received signal supplied from the band-pass filter 353 by the 90-degree phase-shifted carrier signal supplied from the 90-degree shifter 358 to generate a baseband quadrature signal (Q signal). The multiplication unit 359 supplies the Q signal to the A/D conversion unit 360. Note that this multiplication unit 359 can be implemented by an arbitrary configuration. For example, the multiplication unit 359 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined. For example, the multiplication unit 359 may have a CPU and a memory, and perform the aforementioned processing by the CPU executing a program using the memory.

The A/D conversion unit 360 is configured to perform processing related to A/D conversion. For example, the A/D conversion unit 360 performs A/D conversion on each of the I signal and Q signal supplied, and supplies digital data thereof to the memory 361 for storage. The conversion rate of the A/D conversion unit 360 needs to exceed the chip rate used for transmission. For example, in a case where transmission at the chip rate of 50 K/s is performed with $\Delta = 20\ \mu s$, the A/D conversion unit 360 needs to perform A/D conversion at the conversion rate of at least twice the chip rate, that is, 100 K sample/s or higher. Note that this A/D conversion unit 360 can be implemented by an arbitrary configuration. For example, the A/D conversion unit 360 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined. For example, the A/D conversion unit 360 may be configured by a predetermined A/D conversion circuit.

The memory 361 has a predetermined storage medium, acquires the digital data of the I signal and the Q signal supplied from the A/D conversion unit 360, and stores the digital data in the storage medium. This storage medium may be of any type such as a semiconductor memory, a magnetic recording medium such as a hard disk, or any other storage medium, for example. In a case where the A/D conversion unit 360 performs A/D conversion for 20 seconds, for example, with 8-bit accuracy and the conversion rate (101.6 KHz) twice the modulation rate, the memory 361 accumulates about four megabytes (4 Mbytes) of digital data of the I signal and Q signal together.

The signal processing unit 362 is configured to perform signal processing. For example, the signal processing unit 362 reads the digital data of the I signal and the Q signal accumulated in the memory 361, performs decoding processing, and restores payload data being transmitted. The signal processing unit 362 outputs the restored payload data.

With such a configuration, the high sensitivity reception device 102 can receive and decode the transmit signal transmitted by the transmission device 101. That is, the high sensitivity reception device 102 can obtain transmit data TM by receiving and properly decoding a transmit frame transmitted as a frame of 0.2 seconds or less in a state in which a known synchronization pattern (SYNC) is almost evenly scattered. Therefore, the high sensitivity reception device 102 can realize transmission of a wireless signal for a longer range while suppressing an increase in power consumption of the entire device.

<Signal processing unit>

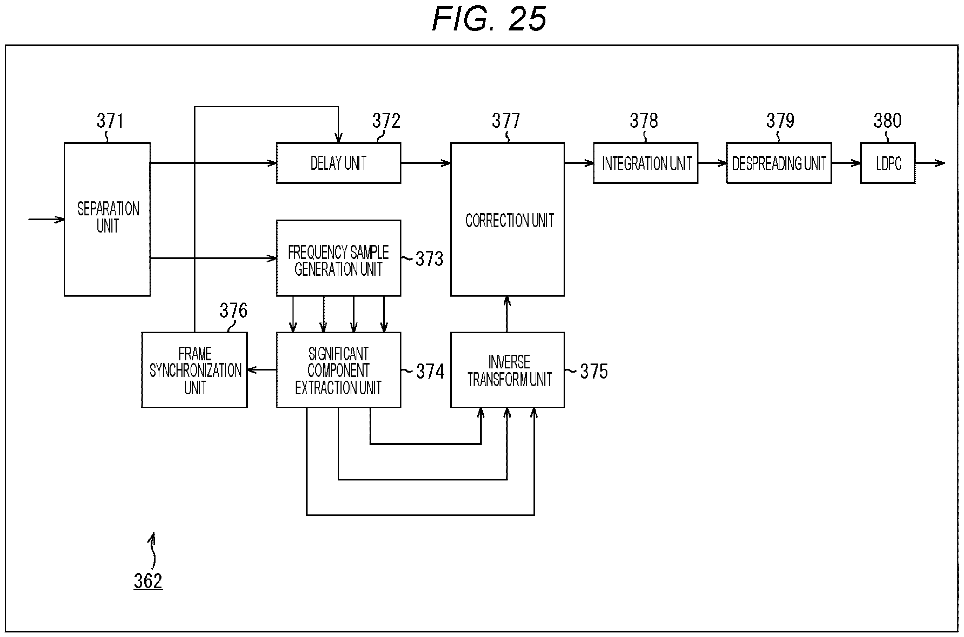

Fig. 25 is a block diagram illustrating an example of the main configuration of the signal processing unit 362. As illustrated in Fig. 25, the signal processing unit 362 includes a separation unit 371, a delay unit 372, a frequency sample generation unit 373, a significant component extraction unit 374, an inverse transform unit 375, a frame synchronization unit 376, a correction unit 377, an integration unit 378, a despreading unit 379, and low-density parity-check codes (LDPC) 380.

The separation unit 371 is configured to perform processing related to data separation. For example, the separation unit 371 separates unknown information (data) and known information (synchronization signal) that are included in the digital data (IQ signal) read from the memory 361. The separation unit 371 supplies the separated data (unknown information) to the delay unit 372, and supplies the separated synchronization signal (known information) to the frequency sample generation unit 373. Note that this separation unit 371 can be implemented by an arbitrary configuration. For example, the separation unit 371 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined.

The delay unit 372 is configured to perform processing related to data delay. For example, the delay unit 372 has a buffer and stores one frame of data supplied from the separation unit 371 in the buffer. Then, the delay unit 372 supplies the stored data to the correction unit 377 according to control of the frame synchronization unit 376. Note that this delay unit 372 can be implemented by an arbitrary configuration. For example, the delay unit 372 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined.

The frequency sample generation unit 373 is configured to perform processing related to generation of frequency samples. For example, the frequency sample generation unit 373 generates complex frequency samples from the synchronization signal supplied from the separation unit 371. The frequency sample generation unit 373 supplies the generated complex frequency samples to the significant component extraction unit 374. Note that this frequency sample generation unit 373 can be implemented by an arbitrary configuration. For example, the frequency sample generation unit 373 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined.

The significant component extraction unit 374 is configured to perform processing related to extraction of significant components of the frequency samples. For example, the significant component extraction unit 374 extracts a plurality of complex frequency samples as significant components from a large number of the complex frequency samples supplied from the frequency sample generation unit 373. The significant component extraction unit 374 supplies the plurality of complex frequency samples extracted to the inverse transform unit 375. The significant component extraction unit 374 also detects a peak of the complex frequency sample of each frame and notifies the frame synchronization unit 376 of it. Note that this significant component extraction unit 374 can be implemented by an arbitrary configuration. For example, the significant component extraction unit 374 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined.

The inverse transform unit 375 is configured to perform processing related to inverse transform. For example, the inverse transform unit 375 transforms the plurality of complex frequency samples in the frequency domain supplied from the significant component extraction unit 374 into a channel information sample in the time domain. The inverse transform unit 375 supplies the generated channel information sample to the correction unit 377. Note that this inverse transform unit 375 can be implemented by an arbitrary configuration. For example, the inverse transform unit 375 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined.

The frame synchronization unit 376 is configured to perform processing related to frame synchronization. For example, the frame synchronization unit 376 synchronizes data on a frame-by-frame basis by controlling the timing for reading the one frame of data stored in the delay unit 372. The frame synchronization unit 376 for example controls the delay unit 372 to cause the data to be read from the delay unit 372 at a timing (a synchronized timing) corresponding to the notification from the significant component extraction unit 374. Note that this frame synchronization unit 376 can be implemented by an arbitrary configuration. For example, the frame synchronization unit 376 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined. For example, the frame synchronization unit 376 may have a CPU and a memory, and perform the aforementioned processing by the CPU executing a program using the memory.

The correction unit 377 is configured to perform processing related to data correction. For example, the correction unit 377 corrects the data supplied from the delay unit 372 on the basis of the channel information sample (channel information sample obtained by transforming the plurality of frequency samples) supplied from the inverse transform unit 375. For example, the correction unit 377 corrects the phase of the data. Moreover, the correction unit 377 may also be adapted to be able to correct the amplitude of the data. The correction unit 377 supplies the data after correction to the integration unit 378. Note that this correction unit 377 can be implemented by an arbitrary configuration. For example, the correction unit 377 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined.

The integration unit 378 is configured to perform processing related to integration of data. For example, the integration unit 378 integrates the data supplied from the correction unit 377. By integrating many shorttime frames in such a manner, the effective SNR can be improved without exceeding the limit of the maximum transmission time defined in the Radio Law. The integration unit 378 supplies a result of the integration to the despreading unit 379. Note that this integration unit 378 can be implemented by an arbitrary configuration. For example, the integration unit 378 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined. For example, the integration unit 378 may have a CPU and a memory, and perform the aforementioned processing by the CPU executing a program using the memory.

The despreading unit 379 is configured to perform processing related to despreading of data. For example, the despreading unit 379 despreads data by multiplying the data by a Gold code or the like. The despreading unit 379 further improves the SNR by integrating the LDPC code repeated six times in a frame, and then supplies the result to the LDPC 180. Note that this despreading unit 379 can be implemented by an arbitrary configuration. For example, the despreading unit 379 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined. For example, the despreading unit 379 may have a CPU and a memory, and perform the aforementioned processing by the CPU executing a program using the memory.

The LDPC 380 is configured to perform processing related to low density parity check codes. For example, the LDPC 380 performs error determination using a frame check sequence added to transmit data, and performs correction processing as needed. The LDPC 380 outputs the checked data. Note that this LDPC 380 can be implemented by an arbitrary configuration. For example, the LDPC 380 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined. For example, the LDPC 380 may have a CPU and a memory, and perform the aforementioned processing by the CPU executing a program using the memory.

<Separation unit>

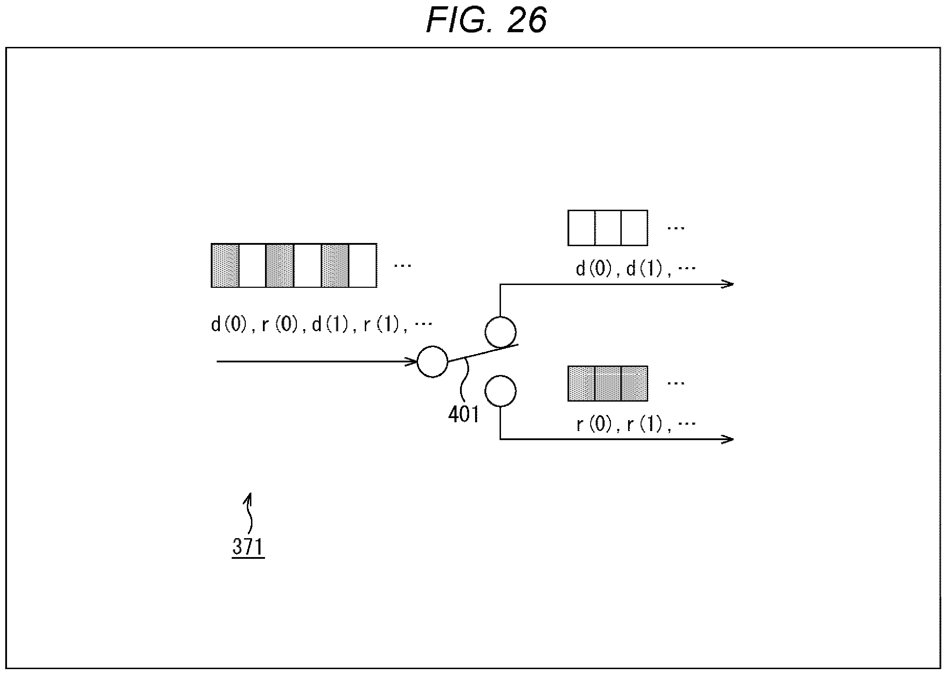

Fig. 26 is a schematic diagram illustrating an example of the main configuration of the separation unit 371. As illustrated in Fig. 26, the separation unit 371 includes a switch 401. The switch 401 is a one-input two-output switch with an input terminal thereof connected to the input of the signal processing unit 362 (that is, the memory 361), one output connected to the delay unit 372, and another output connected to the frequency sample generation unit 373. The received signal (IQ signal) read from the memory 361 is supplied to the switch 401. The switch 401 supplies symbols of data, which is the unknown information included in the received signal, to the delay unit 372 and supplies symbols of the synchronization signal, which is the known information, to the frequency sample generation unit 373. In a case where a ratio of the length of the synchronization signal to that of the data (scrambled stream) is 1 : 1, for example, the switch 401 is configured to switch alternately at intervals of the symbols. Note that this switch 401 can be implemented by an arbitrary configuration. For example, the switch 401 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined. For example, the switch 401 may be configured by a switch circuit or the like.

<Frequency sample generation unit>

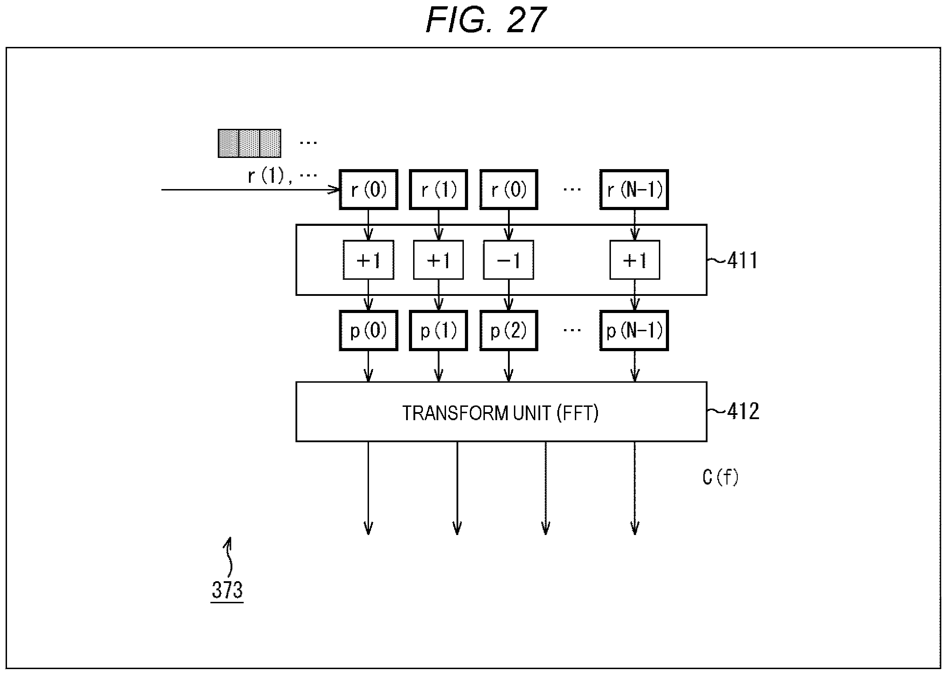

Fig. 27 is a block diagram illustrating an example of the main configuration of the frequency sample generation unit 373. As illustrated in Fig. 27, the frequency sample generation unit 373 has a known data multiplication unit 411 and a transform unit 412.

The known data multiplication unit 411 is configured to perform processing related to multiplication of known data. The known data multiplication unit 411 multiplies each symbol of the synchronization signal supplied from the separation unit 371 by known data (+1 or -1) to generate a channel information sample ($p(k)$ ($0 \leq k \leq (N - 1)$)). This known data is the value with which the channel information samples ($p(k)$) are all +1 (on the real axis) in a case where synchronization is achieved, as described with reference to Figs. 10 and 11. The known data multiplication unit 411 supplies the synchronization signal multiplied by the known data (channel information sample ($p(k)$)) to the transform unit 412.

Note that this known data multiplication unit 411 can be implemented by an arbitrary configuration. For example, the known data multiplication unit 411 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined. For example, the known data multiplication unit 411 may have a CPU and a memory, and perform the aforementioned processing by the CPU executing a program using the memory.

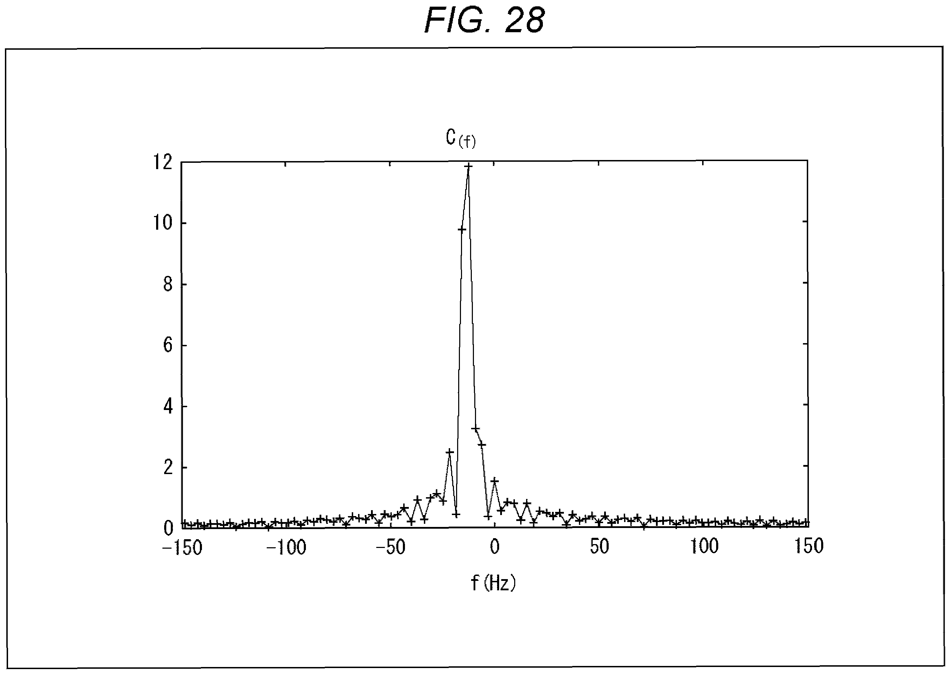

The transform unit 412 is configured to perform processing related to transformation of the channel information sample. For example, the transform unit 412 transforms the channel information sample supplied from the known data multiplication unit 411 into a complex frequency sample C (f). That is, as in a graph illustrated in Fig. 28, a spectrum distribution of complex frequencies is obtained. Note that this transform method is arbitrary. For example, the transform unit 412 may be adapted to perform fast Fourier transform (FFT). The transform unit 412 for example transforms the channel information sample for one frame into the complex frequency sample C (f). The transform unit 412 supplies the complex frequency sample C (f) obtained to the significant component extraction unit 374.

Note that this transform unit 412 can be implemented by an arbitrary configuration. For example, the transform unit 412 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined. For example, the transform unit 412 may have a CPU and a memory, and perform the aforementioned processing by the CPU executing a program using the memory.

<Significant component extraction unit>

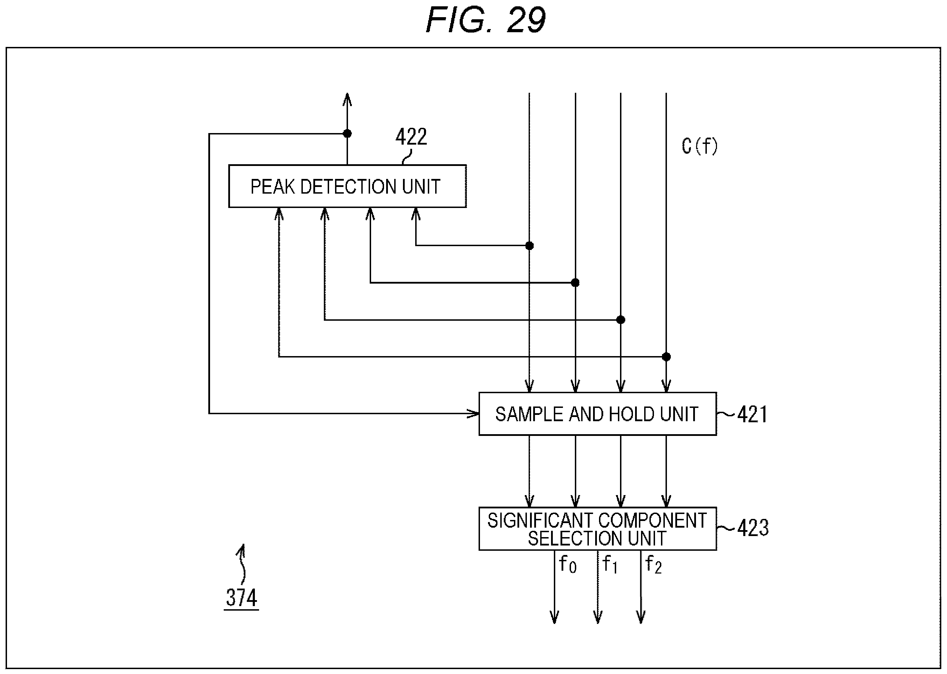

Fig. 29 is a block diagram illustrating an example of the main configuration of the significant component extraction unit 374. As illustrated in Fig. 29, the significant component extraction unit 374 includes a sample and hold unit 421, a peak detection unit 422, and a significant component selection unit 423.

The sample and hold unit 421 has a storage area such as a buffer, for example, and is configured to perform processing related to holding of frequency samples. For example, the sample and hold unit 421 holds the complex frequency sample C (f) supplied from the frequency sample generation unit 373. Then, when notified of the detection of a peak from the peak detection unit 422, the sample and hold unit 421 supplies the complex frequency sample held therein to the significant component selection unit 423. For example, the sample and hold unit 421 can be configured to hold all frequency samples obtained from the received signal of one frame. Alternatively, the sample and hold unit 421 can be configured to preselect and hold only a low frequency component of the frequency samples obtained from the received signal of one frame.

Note that this sample and hold unit 421 can be implemented by an arbitrary configuration. For example, the sample and hold unit 421 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined. For example, the sample and hold unit 421 may be configured by a memory, a switch, or the like.

The peak detection unit 422 is configured to perform processing related to peak detection. For example, the peak detection unit 422 detects a spectrum with a large amplitude from the complex frequency sample C (f) supplied from the frequency sample generation unit 373. The spectrum detected may be, for example, a sample with the maximum amplitude or a sample with the amplitude close to the maximum among the complex frequency sample group supplied from the frequency sample generation unit 373. Moreover, for example, the peak detection unit 422 may be adapted to detect a spectrum with a magnitude of the noise level higher than or equal to a predetermined noise level (for example, 5 dB). Upon detecting such a large spectrum, the peak detection unit 422 notifies the frame synchronization unit 376 and the sample and hold unit 421 to that effect.

As described above, the frame synchronization unit 376 controls the delay unit 372 according to the notification to achieve frame synchronization. Moreover, the sample and hold unit 421 supplies the complex frequency sample held therein to the significant component selection unit 423 according to the notification.

Note that this peak detection unit 422 can be implemented by an arbitrary configuration. For example, the peak detection unit 422 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined. For example, the peak detection unit 422 may have a CPU and a memory, and perform the aforementioned processing by the CPU executing a program using the memory.

The significant component selection unit 423 is configured to perform processing related to selection of a significant component of the complex frequency sample. For example, the significant component selection unit 423 selects a plurality of the complex frequency samples as significant components from among the complex frequency samples supplied from the sample and hold unit 421.

The method of selecting the complex frequency samples by the significant component selection unit 423 is arbitrary. As described with reference to Figs. 17 and 18, the plurality of the complex frequency samples is only required to be selected such that the complex frequency spectrum distribution of the received signal (synchronization signal) is reproduced with higher accuracy.

For example, the significant component selection unit 423 may select, as the significant components, a peak sample which is a complex frequency sample with a larger amplitude than the surrounding and neighboring samples which are complex frequency samples around the peak sample. In this case, the easiest example is to simply select one spectrum with the maximum amplitude as the peak sample, and then select two frequency spectra adjacent to the peak spectrum on both sides thereof as the neighboring samples. As a more advanced selection method, for example, a spectrum with the highest amplitude can be selected as a first peak sample and two spectra adjacent to the first peak sample on both sides thereof can be selected as first neighboring samples, and thereafter a spectrum with the second highest amplitude can be selected as a second peak sample and spectra adjacent to the second peak sample on both sides thereof can be selected as second neighboring samples. At this time, the neighboring samples may or need not be adjacent to the peak sample. Moreover, the number of the neighboring samples with respect to the peak sample is arbitrary. It may be one or three or more.

For example, it is assumed that the significant component selection unit 423 selects a spectrum larger than the surrounding as a peak sample $f_1$, and selects spectra adjacent thereto on both sides as a neighboring sample $f_0$ and a neighboring sample $f_2$. The significant component selection unit 423 supplies the plurality of the complex frequency samples (the peak sample $f_1$, the neighboring sample $f_0$, and the neighboring sample $f_2$) selected in such a manner to the inverse transform unit 375.

Note that this significant component selection unit 423 can be implemented by an arbitrary configuration. For example, the significant component selection unit 423 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined. For example, the significant component selection unit 423 may have a CPU and a memory, and perform the aforementioned processing by the CPU executing a program using the memory.

<Inverse transform unit>

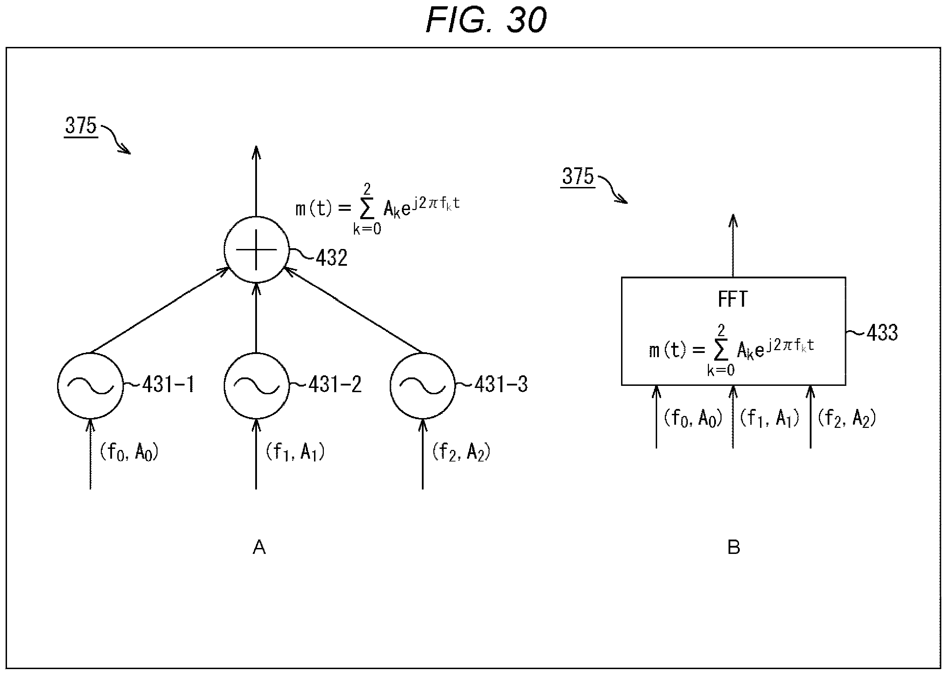

Fig. 30 is a diagram for explaining an example of the main configuration of the inverse transform unit 375. A schematic diagram in A of Fig. 30 illustrates an example of the main configuration of the inverse transform unit 375. In the case of the example in A of Fig. 30, the inverse transform unit 375 includes an oscillator 431-1, an oscillator 431-2, an oscillator 431-3, and a combining unit 432.

The oscillator 431-1 corresponds to the neighboring sample $f_0$ (the complex frequency sample of frequency $f_0$ and magnitude $A_0$) supplied from the significant component extraction unit 374 and generates an oscillation signal of the frequency $f_0$ and the magnitude $A_0$. The oscillator 431-2 corresponds to the peak sample $f_1$ (the complex frequency sample of frequency $f_1$ and magnitude $A_1$) supplied from the significant component extraction unit 374 and generates an oscillation signal of the frequency $f_1$ and the magnitude $A_1$. The oscillator 431-3 corresponds to the neighboring sample $f_2$ (the complex frequency sample of frequency $f_2$ and magnitude $A_2$) supplied from the significant component extraction unit 374 and generates an oscillation signal of the frequency $f_2$ and the magnitude $A_2$. Here, the magnitudes ($A_0$, $A_1$, and $A_2$) are typically complex numbers.

In a case where the oscillators 431-1 to 431-3 need not be distinguished from one another, they are referred to as an oscillator 431. That is, the inverse transform unit 375 has the oscillator 431 for each of the plurality of the complex frequency samples (the peak sample or the neighboring sample) supplied from the significant component extraction unit 374. The oscillation signal output from each oscillator 431 is a signal obtained by transforming the corresponding complex frequency sample into the time domain. These signals are supplied to the combining unit 432.

The combining unit 432 combines the oscillation signals supplied from the oscillators 431 as in the following expression (2), for example, and supplies a combined signal (channel information sample) to the correction unit 377.

$$m\left(t\right) = \sum_{k=0}^{2} A_k e^{j2\pi f_k t}$$

$$\cdots \ (2)$$

Note that the configuration of the inverse transform unit 375 is arbitrary. For example, as illustrated in B of Fig. 30, the inverse transform unit may be configured by an inverse Fourier transform unit (FFT) 433. The inverse Fourier transform unit 433 receives the plurality of frequency samples supplied from the significant component extraction unit 374 and performs inverse Fourier transform on the frequency samples, thereby transforming the frequency samples into a channel information sample in the time domain. That is, a combined result similar to that of the aforementioned expression (2) is obtained. The inverse Fourier transform unit 433 supplies the obtained channel information sample to the correction unit 377.

As described above, the inverse transform unit 375 performs the inverse transform on the plurality of the complex frequency samples as significant components into the channel information sample m (t). That is, this channel information sample m (t) reproduces the frequency deviation of the received signal with higher accuracy. Here, the channel information sample m (t) is typically represented by a complex number.

<Correction unit>

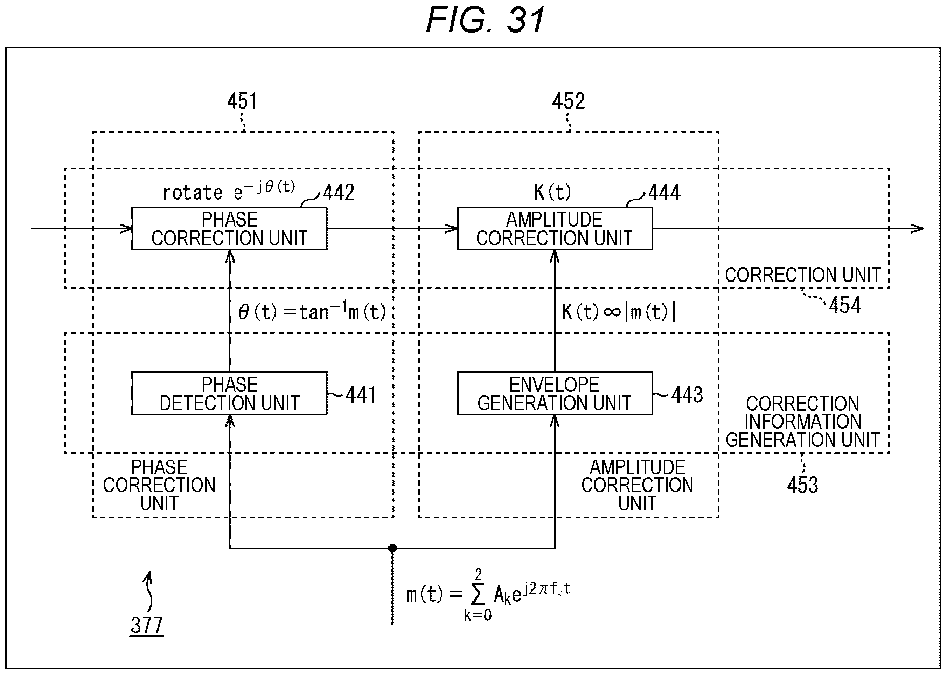

Fig. 31 is a block diagram illustrating an example of the main configuration of the correction unit 377. As illustrated in Fig. 31, the correction unit 377 includes a phase detection unit 441, a phase correction unit 442, an envelope generation unit 443, and an amplitude correction unit 444.

The phase detection unit 441 performs processing related to detection of a correction amount for the phase. For example, the phase detection unit 441 calculates a correction amount θ (t) for the phase from the channel information sample m (t) supplied from the inverse transform unit 375. For example, the phase detection unit 441 calculates the correction amount θ (t) for the phase as in the following expression (3). The phase detection unit 441 supplies the correction amount θ (t) calculated for the phase to the phase correction unit 442.

$$\theta \ (t) \ = \ \tan^{-1} m \ (t) \ \cdots \ (3)$$

As described above, the phase detection unit 441 detects the correction amount for the phase by using the channel information obtained from the plurality of frequency samples. The correction amount can thus be calculated with higher accuracy.

Note that this phase detection unit 441 can be implemented by an arbitrary configuration. For example, the phase detection unit 441 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined. For example, the phase detection unit 441 may have a CPU and a memory, and perform the aforementioned processing by the CPU executing a program using the memory.

The phase correction unit 442 performs processing related to phase correction. For example, the phase correction unit 442 multiplies the data supplied from the delay unit 372 by a signal $e^{-j\theta}$ (t) on the basis of the correction amount θ (t) supplied from the phase detection unit 441, thereby correcting the phase of the data. The phase correction unit 442 supplies the corrected data to the amplitude correction unit 444.

The phase correction unit 442 can thus correct the received signal using the channel information obtained from the plurality of frequency samples, thereby being able to correct the phase with higher accuracy as described with reference to Figs. 17 and 18. Therefore, deterioration in the reception sensitivity can be reduced.

Note that this phase correction unit 442 can be implemented by an arbitrary configuration. For example, the phase correction unit 442 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined. For example, the phase correction unit 442 may have a CPU and a memory, and perform the aforementioned processing by the CPU executing a program using the memory.

The envelope generation unit 443 performs processing related to generation of an envelope. For example, the envelope generation unit 443 generates the envelope using the channel information sample m (t) supplied from the inverse transform unit 375. The envelope generation unit 443 also calculates a correction amount K (t) for the amplitude on the basis of the envelope generated. For example, the envelope generation unit 443 calculates the correction amount K (t) for the amplitude as in the following expression (4). The envelope generation unit 443 supplies the correction amount K (t) calculated for the amplitude to the amplitude correction unit 444.

$$K\ (t) \propto \ \left| m\ (t) \right| \qquad \cdots \ (4)$$

As described above, the envelope generation unit 443 detects the correction amount for the amplitude by using the channel information obtained from the plurality of frequency samples. The correction amount can be calculated with higher accuracy by properly selecting these frequency samples.

Note that this envelope generation unit 443 can be implemented by an arbitrary configuration. For example, the envelope generation unit 443 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined. For example, the envelope generation unit 443 may have a CPU and a memory, and perform the aforementioned processing by the CPU executing a program using the memory.

The amplitude correction unit 444 performs processing related to amplitude correction. For example, on the basis of the correction amount K (t) for the amplitude supplied from the envelope generation unit 443, the amplitude correction unit 444 multiplies the data supplied from the phase correction unit 442 (data after the phase correction) by the correction amount K (t), thereby correcting the amplitude of the data. The amplitude correction unit 444 supplies the corrected data to the integration unit 378. The combining performed while multiplying the data by the correction amount K (t) in such a manner can realize maximum ratio combining, whereby favorable signal characteristics can be obtained.

The amplitude correction unit 444 can thus correct the received signal using the channel information obtained from the plurality of significant frequency samples, thereby being able to correct the amplitude with higher accuracy as described with reference to Figs. 17 and 18. Therefore, even for a low SNR received signal, deterioration in the reception sensitivity can be reduced.

Note that this amplitude correction unit 444 can be implemented by an arbitrary configuration. For example, the amplitude correction unit 444 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined. For example, the amplitude correction unit 444 may have a CPU and a memory, and perform the aforementioned processing by the CPU executing a program using the memory.

Note that the phase detection unit 441 and the phase correction unit 442 may be integrated to form a phase correction unit 451. The phase correction unit 451 calculates the correction amount for the phase of the received signal using the channel information obtained from the plurality of frequency samples and corrects the phase of the received signal using the correction amount, thereby being able to perform the phase correction with higher accuracy and reduce deterioration in the reception sensitivity.

Moreover, the envelope generation unit 443 and the amplitude correction unit 444 may be integrated to form an amplitude correction unit 452. The amplitude correction unit 452 calculates the correction amount for the amplitude of the received signal using the channel information obtained from the plurality of frequency samples and corrects the amplitude of the received signal using the correction amount, thereby being able to perform the amplitude correction with higher accuracy and reduce deterioration in the reception sensitivity.

Moreover, the phase detection unit 441 and the envelope generation unit 443 may be integrated to form a correction information generation unit 453. The correction information generation unit 453 calculates the correction amount for the phase and amplitude of the received signal using the channel information obtained from the plurality of frequency samples. Therefore, the phase and amplitude can be corrected with higher accuracy, and deterioration in the reception sensitivity can be reduced.

Moreover, the phase correction unit 442 and the amplitude correction unit 444 may be integrated to form a correction unit 454. The correction unit 454 corrects the phase and amplitude of the received signal by using the correction amount for the phase and amplitude of the received signal calculated by using the channel information obtained from the plurality of frequency samples. Therefore, the phase and amplitude can be corrected with higher accuracy, and deterioration in the reception sensitivity can be reduced.

<Flow of reception processing>

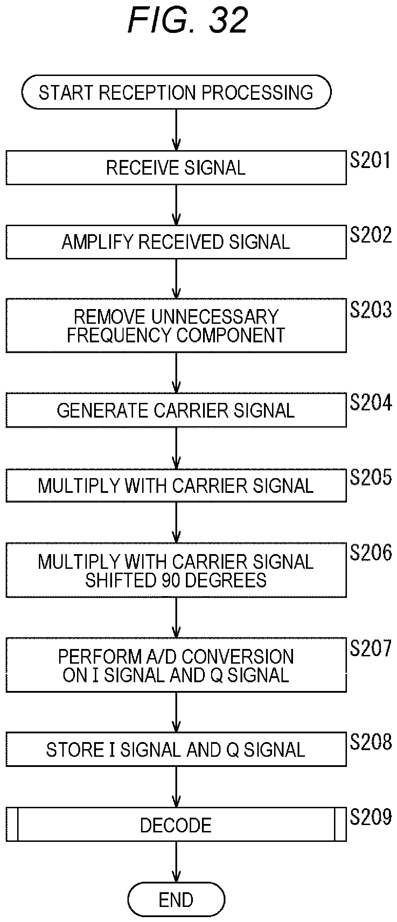

Next, the processing executed by such high sensitivity reception device 102 will be described. An example of the flow of reception processing will be described with reference to a flowchart of Fig. 32.

Once the reception processing is started, in step S201, the low noise amplification unit 352 of the high sensitivity reception device 102 receives a wireless signal via the antenna 351.

In step S202, the low noise amplification unit 352 amplifies a received signal that is the wireless signal received in step S201.

In step S203, the band-pass filter 353 removes an unnecessary frequency component from the received signal amplified in step S202.

In step S204, the carrier oscillation unit 356 oscillates at a predetermined frequency to generate a carrier signal.

In step S205, the multiplication unit 357 generates an I signal by multiplying the received signal by the carrier signal.

In step S206, the 90-degree shifter 358 shifts the phase of the carrier signal by 90 degrees. Then, the multiplication unit 359 generates a Q signal by multiplying the received signal by the carrier signal whose phase is shifted by 90 degrees.

In step S207, the A/D conversion unit 360 performs A/D conversion on each of the I signal generated in step S205 and the Q signal generated in step S206.

In step S208, the memory 361 stores each of digital data of the I signal and digital data of the Q signal generated in step S208.

In step S209, the signal processing unit 362 reads the digital data of the I signal and the digital data of the Q signal from the memory 361 and performs decoding processing to decode them.

The reception processing ends when the reception processing is performed on all the frames.

<Flow of decoding processing>

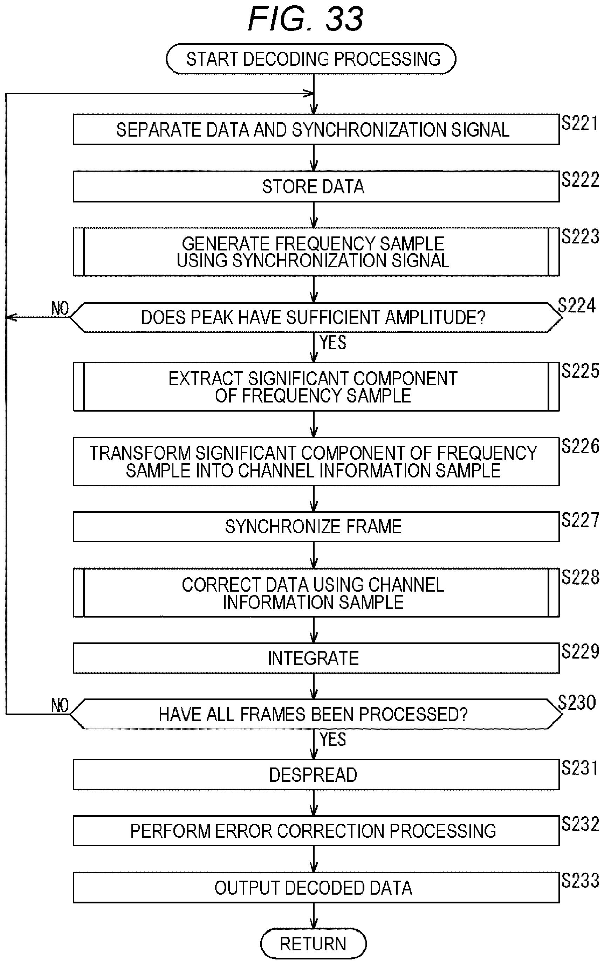

Next, an example of the flow of the decoding processing executed in step S209 of Fig. 32 will be described with reference to a flowchart of Fig. 33.

Once the decoding processing is started, in step S221, the separation unit 371 separates data and a synchronization signal from the received signal. At this stage, no frame synchronization timing has been detected. Accordingly, the processing from step S221 to step S224 is repeated many times until a frame synchronization signal is properly detected. In step S222, the delay unit 372 stores the data separated from the synchronization signal in step S221.

In step S223, the frequency sample generation unit 373 generates frequency samples using the synchronization signal separated from the data in step S221. In step S224, the peak detection unit 422 calculates the amplitudes of the frequency samples detected in large numbers, obtains a peak value from the maximum value of them, and determines whether or not the peak value has a sufficient amplitude. In a case where it can be determined that the peak of the frequency sample has a sufficient amplitude, the processing proceeds to step S225. In a case where it cannot be determined that the peak value has a sufficient amplitude, it is assumed that the frame timing is not correct, whereby the processing returns to step S221 to perform the processing of separating the data and the synchronization signal by changing the frame timing and repeats the processing up to step S224.

In step S225, the significant component extraction unit 374 extracts significant components of the frequency samples generated in step S223. In step S226, the inverse transform unit 375 transforms the significant components of the frequency samples extracted in step S225 into a channel information sample. In step S227, the frame synchronization unit 376 controls the delay unit 372 to synchronize the frames.

In step S228, the correction unit 377 corrects the data of the received signal subjected to frame synchronization in step S227 by using the channel information sample obtained by the processing in step S226.

In step S229, the integration unit 378 integrates the data of the received signal corrected by the processing in step S228.

In step S230, the integration unit 378 determines whether or not all the frames have been processed. In a case where it is determined that an unprocessed frame exists, the processing returns to step S221 so that each processing from step S221 to step S230 is executed on a new frame as a processing target. The processing proceeds to step S231 in a case where each processing from step S221 to step S230 is executed on each frame, and it is determined in step S230 that all the frames have been processed.

In step S231, the despreading unit 379 despreads the data integrated in step S229. Moreover, the LDPC code repeated six times in a frame is integrated to improve the SNR. In step S232, the LDPC 380 performs error correction processing to correct errors as needed. In step S233, the LDPC 380 outputs decoded data.

The decoding processing ends when the processing in step S233 ends, and the processing returns to Fig. 32.

<Flow of frequency sample generation processing>

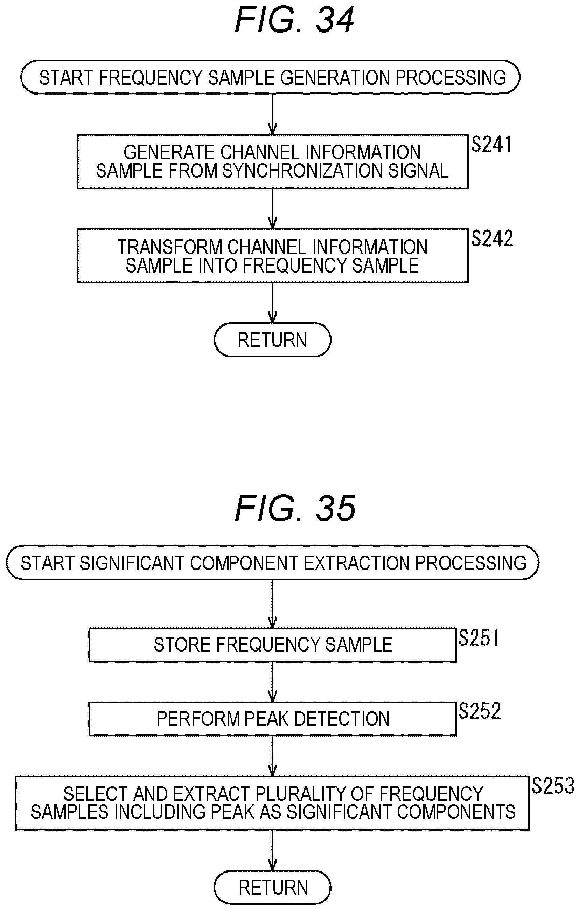

Next, an example of the flow of the frequency sample generation processing executed in step S223 of Fig. 33 will be described with reference to a flowchart of Fig. 34.

Once the frequency sample generation processing is started, in step S241, the known data multiplication unit 411 multiplies the synchronization signal separated from the data in the separation unit 371 by known data to generate a channel information sample. In step S242, the transform unit 412 transforms the channel information sample obtained in step S241 into the frequency samples.

The frequency sample generation processing ends when the processing in step S242 ends, and the processing returns to Fig. 33.

<Flow of significant component extraction processing>

Next, an example of the flow of the significant component extraction processing executed in step S225 of Fig. 33 will be described with reference to a flowchart of Fig. 35.

Once the significant component extraction processing is started, in step S251, the sample and hold unit 421 stores the frequency samples. In step S252, the peak detection unit 422 scans the frequency samples and detects a frequency component having the peak amplitude.

In step S253, the significant component selection unit 423 selects and extracts a plurality of the frequency samples as the significant components so as to include the frequency component having the peak amplitude.

The significant component extraction processing ends when the processing in step S253 ends, and the processing returns to Fig. 33.

<Flow of correction processing>

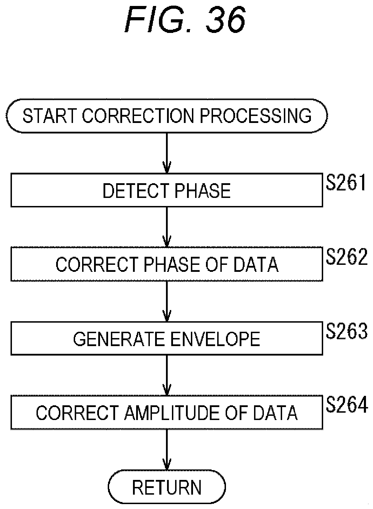

Next, an example of the flow of the correction processing executed in step S228 of Fig. 33 will be described with reference to a flowchart of Fig. 36.

Once the correction processing is started, in step S261, the phase detection unit 441 detects a correction amount for the phase of the data using the channel information obtained from the plurality of frequency samples that is selected as the significant components from among the frequency samples into which the channel information sample of the synchronization signal is converted. In step S262, the phase correction unit 442 corrects the phase of the data using the correction amount.

In step S263, the envelope generation unit 443 generates an envelope using the channel information obtained from the plurality of frequency samples that is selected as the significant components from among the frequency samples into which the channel information sample of the synchronization signal is converted. In step S264, the amplitude correction unit 444 corrects the amplitude of the data using the envelope.

The correction processing ends when the processing in step S264 ends, and the processing returns to Fig. 33.

By executing each processing as described above, the phase and amplitude of the data (received signal) can be corrected using the channel information obtained from the plurality of frequency samples. The use of the plurality of frequency samples enables more accurate reproduction of the state of the frequency deviation of the received signal, so that a more accurate correction amount can be obtained. The correction unit 377 can thus correct the phase and amplitude of the data more accurately. Therefore, the high sensitivity reception device 102 can reduce deterioration in the reception sensitivity.

<3. Second embodiment>

<Influence by multipath>

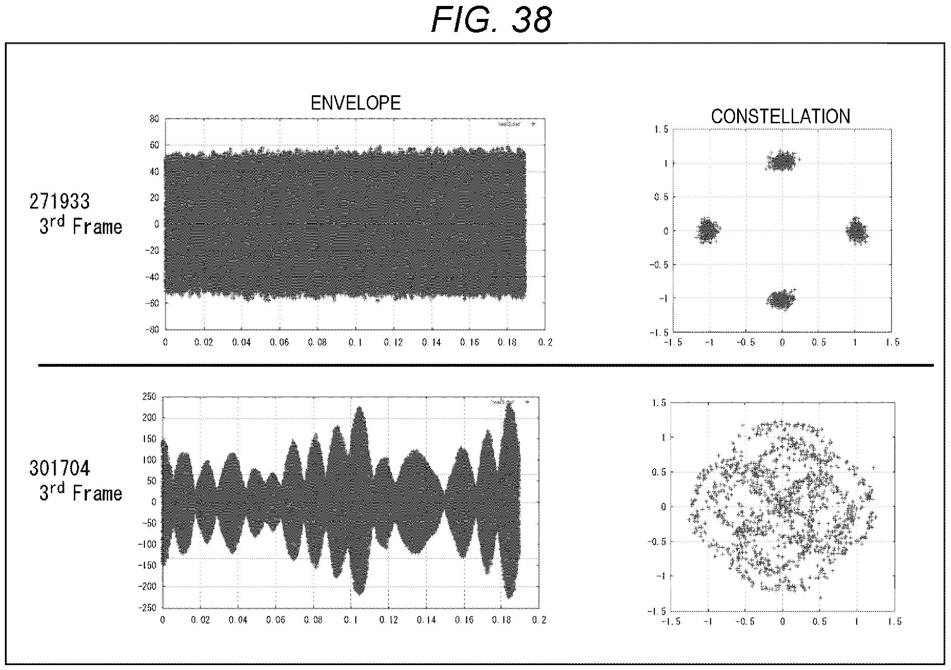

In a case where a signal is transmitted from the transmission device 101 to the high sensitivity reception device 102 along a single path, the received signal can be corrected more accurately by reproducing the vicinity of one peak in the frequency spectrum distribution of the received signal as illustrated in Fig. 28, for example. As a result, the envelope and constellation of the data after correction are as illustrated in the upper figures of Fig. 38, for example, whereby the amplitude is stabilized, the phase shift of each symbol is reduced, and each value can be more easily identified. Therefore, deterioration in the reception sensitivity can be reduced.

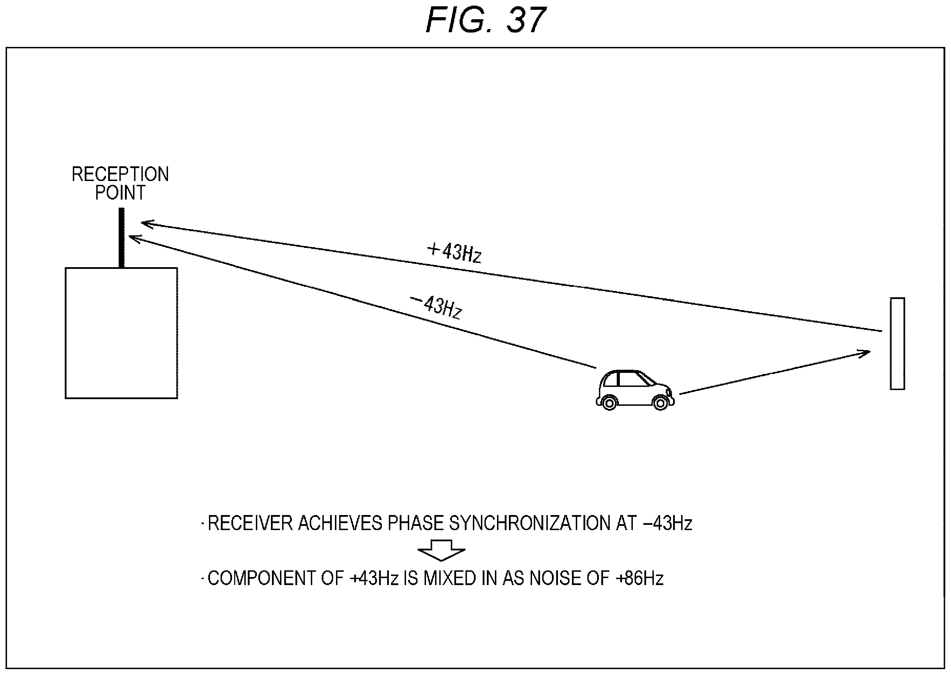

However, there may be a case where a signal is transmitted along a plurality of transmission paths (a case where so-called multipath occurs). For example, in an example of Fig. 37, a vehicle (the transmission device 101) is moving in a direction away from a reception point (the high sensitivity reception device 102), so that a Doppler shift of about -43 Hz occurs in the signal. Moreover, multipath occurs in the example of Fig. 37. That is, the signal transmitted from the transmission device 101 is reflected by a reflecting object, and a signal of about +43 Hz reaches the reception point. Therefore, at the reception point, this signal mixes in as noise of about +86 Hz.

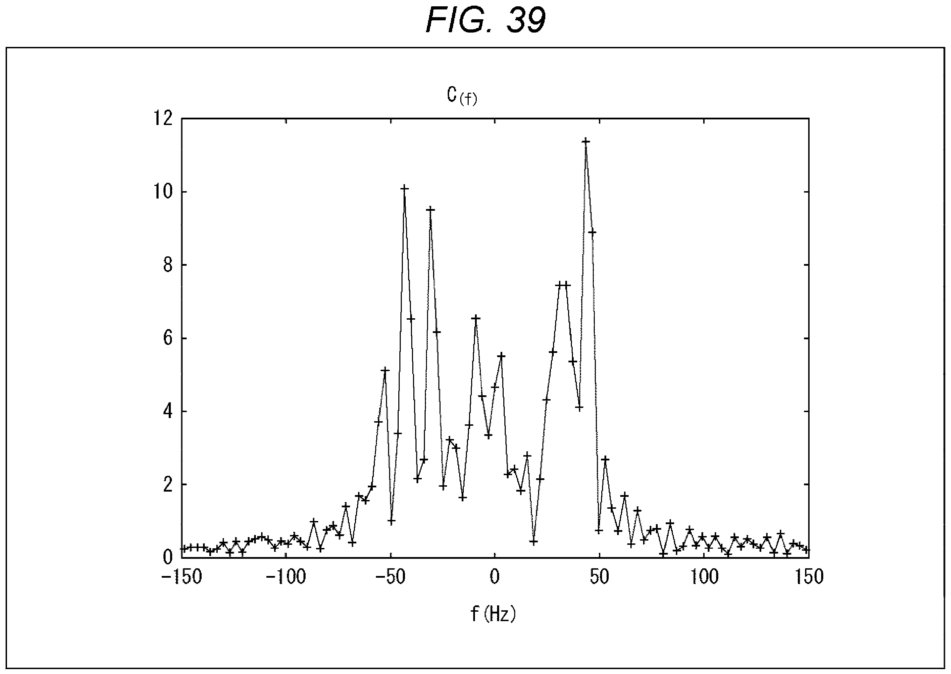

When such multipath occurs, the frequency spectrum distribution can become more complex as in an example of Fig. 39, for example. Such a complex distribution is difficult to reproduce accurately with only one peak sample and its neighboring samples. As a result, the envelope and constellation of the data after correction are as illustrated in the lower figures of Fig. 38, for example, whereby the amplitude is unstable, and the phase shift of each symbol is not reduced, either. It is thus difficult to identify each value, and there has been a possibility of deterioration in the reception sensitivity. Moreover, the phase observed in this case may transition at a high speed and has not been able to be tracked by a conventional PLL at all.

<Selection of a plurality of peak samples>

Now, when selecting a plurality of complex frequency samples, the significant component selection unit 423 may be adapted to be able to select a plurality of peak samples. More diverse frequency spectrum distributions can be reproduced more accurately by enabling selection of the plurality of peak samples and selection of neighboring samples for each peak sample. That is, the frequency spectrum distribution as illustrated in Fig. 39, for example, can be reproduced more accurately by enabling selection of more complex frequency samples.

<Significant component extraction unit>

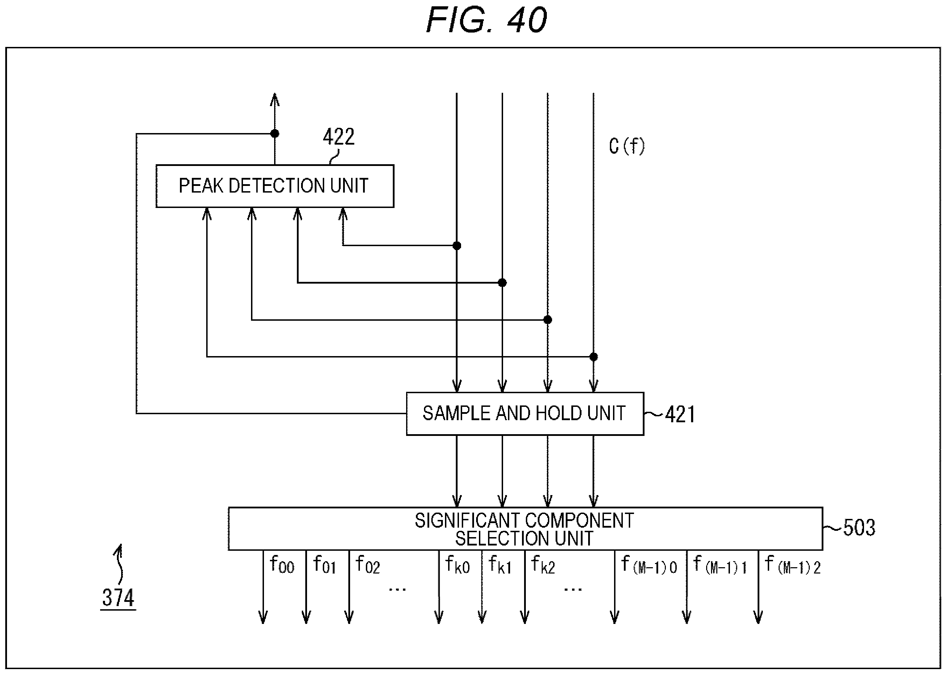

Fig. 40 illustrates an example of the main configuration of the significant component extraction unit 374 in this case. As illustrated in Fig. 40, in this case, the significant component extraction unit 374 has a significant component selection unit 503 instead of the significant component selection unit 423.

The significant component selection unit 503 selects, from among the complex frequency sample group supplied from the sample and hold unit 421, a plurality of complex frequency samples of significant components including a plurality of peak samples and neighboring samples for each thereof.

For example, as illustrated in Fig. 40, the significant component selection unit 503 selects M peak samples ($f_{01}$, ..., $f_{k1}$, ..., $f_{(M-1)1}$) and also neighboring samples ($f_{00}$, ..., $f_{k0}$, ..., $f_{(M-1)0}$, $f_{02}$, ..., $f_{k2}$, ..., $f_{(M-1)2}$) for each peak sample. That is, 3M complex frequency samples are selected.

The significant component selection unit 503 supplies these complex frequency samples selected to the inverse transform unit 375. Note that this significant component selection unit 403 can be implemented by an arbitrary configuration. For example, the significant component selection unit 403 may be configured by a circuit, an LSI, a system LSI, a processor, a module, a unit, a set, a device, an apparatus, a system, or the like. Moreover, a plurality of those may be combined. At that time, for example, the same type of configuration such as a plurality of the circuits, a plurality of the processors, or the like may be combined, or different types of configurations such as the circuit and the LSI may be combined. For example, the significant component selection unit 403 may have a CPU and a memory, and perform the aforementioned processing by the CPU executing a program using the memory.

Note that as in the case of the first embodiment, the method of selecting the complex frequency samples by this significant component selection unit 403 is arbitrary. As described with reference to Figs. 17 and 18, the plurality of the complex frequency samples is only required to be selected such that the complex frequency spectrum distribution of the received signal (synchronization signal) is reproduced with higher accuracy.

That is, the plurality of peak samples to be selected may be selected in any way. For example, a predetermined number of samples may be selected in descending order of spectrum. Moreover, the positional relationship of the peak samples is arbitrary. The position and number of frequency samples for each peak sample are also arbitrary. For example, the position and number of neighboring samples for each peak sample may or need not be set uniform. In particular, in a case where the range of frequency shift due to fading can be estimated (for example, in a case where the moving speed is known to be 100 km/h or less), the maximum value of a possible frequency shift can be calculated. Accordingly, peak samples can be selected within the range of the possible frequency shift.

<Inverse transform unit>

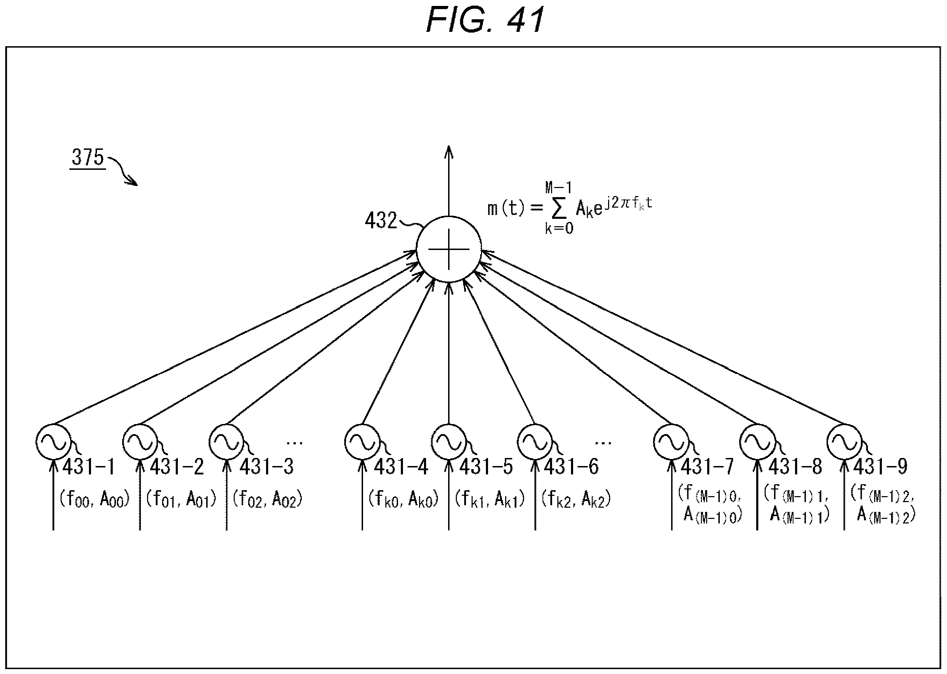

In this case as well, the configuration of the inverse transform unit 375 is similar to that of the first embodiment (Fig. 30). For example, as in the case of A of Fig. 30, it is only required that the oscillators 431 be provided as many as the number of complex frequency samples being input, and their outputs (oscillation signals) be all combined by the combining unit 432. Fig. 41 illustrates an example of the configuration of the inverse transform unit 375 in that case. In the case of the example of Fig. 41, 3M oscillators 431 are provided and each output an oscillation signal corresponding to the frequency and amplitude of the complex frequency sample being input. The combining unit 432 combines the outputs of all the oscillators 431 to generate a channel information sample m (t).

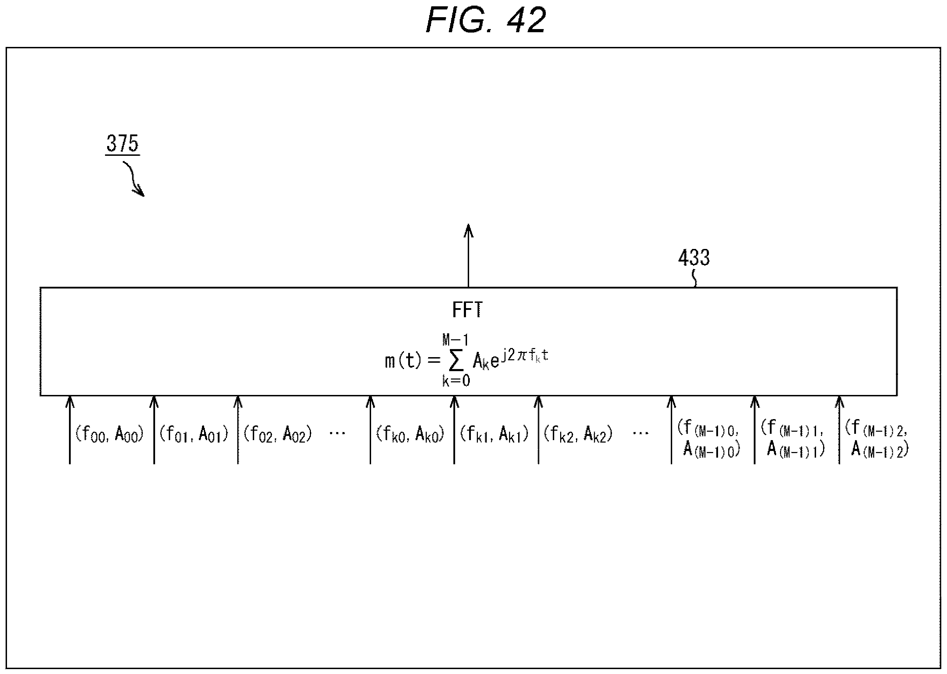

Of course, as in the case of B of Fig. 30, the inverse transform unit 375 may be configured by the inverse Fourier transform unit 433. Fig. 42 illustrates an example of the configuration of the inverse transform unit 375 in that case. In this case as well, as in the first embodiment, the inverse Fourier transform unit 433 performs inverse Fourier transform on all the frequency samples being input to transform them into the channel information sample m (t) in the time domain.

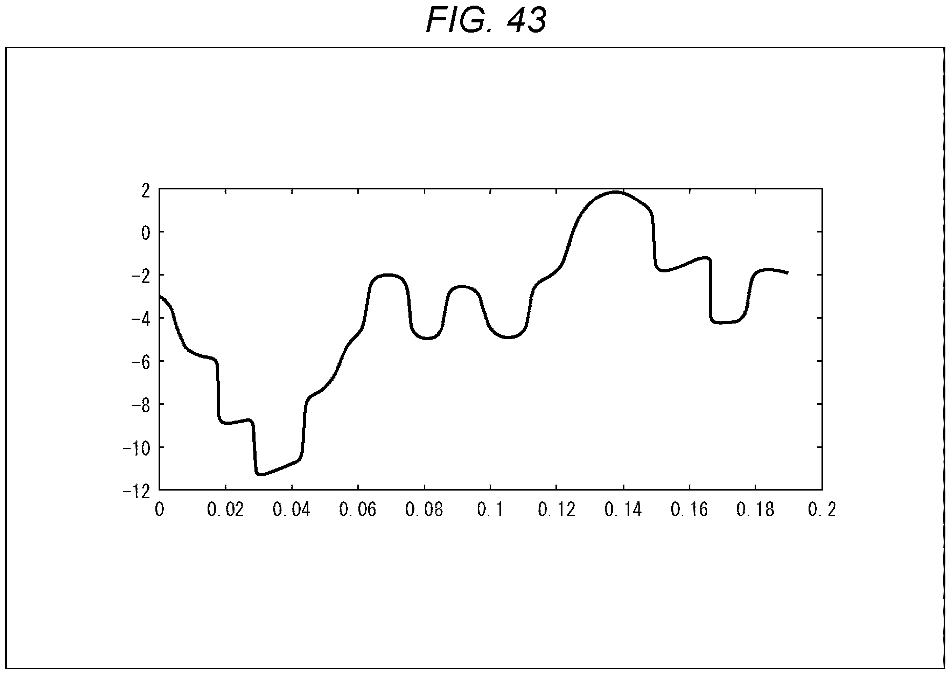

Such transformation allows the phase detection unit 441 to calculate a correction amount θ (t) for the phase of a complex waveform as illustrated in Fig. 43, for example. The phase correction unit 442 can thus correct the phase with higher accuracy even in a case where multipath occurs. Therefore, deterioration in the reception sensitivity can be reduced.

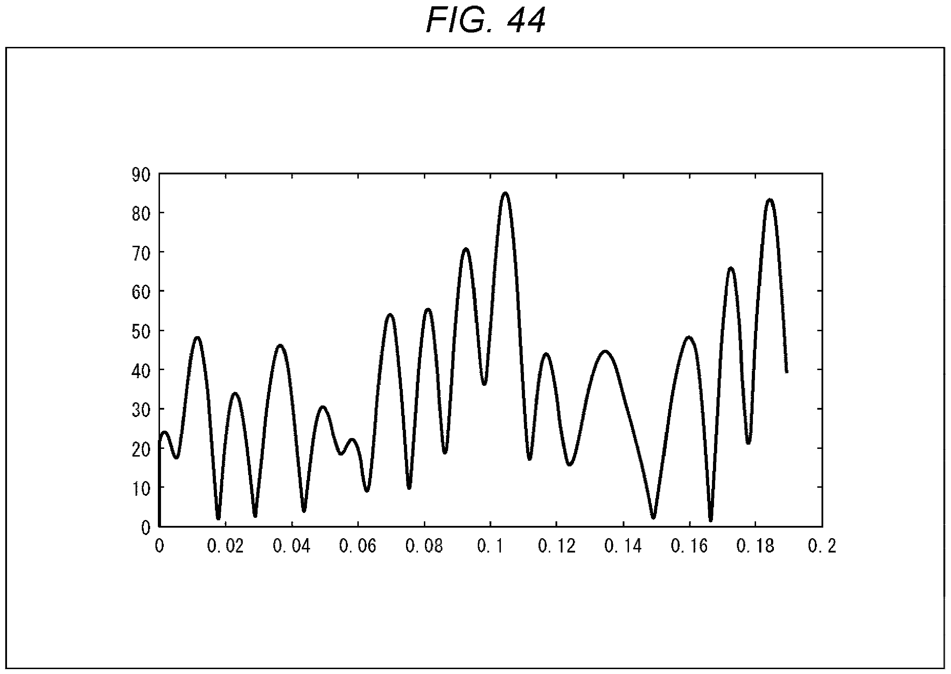

Moreover, the envelope generation unit 443 can generate an envelope of a complex waveform as illustrated in Fig. 44, for example. The phase correction unit 442 can thus correct the amplitude with higher accuracy even in a case where multipath occurs. Therefore, deterioration in the reception sensitivity can be reduced. Moreover, information regarding the envelope acquired in such a manner can be used to obtain channel state information (CSI) for use in error correction with an LDPC code.

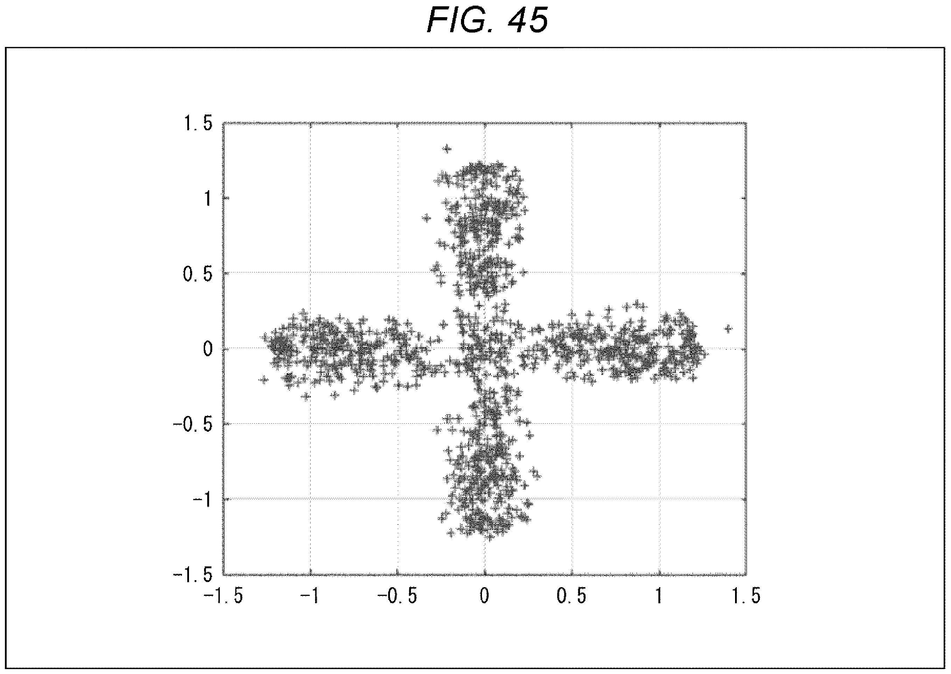

The constellation after phase correction is as illustrated in Fig. 45, for example. Such a signal can be decoded by being integrated and subjected to error correction with the LDPC code. It is understood that the value of each symbol can be identified more easily as compared to the case of the lower figure of Fig. 38. Therefore, deterioration in the reception sensitivity can be reduced.

<Flow of significant component extraction processing>

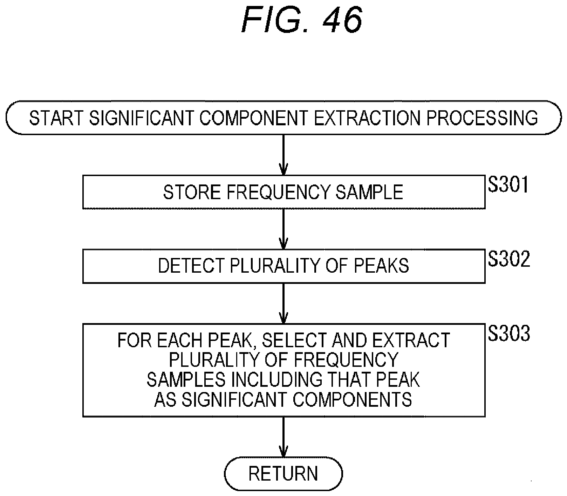

An example of the flow of the significant component extraction processing executed by the significant component extraction unit 374 in this case will be described with reference to a flowchart of Fig. 46.

Once the significant component extraction processing is started, in step S301, the sample and hold unit 421 stores the frequency samples. In step S302, the peak detection unit 422 scans the frequency samples and detects a plurality of frequency components having the peak amplitude. In step S303, for each frequency component having the peak amplitude, the significant component selection unit 503 selects and extracts a plurality of the frequency samples as significant components so as to include the frequency component having the peak amplitude. That is, the significant component selection unit 503 selects and extracts, as the significant components, a plurality of peak samples and neighboring samples for each peak sample.

The significant component extraction processing ends when the processing in step S303 ends, and the processing returns to Fig. 33.

Execution of each processing in such a manner enables more accurate reproduction of a state of more complex frequency deviation of the received signal, so that the high sensitivity reception device 102 can reduce deterioration in the reception sensitivity.

<Correction unit>

Note that although one channel information sample is generated from the plurality of complex frequency samples and is used to perform correction in the above description, the complex frequency samples may be divided into a plurality of groups to each be subjected to data correction and may be combined after the correction.

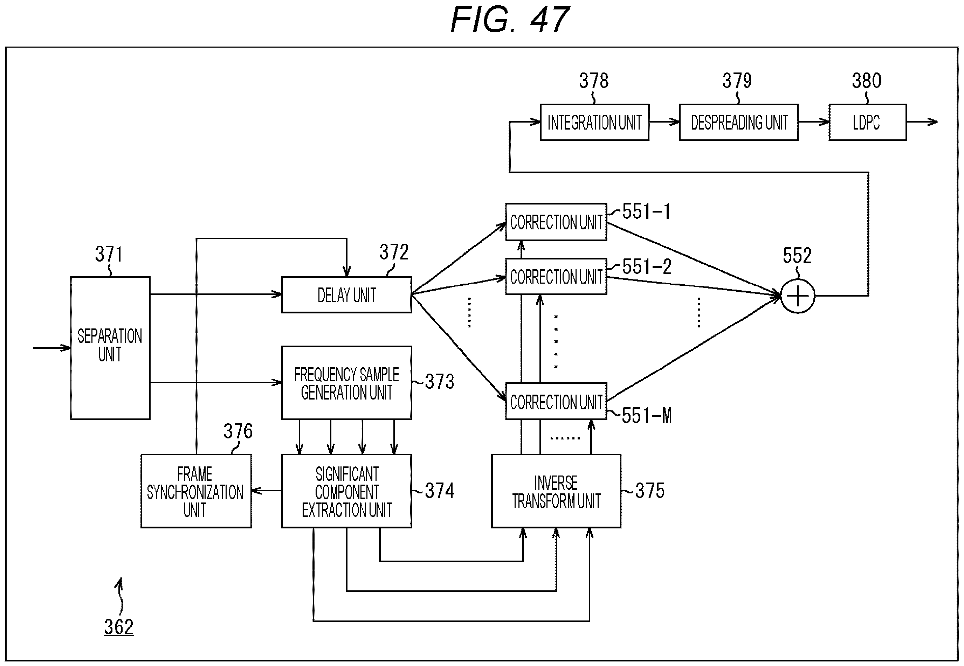

Fig. 47 illustrates an example of the main configuration of the signal processing unit 362 in that case. In this case as well, as illustrated in Fig. 47, the configuration of the signal processing unit 362 is basically similar to that of the first embodiment (Fig. 25), but in this case, instead of the correction unit 377, a plurality of correction units (correction units 551-1 to 551-M) and a combining unit 552 are included. Hereinafter, the correction units 551-1 to 551-M will be referred to as correction units 551 in a case where they need not be distinguished from one another.

In this case, the inverse transform unit 375 generates a plurality of channel information samples from a plurality of complex frequency samples. The channel information samples are generated using different complex frequency samples. The inverse transform unit 375 supplies the channel information samples to the correction units 551.

The correction units 551 correct the phase and amplitude of data supplied from the delay unit 372 on the basis of the different channel information samples. The correction units 551 supply the data after correction to the combining unit 552. The combining unit 552 combines the data after correction supplied from all the correction units 551 and supplies a combined result to the integration unit 378. Such a configuration can also reduce deterioration in the reception sensitivity as in the other cases described above.

<4. Third embodiment>

<Signal format>

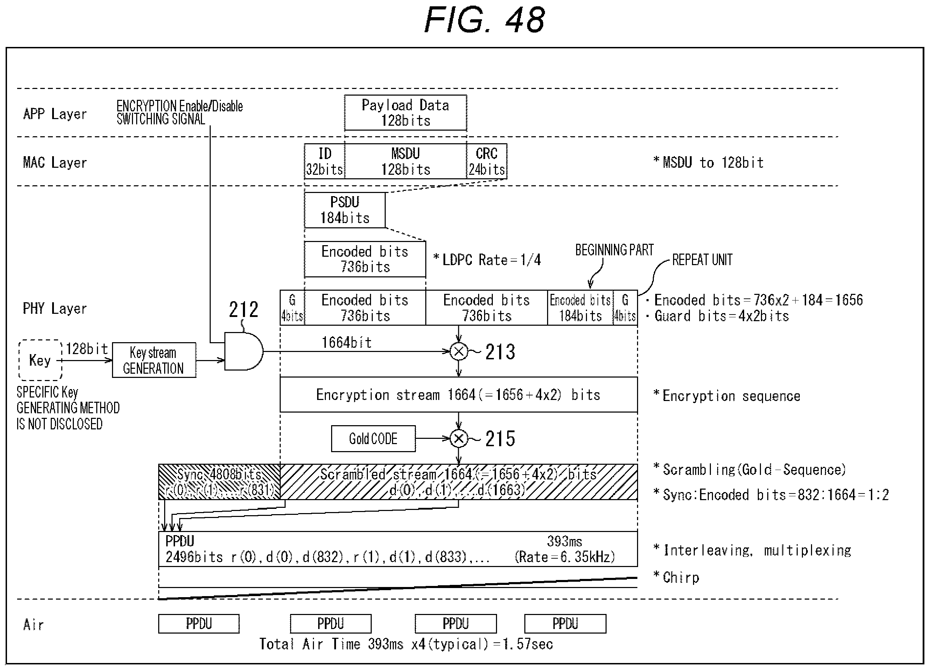

While there has been described the examples in which the unknown information (data) and the known information (synchronization signal) are alternately arranged for each symbol as examples of the signal format, the signal format is arbitrary and is not limited to these examples. For example, in a format of Fig. 48, the modulation rate is reduced to 6.35 Kbps, and the number of repetitions is set such that the length of one frame equals 0.4 seconds or less. In the format of Fig. 48, one frame includes 1664 symbols of data for 4808 symbols of the synchronization signal. In this case, one symbol of the synchronization signal and two symbols of the data are alternately arranged.

That is, the payload data generation unit 202 configures (generates) a 128-bit MSDU by using 128-bit actual data as it is. The 128-bit MSDU is added with a 32-bit ID of the transmission device 101 and a 24-bit CRC code by the ID/CRC addition unit 203, thereby forming a 184-bit unit called a PSDU as the FEC target unit.

The 184-bit PSDU is encoded by the FEC processing unit 204 into an LDPC code with the code length N of 736 bits and the coding rate r of 1/4, and as a result becomes a 736-bit (= 184 × 4/1) LDPC code (encoded bits).

A repeat unit includes the arrangement of the 736-bit LDPC code repeated twice and also 184 bits being a portion of the 736-bit LDPC code.

As the 184 bits being a portion of the 736-bit LDPC code arranged in the repeat unit, the first 184 bits of the 736-bit LDPC code can be adopted, for example. The 184 bits being a portion of the 736-bit LDPC code arranged in the repeat unit can also be selected according to a predetermined optimization pattern, for example.

Guard bits are added (inserted) to the repeat unit by the guard bit addition unit 206. That is, 4-bit guard bits (G) are added to each of the beginning and the end of the repeat unit.

By the addition of the guard bits, the 1656-bit repeat unit becomes a 1664-bit (= 1656 bits + 4 bits × 2) repeat unit.

As the 4-bit guard bits, 4-bit zero or the like can be adopted, for example.

Here, the signal quality at the end of the repeat unit degrades in FFT of the repeat unit performed by the signal processing unit 362 (Fig. 24) of the high sensitivity reception device 102. As a measure against the degradation of the signal quality, the guard bits are added to each of the beginning and the end of the repeat unit.

For the repeat unit, the exclusive OR with a key stream is calculated at the EXOR gate 213, whereby the repeat unit becomes an encryption stream.

The encryption stream includes 1664 bits as with the repeat unit before encryption.

The EXOR gate 215 calculates the exclusive OR between the 1664-bit encryption stream and the Gold code as a scrambling sequence so that the encryption stream is scrambled to be a scrambled stream.

The scrambled stream is a bit sequence d (0), d (1), ..., d (1663) of 1664 bits as with the encryption stream before scrambling.

The sync generation unit 221 generates, for example, a bit sequence r (0), r (1), ..., r (831) as an 832-bit synchronization signal (Sync). Therefore, the ratio of the length of the synchronization signal to that of the scrambled stream is 832 : 1664 = 1 : 2.

The bit sequence r (0), r (1), ... r (831) as the 832-bit synchronization signal and the bit sequence d (0), d (1), ..., d (1663) as the 1664-bit scrambled stream are interleaved by the interleave unit 222. As a result, there is generated a bit sequence r (0), d (0), d (832), r (1), d (1), d (833)... as a 2496-bit presentation protocol data unit (PPDU) in which bits as the synchronization signals are periodically inserted.

Here, the bit sequence r (0), r (1), ... r (831) as the 832-bit synchronization signal and the bit sequence d (0), d (1), ..., d (1663) as the 1664-bit scrambled stream are interleaved according to the following C program, for example. Note that PPDU (n) represents an (n + 1)-th bit from the beginning of the 2496-bit PPDU, and (n % x) represents a remainder obtained by dividing "n" by "x". A symbol "==" means to determine whether or not a calculation result is equal to a specific value. Moreover, in a division calculation with "n" as a dividend (n/3 and the like), the decimal part is rounded down.

```
for(n=0; n<2496; n++) {
    if ( (n % 3) ==0) PPDU(n) =r (n/3);
    if ( (n % 3) ==1) PPDU(n) =d (n/3);
    if ( (n % 3) ==2) PPDU(n) =d (n/3+1);
}
```

The 2496-bit PPDU is subjected to 6.35 kbps $\tau\tau/2$ shift BPSK modulation and further subjected to 400 kHz/s chirp modulation in the modulation unit 223. Then, the 2496-bit PPDU is transmitted as a wireless signal.

In the case where the 6.35 kbps $\tau\tau/2$ shift BPSK modulation is applied to the 2496-bit PPDU, the transmission time of the 2496-bit PPDU is about 393.2 ms. The transmission takes 0.4 seconds or less, which satisfies the ARIB standard for the 920 MHz band.

In the chirp modulation, for example, a frequency shift of about -78.6 kHz is given at the start of transmission of the PPDU with the transmission time of about 393.2 ms. In the 400 kHz/s chirp modulation, the frequency changes linearly at a rate of change of 400 kHz/s, whereby the frequency shift is about +78.6 kHz at the end of transmission of the PPDU with the transmission time of about 393.2 ms.

In a case where the carrier frequency (center frequency) is 925 MHz, for example, the signal frequency of the wireless signal changes linearly from 924.9214 MHz to 925.0786 MHz by the chirp modulation. This chirp modulation improves spectral efficiency even in a case where the modulation rate of 6.35 Kbps is used and thus improves resistance to interference, and the amount of calculation required for detecting synchronization can also be reduced by the characteristic of the chirp modulation.

The transmission device 101 repeatedly transmits the PPDU as a packet four times, for example. In this case, the time required for transmitting the PPDU four times is about 1.57 seconds (= 393.2 ms × 4).

The synchronization signals are distributed throughout the frame so that the high sensitivity reception device 102 can correct the phase and frequency more appropriately even in a case where a phase fluctuation is in the frame, thereby being able to reduce deterioration in the reception sensitivity.

<5. Other>

<Anti-theft system>

While the location notification system 100 has been described above as an example, the present technology can be applied to any communication system. For example, the transmission device 101 may be installed not only on a person but on a mobile object or the like.

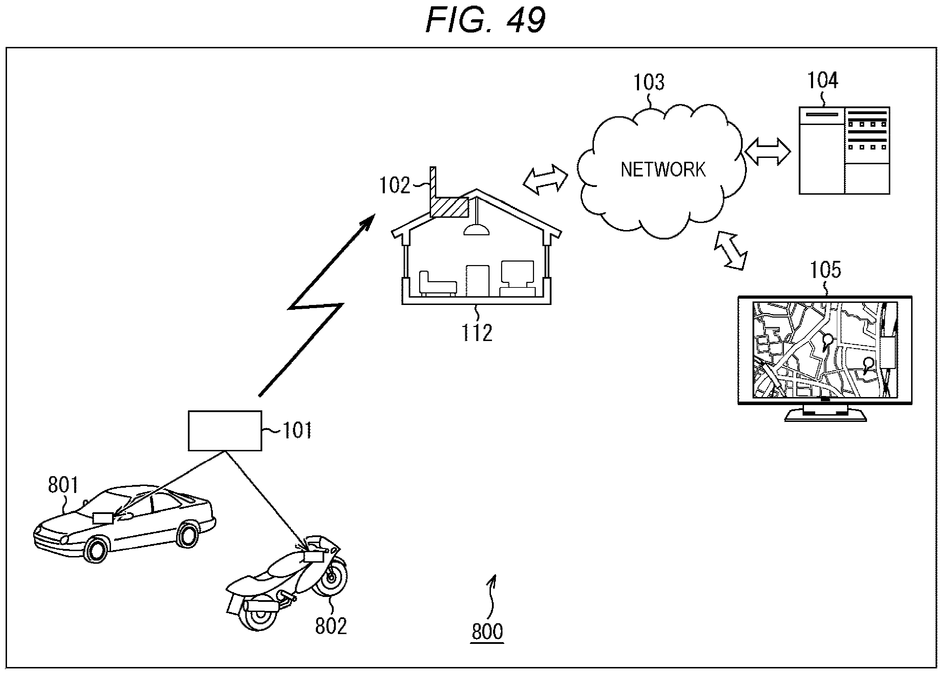

For example, the present technology can also be applied to an anti-theft system 800 for preventing theft of a vehicle, motorcycle, and the like as illustrated in Fig. 49. In the case of the anti-theft system 800, the transmission device 101 is installed on an object whose location is to be monitored by a user such as a vehicle 801 or a motorcycle 802 owned by the user, for example. As in the case of the location notification system 100, the transmission device 101 notifies the high sensitivity reception device 102 of its own location information (that is, location information of the vehicle 801 or the motorcycle 802) as appropriate. That is, as in the case of the location notification system 100, the user can grasp the location of the vehicle 801 or the motorcycle 802 by accessing the server 104 from the terminal device 105. Therefore, the user can grasp the location of the vehicle 801 or the motorcycle 802 even in the event of theft thereof, thereby being able to easily recover the vehicle 801 or the motorcycle 802.

In the case of such an anti-theft system 800 as well, deterioration in the reception sensitivity can be reduced by applying the present technology described above in each embodiment to the transmission device 101 and the high sensitivity reception device 102, whereby the location information of the transmission device (that is, the location information of the vehicle 801 or the motorcycle 802) can be notified to the high sensitivity reception device 102 more accurately. That is, the user can more easily and accurately grasp the location of the vehicle 801 or the motorcycle 802 even in the event of theft thereof.

<Other communication systems>

Note that information to be transmitted and received is arbitrary. For example, the transmission device 101 may transmit transmission information including an image, sound, measurement data, identification information of a device or the like, parameter setting information, control information such as a command, or the like. Moreover, the transmission information may include a plurality of types of information such as, for example, an image and sound, identification information, setting information, and control information, or the like.

Moreover, the transmission device 101 may be adapted to be able to transmit transmission information including information supplied from another device, for example. The transmission device 101 may, for example, be adapted to generate and transmit transmission information including information (sensor output) output from various sensors that perform detection, measurement, or the like of arbitrary variables or an amount of change thereof, the arbitrary variables being an image, light, brightness, saturation, electricity, sound, vibration, acceleration, velocity, angular velocity, force, a temperature (not a temperature distribution), humidity, a distance, an area, a volume, a shape, a flow rate, time, a period, magnetism, a chemical substance, an odor, or the like.

That is, the present technology can be applied to a system used for an arbitrary purpose such as, for example, three-dimensional shape measurement, space measurement, object observation, movement/deformation observation, biological observation, authentication processing, monitoring, auto-focusing, imaging control, illumination control, tracking processing, input/output control, electronic apparatus control, actuator control, or the like.

Moreover, the present technology can be applied to a system in an arbitrary field such as, for example, transportation, medical care, crime prevention, agriculture, livestock industry, mining, beauty care, factories, home appliances, weather, nature monitoring, or the like. For example, the present technology can also be applied to a system that captures an image provided for viewing using a digital camera, a portable device with a camera function, or the like. Moreover, for example, the present technology can also be applied to a system for use in transportation such as an on-board system that images the front, back, periphery, interior, or the like of a vehicle in order to perform safe driving such as automatic stop, recognize the condition of a driver, or the like, a monitoring camera system that monitors a moving vehicle or road, a range system that measures the distance between vehicles, or the like. Furthermore, for example, the present technology can also be applied to a system for use in security using a surveillance camera for crime prevention, a camera for person authentication, or the like. Moreover, for example, the present technology can also be applied to a system for use in sports using various sensors and the like that can be used for sports and the like such as a wearable camera or the like. Furthermore, for example, the present technology can also be applied to a system for use in agriculture using various sensors such as a camera that monitors the condition of fields and crops or the like. Moreover, for example, the present technology can also be applied to a system for use in livestock industry using various sensors for monitoring the condition of livestock such as pigs, cattle, and the like. Furthermore, the present technology can also be applied to a system that monitors conditions of nature such as volcanoes, forests, oceans, or the like, for example, a weather observation system that observes weather, temperature, humidity, wind speed, daylight hours, or the like, for example, a system that observes the ecology of wildlife such as birds, fish, reptiles, amphibians, mammals, insects, plants, and the like.

<Communication device>

Moreover, the specifications of the wireless signal and information to be transmitted and received are arbitrary. Furthermore, while there has been described above the example in which the present technology is applied to the transmission device 101 and the high sensitivity reception device 102, the present technology can also be applied to an arbitrary transmission device, an arbitrary reception device, and an arbitrary transceiver device. That is, the present technology can be applied to an arbitrary communication device or communication system.

<Computer>

The series of processings described above can be executed by hardware or software. Moreover, some of the processings can be executed by hardware while the other processings can be executed by software. In a case where the series of processings is executed by software, a program configuring the software is installed on a computer. Here, the computer includes a computer incorporated in dedicated hardware, a general-purpose personal computer, for example, that can execute various functions by installing various programs, or the like.

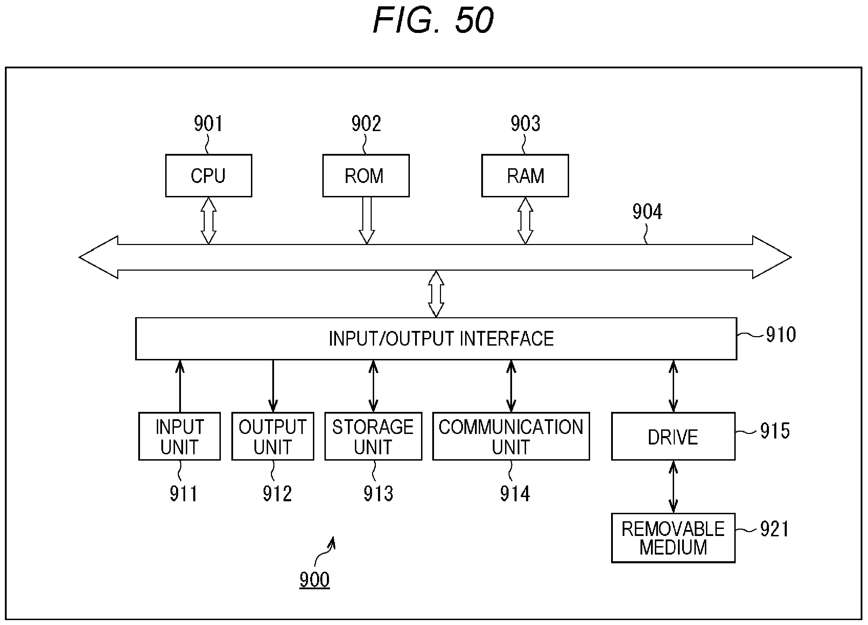

Fig. 50 is a block diagram illustrating an example of the configuration of hardware of a computer that executes the series of processings described above according to a program.

In a computer 900 illustrated in Fig. 50, a central processing unit (CPU) 901, a read only memory (ROM) 902, and a random access memory (RAM) 903 are mutually connected via a bus 904.

Also connected to the bus 904 is an input/output interface 910. An input unit 911, an output unit 912, a storage unit 913, a communication unit 914, and a drive 915 are connected to the input/output interface 910.

The input unit 911 includes, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, a non-volatile memory, and the like. The communication unit 914 includes, for example, a network interface. The drive 915 drives a removable medium 921 such as a magnetic disk, an optical disk, a magneto-optical disk, a semiconductor memory, or the like.

In the computer configured as described above, the series of processings described above is performed by, for example, the CPU 901 loading the program stored in the storage unit 913 to the RAM 903 via the input/output interface 910 and the bus 904 and executing the program. The RAM 903 also stores as appropriate data that is necessary for the CPU 901 to execute various processings and the like.

The program executed by the computer (CPU 901) can for example be recorded in the removable medium 921 as a package medium or the like for application. In that case, the program can be installed in the storage unit 913 via the input/output interface 910 by placing the removable medium 921 in the drive 915. The program can also be provided via a wired or wireless transmission medium such as a local area network, the Internet, or digital satellite broadcasting. In that case, the program can be received by the communication unit 914 and installed in the storage unit 913. Besides, this program can also be installed in advance in the ROM 902 or the storage unit 913.

<Supplement>

The embodiments of the present technology are not limited to the above described embodiments but can be modified in various ways without departing from the scope of the present technology.

For example, the present technology can be implemented as any configuration that configures a device or system such as, for example, a processor as system large scale integration (LSI) or the like, a module using a plurality of processors or the like, a unit using a plurality of modules or the like, a set in which a unit is further added with another function, and the like (that is, a configuration forming a part of a device).

Note that in the present specification, the system refers to the assembly of a plurality of components (such as devices and modules (parts)) where it does not matter whether or not all the components are housed in the same housing. Accordingly, a plurality of devices housed in separate housings and connected through a network as well as a device with a plurality of modules housed in a single housing are both a system.

Furthermore, for example, the configuration described as one device (or processing unit) may be divided and configured as a plurality of devices (or processing units). Conversely, the configurations described as a plurality of devices (or processing units) above may be brought together and configured as one device (or processing unit). Furthermore, it goes without saying that a configuration other than those described above may be added to the configuration of each device (or each processing unit). Moreover, a part of the configuration of one device (or processing unit) may be included in the configuration of another device (or another processing unit) as long as the configuration or operation of the system as a whole is substantially the same.

Furthermore, for example, the present technology can adopt the configuration of cloud computing in which a single function is shared and processed collaboratively among a plurality of devices through a network.

Furthermore, for example, the program described above can be executed on an arbitrary device. In that case, the device need only be adapted to have a necessary function (functional block or the like) to be able to obtain necessary information.

Furthermore, for example, each step described in the aforementioned flowcharts can be executed by a single device or can be shared and executed by a plurality of devices. Moreover, in a case where a single step includes a plurality of processings, the plurality of processings included in the single step can be executed by a single device or can be shared and executed by a plurality of devices. In other words, the plurality of processings included in the single step can be executed as processings in a plurality of steps. Conversely, the processings described as a plurality of steps can be collectively executed as a single step.

As for the program executed by the computer, the processings in the steps for writing the program may be executed chronologically according to the order described in the present specification, executed in parallel, or executed individually at necessary timings such as when a call is made. That is, the processings in the steps may be executed in an order different from the order described above as long as no contradiction arises. Moreover, the processing in the step for writing this program may be executed in parallel with processing of another program or may be executed in combination with processing of another program.

The plurality of present technologies described in the present specification can each be implemented independently and solely as long as no contradiction arises. Of course, any number of the plurality of present technologies can be implemented in combination. For example, some or all of the present technology described in any of the embodiments can be implemented in combination with some or all of the present technology described in another one of the embodiments. Furthermore, some or all of any of the present technologies described above can be implemented in combination with another technology not described above. The scope of the invention is solely limited by the appended claims.

REFERENCE SIGNS LIST

100 Location notification system
101 Transmission device
102 High sensitivity reception device
103 Network
104 Server
111 Elderly person
201 GNSS signal reception unit
202 Payload data generation unit
203 ID/CRC addition unit
204 FEC processing unit
205 Repeating unit
206 Guard bit addition unit
211 Key stream generation unit
212 AND gate
213 EXOR gate
214 Gold code generation unit
215 EXOR gate
221 Sync generation unit
222 Interleave unit
223 Modulation unit
224 Frequency/timing control unit
251 Key generation unit
252 Nonce generation unit
253 Block encryption unit

254   P/S conversion unit
352   Low noise amplification unit
355   GNSS reception unit
356   Carrier oscillation unit
362   Signal processing unit
371   Separation unit
372   Delay unit
373   Frequency sample generation unit
374   Significant component extraction unit
375   Inverse transform unit
376   Frame synchronization unit
377   Correction unit
378   Integration unit
379   Despreading unit
380   LDPC
401   Switch
411   Known data multiplication unit
412   Transform unit
421   Sample and hold unit
422   Peak detection unit
423   Significant component selection unit
431   Oscillator
432   Combining unit
433   Inverse Fourier transform unit
441   Phase detection unit
442   Phase correction unit
443   Envelope generation unit
444   Amplitude correction unit
451   Phase correction unit
452   Amplitude correction unit
453   Correction information generation unit
454   Correction unit
503   Significant component selection unit
551   Correction unit
552   Combining unit
800   Anti-theft system

**Claims**

**1.** A signal processing apparatus (362) comprising
a correction unit (377) that is configured to correct a phase and/or an amplitude of a received signal using channel information obtained from a plurality of frequency samples being significant components by being extracted from frequency samples of known information included in the received signal, wherein the correction unit (377) comprises:

   i) a phase detection unit (441) that is configured to calculate a correction amount $\theta$ (t) for the phase of the received signal by using the obtained channel information, and
   a phase correction unit (442) that is configured to correct the phase of the received signal by multiplying the received signal by a signal $e^{-j\theta(t)}$

and/or
ii) an envelope generation unit (443) that is configured to calculate a correction amount K (t) for the amplitude of the received signal on the basis of an envelope generated by using the obtained channel information, and
an amplitude correction unit (444) that is configured to correct the amplitude of the received signal by multiplying the received signal by the correction amount K (t).

**2.** The signal processing apparatus according to claim 1, wherein
the correction unit (377) is configured to correct the received signal using channel information obtained by performing inverse Fourier transform on the plurality of frequency samples being the significant components and/or by combining an oscillation signal with frequency and amplitude of each of the plurality of frequency samples being the significant components.

3. The signal processing apparatus according to any one of claims 1 to 2, wherein
the correction unit (377) is configured to correct the received signal using channel information obtained from a peak sample that is a frequency sample with an amplitude larger than that of surroundings and a neighboring sample that is a frequency sample around the peak sample, in particular a frequency sample on each of both sides of the peak sample.

4. The signal processing apparatus according to claim 3, wherein
the correction unit (377) is configured to correct the received signal using channel information obtained from a plurality of the peak samples and the neighboring sample for each of the peak samples, in particular obtained from a predetermined number of the peak samples selected in descending order of amplitude, and the neighboring sample for each of the peak samples.

5. The signal processing apparatus according to claim 4, further comprising:

   a plurality of the correction units (551-1, 551-2,..., 551-M); and
   a combining unit (552) that is configured to combine correction results of the correction units, wherein
   the correction units are configured to correct the received signal using peak samples different from one another and a neighboring sample for the peak samples.

6. The signal processing apparatus according to any one of claims 1 to 5, wherein
the received signal has the known information regularly inserted between unknown information.

7. The signal processing apparatus according to claim 6, wherein
the received signal has a configuration in which a frame of a predetermined length is repeated with data in units of symbols being arranged in each frame, in particular a symbol of a synchronization signal, which is known, inserted between symbols of the data that is unknown in each frame.

8. The signal processing apparatus according to claim 7, wherein
the received signal has a configuration in which one symbol of the data that is unknown and one symbol of the synchronization signal that is known are alternately arranged.

9. The signal processing apparatus according to claim 7 or 8, wherein
the received signal has a configuration in which two symbols of the data that is unknown and one symbol of the synchronization signal that is known are alternately arranged.

10. The signal processing apparatus according to claim 7, wherein
a guard bit including an unnecessary symbol is attached at both ends of each frame of the received signal.

11. The signal processing apparatus according to any one of claims 1 to 10, further comprising:

   a separation unit (371) that is configured to separate a symbol of data being unknown and a symbol of a synchronization signal being known that are included in the received signal;
   a generation unit (373) that is configured to generate channel information from the symbol of the synchronization signal being known that is separated from the data being unknown by the separation unit;
   a transform unit (412) that is configured to transform the channel information generated by the generation unit into frequency samples;
   an extraction unit (374) that is configured to extract a plurality of frequency samples as significant components from the frequency samples transformed by the transform unit; and
   an inverse transform unit (375) that is configured to inversely transform the plurality of frequency samples as the significant components extracted by the extraction unit into channel information.

12. The signal processing apparatus according to claim 11, further comprising
a frame synchronization unit (376) that is configured to achieve synchronization in units of frames of the received signal using the frequency samples transformed by the transform unit.

13. The signal processing apparatus according to any one of claims 1 to 12, further comprising
an integration unit (378) that is configured to integrate the received signal corrected by the correction unit.

14. A signal processing method including
correcting a phase and/or an amplitude of a received signal using channel information obtained from a plurality of frequency samples being significant components by being extracted from frequency samples of known information included in the received signal, wherein the step of correcting comprises:

i) calculating a correction amount $\theta$ (t) for the phase of the received signal by using the obtained channel information, and
correcting the phase of the received signal by multiplying the received signal by a signal $e^{-j\theta(t)}$

and/or
ii) calculating a correction amount K (t) for the amplitude of the received signal on the basis of an envelope generated by using the obtained channel information, and
correcting the amplitude of the received signal by multiplying the received signal by the correction amount K (t).

15. A computer program comprising instructions which, when the program is executed by a computer, cause the computer to carry out the steps of the method of claim 14.


**Patentansprüche**

1. Signalverarbeitungsvorrichtung (362), die aufweist:

eine Korrektureinheit (377), die dazu ausgelegt ist, eine Phase und/oder eine Amplitude eines empfangenen Signals unter Verwendung von Kanalinformation, die aus einer Mehrzahl von Frequenzabtastwerten, die wesentliche Komponenten sind, erlangt wird, indem sie aus Frequenzabtastwerten bekannter Information, die in dem empfangenen Signal enthalten ist, extrahiert wird, zu korrigieren, wobei die Korrektureinheit (377) aufweist:
i) eine Phasendetektionseinheit (441), die dazu ausgelegt ist, einen Korrekturbetrag $\theta(t)$ für die Phase des empfangenen Signals durch Verwenden der erlangten Kanalinformation zu berechnen, und
eine Phasenkorrektureinheit (442), die dazu ausgelegt ist, die Phase des empfangenen Signals durch Multiplizieren des empfangenen Signals mit einem Signal $e^{-j\theta(t)}$ zu korrigieren;

und/oder
ii) eine Hüllkurvenerzeugungseinheit (443), die dazu ausgelegt ist, einen Korrekturbetrag K(t) für die Amplitude des empfangenen Signals auf Grundlage einer Hüllkurve, die durch Verwenden der erlangten Kanalinformation erzeugt wird, zu berechnen, und
eine Amplitudenkorrektureinheit (444), die dazu ausgelegt ist, die Amplitude des empfangenen Signals durch Multiplizieren des empfangenen Signals mit dem Korrekturbetrag K(t) zu korrigieren.

2. Signalverarbeitungsvorrichtung nach Anspruch 1, wobei
die Korrektureinheit (377) dazu ausgelegt ist, das empfangene Signal unter Verwendung von Kanalinformation zu korrigieren, die durch das Durchführen einer inversen Fourier-Transformation an der Mehrzahl von Frequenzabtastwerten, die die wesentlichen Komponenten sind, und/oder durch das Kombinieren eines Oszillationssignals mit Frequenz und Amplitude jeder der Mehrzahl von Frequenzabtastwerten, die die wesentlichen Komponenten sind, erlangt wird.

3. Signalverarbeitungsvorrichtung nach einem der Ansprüche 1 bis 2, wobei
die Korrektureinheit (377) dazu ausgelegt ist, das empfangene Signal unter Verwendung von Kanalinformation zu korrigieren, die aus einem Spitzenabtastwert, der ein Frequenzabtastwert mit einer Amplitude ist, die größer als die von umgebenden ist, und einem benachbarten Abtastwert, der ein Frequenzabtastwert um den Spitzenabtastwert herum ist, insbesondere ein Frequenzabtastwert auf jeder der beiden Seiten des Spitzenabtastwerts, erlangt wird.

4. Signalverarbeitungsvorrichtung nach Anspruch 3, wobei
die Korrektureinheit (377) dazu ausgelegt ist, das empfangene Signal unter Verwendung von Kanalinformation zu korrigieren, die aus einer Mehrzahl der Spitzenabtastwerte und dem benachbarten Abtastwert für jeden der Spitzenabtastwerte erlangt wird, insbesondere aus einer vorbestimmten Anzahl der Spitzenabtastwerte, die in absteigender Reihenfolge der Amplitude ausgewählt sind, und dem benachbarten Abtastwert für jeden der Spitzenabtastwerte erlangt wird.

5. Signalverarbeitungsvorrichtung nach Anspruch 4, die ferner aufweist:

   eine Mehrzahl der Korrektureinheiten (551-1, 551-2,..., 551-M); und
   eine Kombiniereinheit (552), die dazu ausgelegt ist, Korrekturergebnisse der Korrektureinheiten zu kombinieren, wobei
   die Korrektureinheiten dazu ausgelegt sind, das empfangene Signal unter Verwendung von sich unterscheidenden Spitzenabtastwerten und einem benachbarten Abtastwert für die Spitzenabtastwerte zu korrigieren.

6. Signalverarbeitungsvorrichtung nach einem der Ansprüche 1 bis 5, wobei
   das empfangene Signal die bekannte Information regelmäßig zwischen unbekannter Information eingefügt aufweist.

7. Signalverarbeitungsvorrichtung nach Anspruch 6, wobei
   das empfangene Signal eine Konfiguration aufweist, in der ein Rahmen einer vorbestimmten Länge mit Daten in Einheiten von Symbolen, die in jedem Rahmen angeordnet sind, wiederholt wird, insbesondere mit einem Symbol eines Synchronisationssignals, das bekannt ist, zwischen Symbolen der Daten, die unbekannt sind, in jedem Rahmen eingefügt.

8. Signalverarbeitungsvorrichtung nach Anspruch 7, wobei
   das empfangene Signal eine Konfiguration aufweist, in der ein Symbol der Daten, die unbekannt sind, und ein Symbol des Synchronisationssignals, das bekannt ist, abwechselnd angeordnet sind.

9. Signalverarbeitungsvorrichtung nach Anspruch 7 oder 8, wobei
   das empfangene Signal eine Konfiguration aufweist, in der zwei Symbole der Daten, die unbekannt sind, und ein Symbol des Synchronisationssignals, das bekannt ist, abwechselnd angeordnet sind.

10. Signalverarbeitungsvorrichtung nach Anspruch 7, wobei
    ein Schutzbit, das ein nicht erforderliches Symbol enthält, an beiden Enden jedes Rahmens des empfangenen Signals angefügt ist.

11. Signalverarbeitungsvorrichtung nach einem der Ansprüche 1 bis 10, die ferner aufweist:

    eine Trenneinheit (371), die dazu ausgelegt ist, ein Symbol von Daten, die unbekannt sind, und ein Symbol eines Synchronisationssignals, das bekannt ist, die in dem empfangenen Signal enthalten sind, zu trennen;
    eine Erzeugungseinheit (373), die dazu ausgelegt ist, Kanalinformation aus dem Symbol des bekannten Synchronisationssignals, das durch die Trenneinheit von den Daten, die unbekannt sind, getrennt wird, zu erzeugen;
    eine Transformationseinheit (412), die dazu ausgelegt ist, die von der Erzeugungseinheit erzeugte Kanalinformation in Frequenzabtastwerte zu transformieren;
    eine Extraktionseinheit (374), die dazu ausgelegt ist, eine Mehrzahl von Frequenzabtastwerten als wesentliche Komponenten aus den von der Transformationseinheit transformierten Frequenzabtastwerten zu extrahieren; und
    eine Inverstransformationseinheit (375), die dazu ausgelegt ist, die Mehrzahl von Frequenzabtastwerten als die von der Extraktionseinheit extrahierten wesentlichen Komponenten invers in Kanalinformation zu transformieren.

12. Signalverarbeitungsvorrichtung nach Anspruch 11, die ferner aufweist:
    eine Rahmensynchronisationseinheit (376), die dazu ausgelegt ist, eine Synchronisation in Einheiten von Rahmen des empfangenen Signals unter Verwendung der von der Transformationseinheit transformierten Frequenzabtastwerte zu erreichen.

13. Signalverarbeitungsvorrichtung nach einem der Ansprüche 1 bis 12, die ferner aufweist:
    eine Integrationseinheit (378), die dazu ausgelegt ist, das von der Korrektureinheit korrigierte empfangene Signal zu integrieren.

14. Signalverarbeitungsverfahren, das umfasst:
    Korrigieren einer Phase und/oder einer Amplitude eines empfangenen Signals unter Verwendung von Kanalinformation, die aus einer Mehrzahl von Frequenzabtastwerten, die wesentliche Komponenten sind, erlangt wird, indem sie aus Frequenzabtastwerten bekannter Information, die in dem empfangenen Signal enthalten ist, extrahiert wird, wobei der Schritt des Korrigierens umfasst:

   i) Berechnen eines Korrekturbetrags $\theta(t)$ für die Phase des empfangenen Signals durch Verwenden der erlangten Kanalinformation und
   Korrigieren der Phase des empfangenen Signals durch Multiplizieren des empfangenen Signals mit einem Signal $e^{-j\theta(t)}$

und/oder
   ii) Berechnen eines Korrekturbetrags K(t) für die Amplitude des empfangenen Signals auf Grundlage einer Hüllkurve, die durch Verwenden der erlangten Kanalinformation erzeugt wird, und
   Korrigieren der Amplitude des empfangenen Signals durch Multiplizieren des empfangenen Signals mit dem Korrekturbetrag K(t).

15. Computerprogramm, das Anweisungen aufweist, die, wenn das Programm von einem Computer ausgeführt wird, bewirken, dass der Computer die Schritte des Verfahrens nach Anspruch 14 durchführt.


## Revendications

1. Appareil (362) de traitement de signal comportant une unité (377) de correction qui est configurée pour corriger une phase et/ou une amplitude d'un signal reçu à l'aide d'informations de canal obtenues à partir d'une pluralité d'échantillons de fréquence qui sont des composantes significatives en étant extraites d'échantillons de fréquence d'informations connues comprises dans le signal reçu, l'unité (377) de correction comportant :

   i) une unité (441) de détection de phase qui est configurée pour calculer une quantité de correction $\theta(t)$ pour la phase du signal reçu en utilisant les informations de canal obtenues, et
   une unité (442) de correction de phase qui est configurée pour corriger la phase du signal reçu en multipliant le signal reçu par un signal $e^{-j\theta(t)}$ ;
   et/ou
   ii) une unité (443) de génération d'enveloppe qui est configurée pour calculer une quantité de correction K(t) pour l'amplitude du signal reçu sur la base d'une enveloppe générée en utilisant les informations de canal obtenues, et
   une unité (444) de correction d'amplitude qui est configurée pour corriger l'amplitude du signal reçu en multipliant le signal reçu par la quantité de correction K(t).

2. Appareil de traitement de signal selon la revendication 1,
   l'unité (377) de correction étant configurée pour corriger le signal reçu à l'aide d'informations de canal obtenues en effectuant une transformation de Fourier inverse sur la pluralité d'échantillons de fréquence qui sont les composantes significatives et/ou en combinant un signal d'oscillation avec la fréquence et l'amplitude de chaque échantillon de la pluralité d'échantillons de fréquence qui sont les composantes significatives.

3. Appareil de traitement de signal selon l'une quelconque des revendications 1 à 2,
   l'unité (377) de correction étant configurée pour corriger le signal reçu à l'aide d'informations de canal obtenues à partir d'un échantillon de crête qui est un échantillon de fréquence d'une amplitude supérieure à celle des environs et d'un échantillon voisin qui est un échantillon de fréquence autour de l'échantillon de crête, en particulier un échantillon de fréquence de part et d'autre de l'échantillon de crête.

4. Appareil de traitement de signal selon la revendication 3,
   l'unité (377) de correction étant configurée pour corriger le signal reçu à l'aide d'informations de canal obtenues à partir d'une pluralité des échantillons de crête et de l'échantillon voisin pour chacun des échantillons de crête, en particulier obtenues à partir d'un nombre prédéterminé des échantillons de crête sélectionné par ordre décroissant d'amplitude, et l'échantillon voisin pour chacun des échantillons de crête.

5. Appareil de traitement de signal selon la revendication 4, comportant en outre :

   une pluralité des unités (551-1, 551-2,..., 551-M) de correction ; et

une unité (552) de combinaison qui est configurée pour combiner des résultats de correction des unités de correction,

les unités de correction étant configurées pour corriger le signal reçu à l'aide d'échantillons de crête différents les uns des autres et d'un échantillon voisin pour les échantillons de crête.

6. Appareil de traitement de signal selon l'une quelconque des revendications 1 à 5,
le signal reçu comprenant mes informations connues insérées régulièrement entre des informations inconnues.

7. Appareil de traitement de signal selon la revendication 6,
le signal reçu présentant une configuration dans laquelle une trame d'une longueur prédéterminée est répétée avec des données dans des unités de symboles qui sont disposées dans chaque trame, en particulier un symbole d'un signal de synchronisation, qui est connu, inséré entre des symboles des données qui sont inconnues dans chaque trame.

8. Appareil de traitement de signal selon la revendication 7,
le signal reçu présentant une configuration dans laquelle un symbole des données qui sont inconnues et un symbole du signal de synchronisation qui est connu sont disposés en alternance.

9. Appareil de traitement de signal selon la revendication 7 ou 8,
le signal reçu présentant une configuration dans laquelle deux symboles des données qui sont inconnues et un symbole du signal de synchronisation qui est connu sont disposés en alternance.

10. Appareil de traitement de signal selon la revendication 7,
un bit de garde comprenant un symbole superflu étant attaché aux deux extrémités de chaque trame du signal reçu.

11. Appareil de traitement de signal selon l'une quelconque des revendications 1 à 10, comportant en outre :

une unité (371) de séparation qui est configurée pour séparer un symbole de données inconnues et un symbole d'un signal de synchronisation connu qui sont compris dans le signal reçu ;
une unité (373) de génération qui est configurée pour générer des informations de canal à partir du symbole du signal de synchronisation connu qui est séparé des données inconnues par l'unité de séparation ;
une unité (412) de transformation qui est configurée pour transformer les informations de canal générées par l'unité de génération en échantillons de fréquence ;
une unité (374) d'extraction qui est configurée pour extraire une pluralité d'échantillons de fréquence, en tant que composantes significatives, des échantillons de fréquence transformés par l'unité de transformation ; et
une unité (375) de transformation inverse qui est configurée pour transformer inversement la pluralité d'échantillons de fréquence en tant que composantes significatives extraites par l'unité d'extraction en informations de canal.

12. Appareil de traitement de signal selon la revendication 11, comportant en outre
une unité (376) de synchronisation de trames qui est configurée pour réaliser une synchronisation dans des unités de trames du signal reçu à l'aide des échantillons de fréquence transformés par l'unité de transformation.

13. Appareil de traitement de signal selon l'une quelconque des revendications 1 à 12, comportant en outre
une unité (378) d'intégration qui est configurée pour intégrer le signal reçu corrigé par l'unité de correction.

14. Procédé de traitement de signal comprenant les étapes consistant à
corriger une phase et/ou une amplitude d'un signal reçu à l'aide d'informations de canal obtenues à partir d'une pluralité d'échantillons de fréquence qui sont des composantes significatives en étant extraites d'échantillons de fréquence d'informations connues comprises dans le signal reçu, l'étape de correction comportant :

i) le calcul d'une quantité de correction $\theta(t)$ pour la phase du signal reçu en utilisant les informations de canal obtenues, et
la correction de la phase du signal reçu en multipliant le signal reçu par un signal $e^{-j\theta(t)}$ ;
et/ou
ii) le calcul d'une quantité de correction $K(t)$ pour l'amplitude du signal reçu sur la base d'une enveloppe générée en utilisant les informations de canal obtenues, et
la correction de l'amplitude du signal reçu en multipliant le signal reçu par la quantité de correction $K(t)$.

**15.** Programme d'ordinateur comportant des instructions qui, lorsque le programme est exécuté par un ordinateur, amènent l'ordinateur à réaliser les étapes du procédé selon la revendication 14.

## FIG. 1

925MHz

TX1

ANT

| AMPLIFICATION | → | BAND-PASS FILTER 925MHz | → | MIX | → | → | DECODING CIRCUIT | → |

FREQUENCY ADJUSTMENT ∿

| FILTER |

| PHASE DIFFERENCE DETECTION |

EP 3 611 891 B1

## FIG. 2

925MHz

TX1

ANT

SINCE SNR IS LOW, PHASE CANNOT BE DETECTED WITHOUT INTEGRATION

AMPLIFICATION → BAND-PASS FILTER 925MHz → MIX → DECODING CIRCUIT INTEGRATION

FREQUENCY ADJUSTMENT

FILTER

PHASE DIFFERENCE DETECTION

PARADOX: INTEGRATION CANNOT BE PERFORMED UNLESS SIGNAL OF CORRECT PHASE IS OBTAINED

EP 3 611 891 B1

## FIG. 3

PLURALITY OF 0.2-SECOND PACKETS IS TRANSMITTED.
SYNCHRONIZATION SIGNAL (DATA KNOWN TO RECEIVING SIDE)
IS ARRANGED EVERY OTHER SYMBOL AND SUBJECTED TO $\pi/2$ BPSK MODULATION.

0.2sec

| FRAME 0 | FRAME 1 | FRAME 2 | FRAME 3 |

TIME

0.2sec 9600 symbols

· · ·

SYNCHRONIZATION
SIGNAL ref ()
4800 symbols

DATA
4800 symbols

EP 3 611 891 B1

## FIG. 4

0.2sec

FRAME 0    FRAME 1    FRAME 2    FRAME 3    TIME

$\pi$

$-\pi$

$\phi(t)$

$e^{j\phi(t)}$

COMBINED PACKET

TO DECODER

EP 3 611 891 B1

*FIG. 5*

# FIG. 6

EP 3 611 891 B1

FIG. 7

## FIG. 8

0.2sec 9600 symbols

SYNCHRONIZATION
SIGNAL ref ()
4800 symbols

DATA
4800 symbols

EP 3 611 891 B1

*FIG. 9*

0.2sec 9600 symbols

SYNCHRONIZATION SIGNAL ref() 4800 symbols

FIG. 10

# FIG. 11

0.2sec 9600 symbols

+1  +1  −1  −1  ...  +1

p(0)  p(1)  p(2)  p(3)  ...  p(N−1)

p(0)  p(1)  p(2)  p(3)  p(N−1)

EP 3 611 891 B1

# FIG. 12

0.2sec 9600 symbols

+1 +1 −1 −1 +1

p(0) p(1) p(2) p(3) p(N-1)

p(0) p(1) p(2) p(3) p(N-1)

*FIG. 13*

0.2sec 9600 symbols

FFT

$C_{(f)}$

$f_\Delta$

f (Hz)

FREQUENCY RESOLUTION: 5Hz
REQUIRED ACCURACY ±0.2Hz

## FIG. 14

0. 2sec

FRAME 0    FRAME 1    FRAME 2    FRAME 3    TIME

$\pi$

$-\pi$

$\phi(t)$

$e^{j\phi(t)}$

DOPPLER fd (CONSTANT OF ±86Hz MAXIMUM) IS ADDED

$$e^{j2\pi f_d t + j\phi(t)}$$

EP 3 611 891 B1

## FIG. 15

WAVEFORM OBTAINED BY GENTLE PHASE MODULATION OF SINGLE CARRIER OF FREQUENCY $f_d$ (Hz)

$$e^{j2\pi f_d t + j\phi(t)}$$

CARRIER    PHASE MODULATION

SPECTRUM

$\phi(t)$
PHASE MODULATION

0      $f_d$
CARRIER

EP 3 611 891 B1

## FIG. 16

ASSUMING THAT SIGNAL IS REPEATED INDEFINITELY AT 0.2-SECOND INTERVALS

φ(t)

## FIG. 17

WAVEFORM OBTAINED BY GENTLE PHASE MODULATION OF SINGLE CARRIER OF FREQUENCY $f_d$ (Hz)

$$e^{j2\pi f_d t + j\phi(t)}$$

CARRIER    PHASE MODULATION

WHEN REPEATED AT
0.2-SECOND INTERVALS

SPECTRUM → IMPULSE TRAIN IN 5Hz INCREMENTS

$\phi(t)$
PHASE
MODULATION

0

5Hz

$f_d$
CARRIER

EP 3 611 891 B1

## FIG. 18

WAVEFORM OBTAINED BY GENTLE PHASE MODULATION OF SINGLE CARRIER OF FREQUENCY $f_d$ (Hz)

$$e^{j2\pi f_d t + j\phi(t)}$$

CARRIER     PHASE MODULATION

WHEN REPEATED AT
0.2-SECOND INTERVALS

ORIGINAL SIGNAL CAN BE REPRODUCE
WITH PEAK AND ITS NEIGHBORING POINTS

$$e^{j2\pi f_d t + j\phi(t)} \approx A_0 e^{j2\pi f_0 t} + A_1 e^{j2\pi f_1 t} + A_2 e^{j2\pi f_2 t}$$

EP 3 611 891 B1

## FIG. 19

EP 3 611 891 B1

## FIG. 20

**101**

TRANSMISSION DEVICE

LOCATION INFORMATION
(WHETHER TO USE LOCATION INFORMATION
AS Data DEPENDS ON APPLICATION)

**201** — GNSS SIGNAL RECEPTION UNIT

CLOCK SIGNAL

**211** — Key stream GENERATION UNIT (AES or CLEFIA)

ENCRYPTION Enable/Disable
SWITCHING SIGNAL
(DEPENDENT ON APPLICATION)

Key stream

**214** — Gold CODE GENERATION UNIT

**224** — FREQUENCY/TIMING CONTROL UNIT

**212**

**222**

**223**

Payload DATA GENERATION UNIT — **202**

ID/CRC ADDITION UNIT — **203**

FEC PROCESSING UNIT — **204**

REPEATING UNIT — **205**

GUARD BIT ADDITION UNIT — **206**

plain data

Encryption stream — **213**

scrambled data — **215**

d(0),d(1),···

Interleave UNIT (COMBINE IN NESTED MANNER)

MODULATION UNIT

π/2 BPSK
50.8Kbps

WIRELESS SIGNAL

Sync GENERATION UNIT (GENERATE PN SEQUENCE) — **221**

r(0),r(1),···

r(0),d(0),r(1),d(1),r(2),···

EP 3 611 891 B1

# FIG. 21

EP 3 611 891 B1

FIG. 22

211 — KeyStream GENERATION UNIT

252 — Nonce GENERATION UNIT (128b)

251 — Key GENERATION UNIT (128b)

128bit KEY INFORMATION

128bit

253 — BLOCK ENCRYPTION UNIT (AES or CLEFIA)

128bit

254 — P/S CONVERSION UNIT (128b → 1b)

CLK/128

CLK/1

1bit Key stream

212 — AND

ENCRYPTION Enable/Disable SWITCHING SIGNAL

1664bit or 4808bit

213 — ExOR

Plain data

1664bit or 4808bit

Encryption stream

# FIG. 23

```
                TRANSMISSION PROCESSING

                GENERATE PAYLOAD DATA              S101

                ADD ID AND CRC                     S102

                PERFORM FEC PROCESSING             S103
                (LDPC CODING)

                GENERATE REPEAT UNIT IN WHICH FEC  S104
                FRAME IS REPEATEDLY ARRANGED

                ADD (INSERT) GUARD BIT             S105
                TO REPEAT UNIT

                ENCRYPT REPEAT UNIT                S106
                AND SCRAMBLE

                INTERLEAVE SCRAMBLED STREAM        S107
                AND SYNCHRONIZATION SIGNAL

                MODULATE PPDU AND TRANSMIT         S108

                        END
```

*FIG. 24*

EP 3 611 891 B1

# FIG. 25

SEPARATION UNIT 371

DELAY UNIT 372

FREQUENCY SAMPLE GENERATION UNIT ~373

CORRECTION UNIT 377

INTEGRATION UNIT 378

DESPREADING UNIT 379

LDPC 380

FRAME SYNCHRONIZATION UNIT 376

SIGNIFICANT COMPONENT EXTRACTION UNIT ~374

INVERSE TRANSFORM UNIT ~375

362

EP 3 611 891 B1

*FIG. 26*

## FIG. 27

EP 3 611 891 B1

FIG. 28

EP 3 611 891 B1

FIG. 29

EP 3 611 891 B1

## FIG. 30

$$m(t) = \sum_{k=0}^{2} A_k e^{j2\pi f_k t}$$

~432

~431-1  ~431-2  ~431-3

$(f_0, A_0)$  $(f_1, A_1)$  $(f_2, A_2)$

A

375

FFT

$$m(t) = \sum_{k=0}^{2} A_k e^{j2\pi f_k t}$$

~433

$(f_0, A_0)$  $(f_1, A_1)$  $(f_2, A_2)$

B

## FIG. 31

451

452

rotate $e^{-j\theta(t)}$ — 442

PHASE
CORRECTION UNIT

$K(t)$ — 444

AMPLITUDE
CORRECTION UNIT

CORRECTION UNIT

454

$\theta(t) = \tan^{-1} m(t)$

$K(t) \propto |m(t)|$

PHASE
DETECTION UNIT — 441

ENVELOPE
GENERATION UNIT — 443

CORRECTION
INFORMATION
GENERATION UNIT

PHASE
CORRECTION
UNIT

AMPLITUDE
CORRECTION
UNIT

453

377

$$m(t) = \sum_{k=0}^{2} A_k e^{j2\pi f_k t}$$

EP 3 611 891 B1

# FIG. 32

```
        ( START RECEPTION PROCESSING )
                     │
                     ▼
        ┌──────────────────────────────┐
        │       RECEIVE SIGNAL          │  S201
        └──────────────────────────────┘
                     │
                     ▼
        ┌──────────────────────────────┐
        │    AMPLIFY RECEIVED SIGNAL    │  S202
        └──────────────────────────────┘
                     │
                     ▼
        ┌──────────────────────────────┐
        │     REMOVE UNNECESSARY        │  S203
        │     FREQUENCY COMPONENT       │
        └──────────────────────────────┘
                     │
                     ▼
        ┌──────────────────────────────┐
        │    GENERATE CARRIER SIGNAL    │  S204
        └──────────────────────────────┘
                     │
                     ▼
        ┌──────────────────────────────┐
        │  MULTIPLY WITH CARRIER SIGNAL │  S205
        └──────────────────────────────┘
                     │
                     ▼
        ┌──────────────────────────────┐
        │  MULTIPLY WITH CARRIER SIGNAL │  S206
        │      SHIFTED 90 DEGREES       │
        └──────────────────────────────┘
                     │
                     ▼
        ┌──────────────────────────────┐
        │    PERFORM A/D CONVERSION     │  S207
        │    ON I SIGNAL AND Q SIGNAL   │
        └──────────────────────────────┘
                     │
                     ▼
        ┌──────────────────────────────┐
        │   STORE I SIGNAL AND Q SIGNAL │  S208
        └──────────────────────────────┘
                     │
                     ▼
        ┌──────────────────────────────┐
        │┃         DECODE              ┃│  S209
        └──────────────────────────────┘
                     │
                     ▼
                  (  END  )
```

# FIG. 33

START DECODING PROCESSING

SEPARATE DATA AND SYNCHRONIZATION SIGNAL — S221

STORE DATA — S222

GENERATE FREQUENCY SAMPLE USING SYNCHRONIZATION SIGNAL — S223

DOES PEAK HAVE SUFFICIENT AMPLITUDE? — S224

NO

YES

EXTRACT SIGNIFICANT COMPONENT OF FREQUENCY SAMPLE — S225

TRANSFORM SIGNIFICANT COMPONENT OF FREQUENCY SAMPLE INTO CHANNEL INFORMATION SAMPLE — S226

SYNCHRONIZE FRAME — S227

CORRECT DATA USING CHANNEL INFORMATION SAMPLE — S228

INTEGRATE — S229

HAVE ALL FRAMES BEEN PROCESSED? — S230

NO

YES

DESPREAD — S231

PERFORM ERROR CORRECTION PROCESSING — S232

OUTPUT DECODED DATA — S233

RETURN

# FIG. 34

START FREQUENCY SAMPLE GENERATION PROCESSING

GENERATE CHANNEL INFORMATION SAMPLE FROM SYNCHRONIZATION SIGNAL S241

TRANSFORM CHANNEL INFORMATION SAMPLE INTO FREQUENCY SAMPLE S242

RETURN

# FIG. 35

START SIGNIFICANT COMPONENT EXTRACTION PROCESSING

STORE FREQUENCY SAMPLE S251

PERFORM PEAK DETECTION S252

SELECT AND EXTRACT PLURALITY OF FREQUENCY SAMPLES INCLUDING PEAK AS SIGNIFICANT COMPONENTS S253

RETURN

# FIG. 36

```
        ┌────────────────────────────────┐
        │  START CORRECTION PROCESSING   │
        └────────────────────────────────┘
                         │
                         ▼
        ┌────────────────────────────────┐  S261
        │         DETECT PHASE           │
        └────────────────────────────────┘
                         │
                         ▼
        ┌────────────────────────────────┐  S262
        │     CORRECT PHASE OF DATA      │
        └────────────────────────────────┘
                         │
                         ▼
        ┌────────────────────────────────┐  S263
        │       GENERATE ENVELOPE        │
        └────────────────────────────────┘
                         │
                         ▼
        ┌────────────────────────────────┐  S264
        │    CORRECT AMPLITUDE OF DATA   │
        └────────────────────────────────┘
                         │
                         ▼
              ┌───────────────────┐
              │      RETURN       │
              └───────────────────┘
```

*FIG. 37*

EP 3 611 891 B1

RECEPTION
POINT

+43Hz

−43Hz

· RECEIVER ACHIEVES PHASE SYNCHRONIZATION AT −43Hz

· COMPONENT OF +43Hz IS MIXED IN AS NOISE OF +86Hz

*FIG. 38*

ENVELOPE

CONSTELLATION

271933
3rd Frame

301704
3rd Frame

EP 3 611 891 B1

## FIG. 39

EP 3 611 891 B1

## FIG. 40

FIG. 41

*FIG. 42*

EP 3 611 891 B1

FIG. 43

FIG. 44

FIG. 45

EP 3 611 891 B1

# FIG. 46

```
( START SIGNIFICANT COMPONENT EXTRACTION PROCESSING )
                        │
                        ▼
   ┌─────────────────────────────────────────┐  S301
   │          STORE FREQUENCY SAMPLE          │
   └─────────────────────────────────────────┘
                        │
                        ▼
   ┌─────────────────────────────────────────┐  S302
   │          DETECT PLURALITY OF PEAKS       │
   └─────────────────────────────────────────┘
                        │
                        ▼
   ┌─────────────────────────────────────────┐  S303
   │     FOR EACH PEAK, SELECT AND EXTRACT    │
   │           PLURALITY OF FREQUENCY         │
   │        SAMPLES INCLUDING THAT PEAK       │
   │         AS SIGNIFICANT COMPONENTS        │
   └─────────────────────────────────────────┘
                        │
                        ▼
                   ( RETURN )
```

*FIG. 47*

EP 3 611 891 B1

# FIG. 48

APP Layer — ENCRYPTION Enable/Disable SWITCHING SIGNAL

Payload Data 128bits

MAC Layer

| ID 32bits | MSDU 128bits | CRC 24bits |

*MSDU to 128bit

PSDU 184bits

Encoded bits 736bits — *LDPC Rate=1/4

BEGINNING PART — REPEAT UNIT

PHY Layer — 212

| G 4bits | Encoded bits 736bits | Encoded bits 736bits | Encoded bits 184bits | G 4bits |

· Encoded bits=736x2+184=1656
· Guard bits=4x2bits

Key — 128bit — Key stream GENERATION

SPECIFIC Key GENERATING METHOD IS NOT DISCLOSED

1664bit — ⊗ 213

Encryption stream 1664(=1656+4x2) bits — *Encryption sequence

Gold CODE — ⊗ 215

Sync 4808bits r(0),r(1),...,r(831) | Scrambled stream 1664(=1656+4x2) bits d(0),d(1),...,d(1663)

*Scrambling(Gold-Sequence)
*Sync:Encoded bits=832:1664=1:2

PPDU
2496bits r(0),d(0),d(832),r(1),d(1),d(833),... 393ms (Rate=6.35kHz)

*Interleaving, multiplexing

*Chirp

Air

| PPDU | PPDU | PPDU | PPDU |

Total Air Time 393ms x4(typical)=1.57sec

EP 3 611 891 B1

FIG. 49

## FIG. 50

```
                              904
   901      902      903       ↕
  ┌───┐    ┌───┐    ┌───┐
  │CPU│    │ROM│    │RAM│
  └───┘    └───┘    └───┘
    ↕   ═══⇒   ↕
  ┌──────────────────────────────────┐ 910
  │      INPUT/OUTPUT INTERFACE       │
  └──────────────────────────────────┘
    ↕      ↕      ↕        ↕        ↕
 ┌─────┐┌─────┐┌───────┐┌────────────┐┌─────┐
 │INPUT││OUTPUT││STORAGE││COMMUNICATION││DRIVE│
 │UNIT ││UNIT ││ UNIT  ││    UNIT    ││     │
 └─────┘└─────┘└───────┘└────────────┘└─────┘
   911    912     913        914         915
                                           ↕
                                      ┌──────────┐
                                      │REMOVABLE │
                                      │ MEDIUM   │
                                      └──────────┘
                                          921
                              900
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060274820 A1
- EP 2234277 A1
- JP 2006522573 A
- JP 2006333010 A
- JP 2016046618 A